(19) Europäisches Patentamt
European Patent Office
Office européen des brevets

(11) EP 3 084 482 B1

(12) **EUROPEAN PATENT SPECIFICATION**

(45) Date of publication and mention of the grant of the patent:
**07.08.2019 Bulletin 2019/32**

(21) Application number: **14871254.0**

(22) Date of filing: **22.12.2014**

(51) Int Cl.:
***G01W 1/00*** *(2006.01)* ***G01W 1/10*** *(2006.01)*

(86) International application number:
**PCT/US2014/071987**

(87) International publication number:
**WO 2015/095890 (25.06.2015 Gazette 2015/25)**

(54) **DYNAMIC STORM ENVIRONMENT ENGINE APPARATUSES, METHODS AND SYSTEMS**

VORRICHTUNG MIT DYNAMISCHEM STURMUMGEBUNGSMOTOR, VERFAHREN UND SYSTEME

APPAREILS À MOTEUR À ENVIRONNEMENT DE TEMPÊTE DYNAMIQUE, PROCÉDÉS ET SYSTÈMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2013 US 201361919796 P**

(43) Date of publication of application:
**26.10.2016 Bulletin 2016/43**

(73) Proprietor: **Telvent DTN LLC**
**Omaha, Nebraska 68114 (US)**

(72) Inventors:
- **MCCANN, Donald**
  **Overland Park, Kansas 66223 (US)**
- **LENNARTSON, Daniel W.**
  **Burnsville, MN 55337 (US)**
- **BLOCK, James H.**
  **Minneapolis, Minnesota 55409 (US)**

(74) Representative: **Cooley (UK) LLP**
**Dashwood**
**69 Old Broad Street**
**London EC2M 1QS (GB)**

(56) References cited:
**US-A1- 2013 080 043**
**US-A1- 2013 226 452**
**US-A1- 2013 226 452**
**US-B1- 6 456 226**
**US-B1- 6 516 652**
**US-B1- 7 027 898**
**US-B1- 7 515 087**
**US-B1- 8 159 369**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 084 482 B1

## Description

This application claims priority to and benefit from United States Provisional Patent Application No. 61/919,796, filed December 22, 2013, entitled DYNAMIC STORM ENVIRONMENT ENGINE APPARATUSES, METHODS AND SYSTEMS.

## BACKGROUND

A variety of weather monitoring systems, including ground-based and satellite-based observations, are used to provide weather reports and forecasts.

US 2013/226452 discloses a method for dealing with aviation turbulence and other weather hazards that allows the end users to better communicate turbulence as a state of the atmosphere metric and the additional weather threats affecting the flight.

## BRIEF DESCRIPTION OF THE DRAWINGS

The accompanying drawings illustrate various non-limiting, example, inventive aspects in accordance with the present disclosure:

FIGURE IA provides an example logic flow for an embodiment of the DSEE, illustrating aspects of a real-time flight alerting and planning component of the DSEE;

FIGURE IB provides an overview diagram illustrating example enhanced turbulence regions affecting aircraft and an example output of integrated turbulence output in some embodiments of the DSEE;

FIGURE 2 shows a data flow diagram illustrating an example of a DSEE accepting inputs and data requests and outputting both predictive and (near) real-time data in some embodiments of the DSEE.

FIGURE 3 shows a data flow diagram illustrating an example of a DSEE utilizing both external and internal data repositories for input while accepting inputs and data requests 29 and outputting both predictive and (near) real-time data in some embodiments of the DSEE;

FIGURE 4A demonstrates a logic flow diagram illustrating example DSEE turbulence integration component, accepting input and outputting grid point enhanced turbulence data in some embodiments of the DSEE;

FIGURE 4B provides example output from an enhanced above-storm turbulence determination;

FIGURE 5 demonstrates an example user interface where turbulence prediction is integrated into an existing and/or future flight planning tool, allowing users to alter flight path creation to account for projected turbulence in some embodiments of the DSEE;

FIGURE 6 shows a logic flow diagram illustrating an example of a DSEE integrating turbulence modeling into flight path creation, facilitating user preference in flight planning variation in some embodiments of the DSEE;

FIGURE 7 shows an overview diagram illustrating an example of a vertical air region and the overlay of turbulent areas affecting aircraft at various altitudes and times, where overlapping regions illustrate enhanced turbulence in some embodiments of the DSEE;

FIGURE 8 shows example grid outputs of the mathematical models both pre and post integration, illustrating how enhanced turbulence is more than graphical intersection and represents both cumulative and heightened turbulence in overlay zones in some embodiments of the DSEE;

FIGURE 9 shows an example data flow diagram of various output media provided by the DSEE and the use of its data in multiple intermediate and end stage applications in some embodiments of the DSEE;

FIGURES 10A-11D show various example and/or visual input/output component aspects of the DSEE;

FIGURE 12 provides an exemplary flow diagram for an embodiment of a VVSTORMSE component of the DSEE;

FIGURES 12A-12F illustrate exemplary data displays for embodiments of the DSEE and/or components/subcomponents thereof;

FIGURE 13 provides an exemplary logic flow diagram illustrating EDR determination and masking for an embodiment of the DSEE and/or an associated VVSTORMSE component/subcomponent;

FIGURE 14 provides an exemplary logic flow diagram illustrating aspects of a VVSTORMSE component operation for an embodiment of the DSEE;

FIGURE 15 provides a logic flow diagram illustrating an embodiment of an integration component;

FIGURE 16 provides an illustrative overview of features of an implementation of the DSEE;

FIGURES 17A-17H provide an example overview of nowcast determination for some embodiments of the DSEE;

FIGURES 17I and 17J provide nowcasts that predicted/forecast actual severe turbulence encounters;

FIGURE 18 demonstrates a logic flow diagram illustrating example DSEE turbulence nowcasting component, accepting inputs and outputting nowcast turbulence data according to some embodiments of the DSEE;

FIGURE 19 shows a data flow diagram illustrating an example of a DSEE accepting inputs and data requests and outputting turbulence nowcasts for some embodiments of the DSEE.

FIGURE 19A provides exemplary illustrates geostationary operational environmental satellite convective initiation data according to one embodiment;

FIGURE 19B illustrates an example convective cloud mask for an embodiment;

FIGURE 19C provides an exemplary output of an overshooting top mask for an embodiment; and

FIGURE 20 shows a block diagram illustrating embodiments of a DSEE controller.

The leading number of each reference number within the drawings indicates the figure in which that reference number is introduced and/or detailed. As such, a detailed discussion of reference number 101 would be found and/or introduced in Figure 1. Reference number 201 is introduced in Figure 2, etc.

## DETAILED DESCRIPTION

### DYNAMIC STORM ENVIRONMENT ENGINE (DSEE)

In some embodiments, the DYNAMIC STORM ENVIRONMENT ENGINE APPARATUSES, METHODS AND SYSTEMS ("DSEE") transforms flight profiles, atmospheric data, and terrain data, via DSEE components, into comprehensive turbulence alerts, nowcasts, and optimized flight path adjustments. In one implementation, the DSEE comprises a processor and a memory disposed in communication with the processor and storing processor-issuable instructions to receive a flight profile for an aircraft, the flight profile including an at least one initial route. The DSEE identifies an initial predicted comprehensive turbulence for the at least one initial route and determines a real-time comprehensive turbulence for the at least one initial route. The DSEE may then determine turbulence threshold compliance based on the real-time comprehensive turbulence and at least one of the flight profile and the initial predicted comprehensive turbulence, and may generate a turbulence exception if the real-time comprehensive turbulence exceeds threshold turbulence parameters. The turbulence exception may comprise an alert for the aircraft and/or determining an at least one adjusted route for the aircraft based on the updated/real-time comprehensive turbulence data.

Turbulence forecasting methods may focus on discrete areas of turbulence, such as clear air turbulence (CAT) or thunderstorm regions, and rely primarily on pilot reports (PIREPS) and other subjective/observational data for determining turbulent airspace regions. The DSEE as disclosed herein utilizes unique predictive mathematical components and models of turbulence in four-dimensional space-time and utilizes these predictive models to generate a comprehensive forecasting and/or nowcasting map display and/or overlay that is not merely the visual combination of disparate turbulence projections and/or observation, but is the algorithmic multi-hazard integration of enhanced turbulent regions, providing an accurate, real-time/near real-time, multi-dimensional model of turbulence over a specified spatial/temporal area, reactive to new weather developments. In some embodiments, the DSEE identifies areas where there is lower turbulence, even though there are radar echoes. With this enhanced granularity, the DSEE enables flight following and/or path determining and real-time (and/or near real-time) response to changing weather conditions.

Thunderstorms may create some of the most intense turbulence and icing conditions. Avoidance of such conditions may be preferred, particularly for passenger aircraft. Experienced forecasters use many subjective and objective tools to attempt to forecast convection locations over large time ranges. DSEE provides for accurate, granular, and time-specific convection and turbulence forecasts.

In some embodiments, DSEE objectively analyzes numerical forecast model data based on, for example, a conditionally unstable environmental lapse rate, sufficient heat and moisture for a parcel to have a level of free convection (LFC), and a process to lift that parcel to its LFC. DSEE determines weightings and/or balances each factor and combines them to determine the appropriate level for the environment and for thunderstorm generation prediction. For example, vertical velocities that may lift parcels are typically small in numerical models, and rather than merely inferring higher speeds, DSEE may inflate model velocities to values observed in real storm environments. If a parcel at any grid point reaches its LFC, then DSEE continues to track the parcel's vertical velocity as it rises buoyantly.

Figure 1A provides an example logic flow for aspects of a real-time flight alerting and planning component for one embodiment of the DSEE. As discussed in greater detail below, the DSEE may provide a variety of flight planning and/or flight following tools. Additionally or alternatively, the DSEE may provide flight plan adjustments/modifications and/or alerts if weather/turbulence determinations change, for example, if an airplane were on a particular course that, based on real-time turbulence determinations, had become potentially dangerous. The DSEE can also provide enhanced granularity for all flight-level altitudes in order to identify the optimal path for avoiding hazards, and/or choosing the least dangerous hazard to encounter.

As shown in the figure, the DSEE alerting component receives (and/or retrieves via response to a database query) current aircraft position 102 (e.g., flight profile data 100 from a flight profile database), and may also receive the previously predicted turbulence for that route (or for an anticipated route if the actual flight plan is not provided). The DSEE then determines real-time turbulence for the planned route 104 and compares the predicted turbulence to the real-time turbulence 106. If the newly determined real-time turbulence does not deviate notably 108 from the previously predicted/anticipated turbulence, then the process cycles, e.g., for a certain period (1 min, 2 min, 5 min, 10 min, etc.) or for some other measure such as location of one or more aircraft, weather events, and/or the like. If the newly determined real-time turbulence is a notable deviation or significant difference from the previously predicted turbulence 108, then the turbulence is updated 110 and the process continues. Note that the threshold difference or deviation may be set by the DSEE or DSEE user/subscriber, and in some embodiments may be any numerical change, while in other embodiments may be a change or certain magnitude or percentage.

When the turbulence is updated, the DSEE determines if there is a known or determinable turbulence threshold 112 for the flight/aircraft. For example, a commercial passenger aircraft that subscribes to the DSEE may have set a particular turbulence threshold in the profile, reflecting that passenger aircraft may wish to avoid significant turbulence for safety and comfort reasons, while a cargo aircraft may have a much higher threshold and be willing to undertake more turbulence to save time and/or money. The threshold may also be predicted/determined based on the airframe and/or airfoil type, the user, the flight plan, fuel resources, alternative routes, etc. For flights/aircraft that the turbulence threshold either is not known or is not determinable 112, the DSEE may have a default (i.e., safety) threshold 114, and if that default threshold is exceeded 114, may issue an alert or notification 120 to the aircraft (and/or ground control).

If the flight turbulence threshold is known 112 (i.e., the flight has a subscription or is otherwise registered with the DSEE), the DSEE determines whether the turbulence exceeds the specified threshold 116, and if so, determines if the flight's route can be adjusted or updated 118 by the DSEE (e.g., using the flight path component discussed in greater detail later with regard to Figure 5 and Figure 6) to find the optimal path based on the desired turbulence profile/threshold and various flight parameters, such as fuel reserves, destination, aircraft type, etc. If the DSEE is unable or not configured to provide an alternative or adjusted flight plan 118, an alert or notification 120 is generated/issued. If the DSEE can adjust or update the flight's route 118, the adjusted/modified route is determined 122 and the flight plan is adjusted accordingly 124, and updated 100. Note that, in some embodiments, an adjusted or modified flight plan (or a selection of plans) may be provided for approval or selection 122a.

The term "turbulence" as a haphazard secondary motion caused by the eddies of a fluid system has often been treated as a singular event in casual connotation, caused by passage through an entropic weather system or by proximity to shifting air flow patterns. This definition is commonly perpetuated by many turbulence forecast platforms that focus on a specific type of turbulence, such as CAT, without accounting for additional turbulence factors, nor how multi-hazards conflagrate into not just a series of turbulence events, but an enhanced system which continues to flux. In Figure 1B, wind 152, thunderstorms 154, and gravity waves 153 (the interaction of media, such as the ocean and the atmosphere caused by energy transfer, on which gravity acts as a restoring force) can all be turbulence contributors to a region of three-dimensional space over a specified time. An aircraft 151 traveling through this region may experience multiple turbulence hazards 155. A turbulence forecast display that indicates only CAT with gravity wave interference may display a low hazard area into which an aircraft may be moving. Similarly a weather prediction display may also fail to factor in the additional risk of CAT. In one embodiment of the disclosed DSEE, a CAT algorithm/component producing color-coded terminal display of turbulence hazard over a specified area (where clear may indicate no turbulence, green may indicate low turbulence hazard, yellow may indicate medium turbulence hazard, and red may indicate high turbulence hazard) 156 may be integrated mathematically with a mountain wave forecasting algorithm/component which produces a similar color-coded terminal display 157, resulting in an integrated display where the resulting hazard matrix 158 may not be an overlay of the individual turbulence predictions, but an enhanced turbulence forecast where individual areas of low or no hazard turbulence may now indicated high hazard turbulence 159. In some embodiments, multiple turbulence overlay displays may be available showing individuated turbulence forecasts without enhancement. In some embodiments of the disclosure, only enhanced turbulence forecast displays may be available. In some embodiments of the disclosure, users may be able to switch between individuated turbulence forecasts and enhanced turbulence forecasts.

In some embodiments, the DSEE transforms atmospheric and terrain data, via DSEE components, into comprehensive four-dimensional turbulence displays and interfaces. In one implementation, the DSEE comprises a processor and a memory disposed in communication with the processor and storing processor-issuable instructions to determine a plurality of four-dimensional grid points for a specified temporal geographic space-time area and obtain corresponding terrain and atmospheric data. Then, for each point of the plurality of four-dimensional grid point, the DSEE determines a non-dimensional mountain wave amplitude and mountain top wave drag, an upper level non-dimensional gravity wave amplitude, and a buoyant turbulent kinetic energy. The DSEE may also determine a boundary layer eddy dissipation rate, storm velocity and eddy dissipation rate from updrafts, maximum updraft speed at grid point equilibrium level, storm divergence while the updraft speed is above the equilibrium level and identifying storm top, storm overshoot and storm drag. The DSEE determines Doppler speed, eddy dissipation rate above the storm top, eddy dissipation rate from downdrafts. Then, the DSEE determines the turbulent kinetic energy and/or the total eddy dissipation rate for each grid point and provides a four-dimensional grid map overlay with comprehensive turbulence data for the specified temporal geographic space-time area.

In some embodiments of the disclosure, the DSEE 201 may be available to aircraft 202, air traffic controllers 203, flight planning tools and software 204a, third party applications 205 where turbulence feed incorporation is contributing, and the like. Figure 2 illustrates that in some embodiments of the disclosure, PIREPS and sensor data of aircraft in real-time turbulence conditions 204 may send data to the DSEE to be incorporated into the DSEE aggregate data analysis. Similarly, in some embodiments of the disclosure, additional/other sources of input may be weather stations 220, satellites 221 and/or other sources/sensors, which may provide radar data, lightning data, satellite data, and/or numerical weather forecast model data 206 to the DSEE. In some embodiments of the DSEE, additional/other sources of input may be topological data 208a which may provide terrain characteristic data 205a to the DSEE. In some embodiments of the DSEE, the receipt of this input may occur prior to requests to the DSEE for turbulence forecasting. In some embodiments of the DSEE, the receipt of this input may be ongoing during requests to the DSEE for dynamic turbulence forecasting and/or nowcasting. In some embodiments of the DSEE, receipts of input may be both before requests to the DSEE for turbulence forecasting and ongoing during forecasting requests and nowcasting. In some embodiments, an aircraft 202 may request (near) real-time localized turbulence data 207, an air traffic control system 203 may request predictive regional turbulence data as an updating feed 209 and/or a (near) real-time regional turbulence data request 211, a flight-planning tool or software may request predictive turbulence within a flight path region or along a flight path course 213. In some embodiments, the DSEE may direct such requests through a turbulence Integration component 210 where DSEE components such as MWAVE component, INTTURB component, and VVTURB2 component process input into eddy dissipation rate (EDR) values and render them for terminal 230, standard/high-definition 231, and/or displays of the like. In some embodiments, the Integration component 210 may also include or utilize a VVSTORMSE component, which may be utilized in flight planning, flight following, and/or the like. In some implementations, a VVSTORMSE component may subsume and/or replace a VVTURB2 component. In some embodiments, the DSEE may return a real-time/near real-time turbulence map 208 terminal display to an aircraft, a predictive and updating regional data feed 212 to an air traffic controller, a predictive flight path turbulence 214 display to a flight-planning tool/software, a turbulence data feed 215 to a third party application displaying turbulence data, and/or the like.

Figure 3 shows an alternate embodiment of DSEE data flow in which input is gathered through like sources 304, 320, 321, 308, such as in Figure 2 and these inputs may be stored in various current and historical databases systems 340 which in some embodiments of the disclosure may be integrated with the DSEE. In some embodiments of the disclosure, the database systems storing turbulence input may be separate from, but accessible to, the DSEE. Similarly, in some embodiments of the disclosure, additional/other sources of input may be weather stations 320, satellites 321 and/or other sources/sensors, which may provide radar data, lightning data, satellite data, and/or numerical weather forecast model data 306 stored in various current and historical databases systems 340 and/or the DSEE. Similar parties 302, 303, 304, to those discussed above with reference to Figure 2 may request data from the DSEE which may access the database systems for input values in addition to directing the requests through its Integration component 310. In some embodiments, such data is provided via data streams and/or data feeds. In some embodiments, the Integration component 310 may also include or utilize a VVSTORMSE component, which may be utilized in flight planning, flight following, and/or the like. As in Figure 2, the DSEE may return these requests with turbulence forecasts in a variety of formats to requesting parties.

In Figure 4A, one embodiment of the DSEE's (algorithmic) integration component is put forth. Beginning with turbulence data input 401 as derived from such sources as user application input 401a, weather 401b, terrain 401c, PIREPs/aircraft sensors 401d, and/or the like, which may provide the DSEE with four-dimensional grid points (three-dimensional space plus time), temperature, winds, humidity, topography, current turbulent conditions, historical conditions, and/or the like, the DSEE may first process the input through a mountain wave turbulence component (MWAVE). The system computes the non-dimensional mountain wave amplitude ($\hat{a}_{mv}$) 402 and computes the mountain top wave drag 403. The following algorithm/code fragment shows one embodiment of a methodology for such processing:

```
 C
 C* a is the non-dimensional wave amplitude (at mountain top)
 C
 a (i,m,n) = stab0*h(m,n)/spd0
 h0 (m,n) = a(i,m,n)
 C
 C* ddrct is the wind and mountain top wind direction difference
 C
 ddrct = ABS(drct-drct0(m,n))
 IF ((ddrct .lt. 90.0) .or. (ddrct .gt. 270.0) ) THEN
 C
 C* a above the mountain top is adjusted for stability, wind,
 C* and density changes.
 C
 a (i,m,n) = stab*h(m,n)/spd/COS(ddrct*DTR)*
 + SQRT(pnu0(m,n)/(pmodel*stab*spd))
 ELSE
 a (i,m,n) = 0.0
 END IF
 C
 C* maximum a is 2.5
 C
 IF (a(i,m,n) .gt. 2.5) a(i,m,n) = 2.5
 C
 C* Find max 'a' below h0max.
 C
 IF (11 .lt. nlyrs) THEN
 amax0 = a(ll,m,n) - (zsdg(ll,m,n)-h0max)/
 + (zsdg(ll,m,n)-zsdg(ll+1,m,n))*
 + (a(ll,m,n)-a(ll+1,m,n))
 111 = 11
 DO i = 11,1,-1
IF ((a (i,m,n) .ne. RMISSD) and.
+ (a(i,m,n) .gt. amax0)) THEN
  111 = i-1
  amax0 = a(i,m,n)
END IF
END DO
 C
 C* 'a' is increased at all levels below max 'a'.
 C
 DO i = 111,1,-1
IF (a (i,m,n) .ne. RMISSD) THEN
  a (i,m,n) = amax0
  enhc (i,m,n) = 1.0
END IF
END DO
END IF
 C
 C* Find .75 vertical wavelength (and 1.75, 2.75, 3.75).
 C
```

```
   zrefl = (nn + .75)*lambda(m,n) + elv(m,n)
   11 = 1
   DO i = 1,nlyrs
IF (zsdg(i,m,n) .lt. zrefl) ll = i
END DO
IF (11 .lt. nlyrs) THEN
ar = a(ll,m,n) - (zsdg(ll,m,n)-zrefl)/
+ (zsdg(ll,m,n)-zsdg(ll+1,m,n))*
+ (a(ll,m,n)-a(ll+1,m,n))
   C
   C* Find .50 vertical wavelength (and 1.50, 2.50, 3.75).
   C
   zhalf = (nn + .50)*lambda(m,n) + elv(m,n)
   111 = 1
   DO i = 1,11
IF (zsdg(i,m,n) .lt. zhalf) lll = i
END DO
ahalf = a(lll,m,n) - (zsdg(lll,m,n)-zhalf)/
+ (zsdg(lll,m,n)-zsdg(111+1,m,n))*
+ (a(lll,m,n)-a(lll+1,m,n))
   C
   C* 'a' is increased by reflected 'a' if layered
   C* favorably.
   C
   IF ((ahalf .lt. ar).and.(ahalf .lt. 0.85) )THEN
rcoeff = (ar-ahalf)**2/(ar+ahalf)**2
refl = rcoeff*ar
havrfl = .true.
DO i = 11,1,-1
IF ((a(i,m,n) .ne. RMISSD) .and.
+ (havrfl)) THEN
    arfl = a(i,m,n) + refl
    a(i,m,n) = arfl
    IF (a(i,m,n) .gt. 2.5) a(i,m,n) = 2.5
       enhc (i,m,n) = 1.0
END IF
END DO
   C
   C* Compute mountain top wave drag
   C
   drag (m,n) = PI/4.0*h(m,n)*pnu0(m,n)
```

In some embodiments of the DSEE, output obtained from the MWAVE component may then be directed into an integrated turbulence component (INTTURB), which will compute upper level non-dimensional gravity wave amplitude ($\hat{a}_{ul}$) 404, and sum $\hat{a}_{mv}$ and $\hat{a}_{ul}$ into ($\hat{a}$) to determine buoyant turbulent kinetic energy ($TKE_{buoy}$) 405. If $\hat{a}$ is greater than 1 406, then $TKE_{buoy}$ = $TKE_{mv}$ + $TKE_{ul\text{-}buoy}$ 407. Otherwise, $TKE_{buoy}$ = 0 408. If $\hat{a}$ greater than $\hat{a}_{min}$ 409, then TKE = $TKE_{ul\text{-}wshr}$ 410. The boundary layer eddy dissipation rate (EDR) is computed 411 and if $EDR_{bl}$ is greater than zero and $\hat{a}_{mv}$ is not enhanced 412, then the EDR = $EDR_{bl}$ 413, else the EDR is the $TKE^{1/3}$ 414.

The following code fragment shows one embodiment of a methodology for processing of a INTTURB algorithm:

```
C* Non-dimensional L-F amplitude is square root of L-F radiation
C* divided by constant. Constant is for 20km resolution grids
C* and is proportionally scaled to resolution of current grid.
C
ahatlf = SQRT(ABS(lfrad)/cc*gdd/20000.)
C
C
C* ahat is sum of lf and mw ahats
C
ahat = ahatlf + ahatmw(i)
C
C* Maximum ahat = 2.5
```

```
    C
    IF (ahat .gt. 2.5) ahat = 2.5
    IF (ahat .gt. 1.0) THEN
    C
    C* mountain wave tke is proportional to drag.
    C
    tkemw = drag(i)*.0004
    C
    C* Reduce mw drag above this level
    C
    IF (nhnc(i) .eq. 0.0 )
 + drag(i) = drag(i)*((2.5-ahat)/1.5)
 tkebuoy = kh*(ahat-1.0)*bvsq(i) + km*wshrsq(i)
 + + tkemw
 IF (ahat .lt. 1.0) THEN tkebuoy = 0.0
 tke = km*wshrsq(i)*(1.0 + SQRT(rich)*ahat)**2
 + -kh*bvsq(i)
    C
    C* Compute layer stability and wind shear
    C
    thtamn = (thta + sfcthta)/2.0
    bvsq = GRAVTY*thtadf/zdf/thtamn
    udf = u - sfcu
    vdf = v - sfcv
    wshrsq = (udf*udf + vdf*vdf)/zdf/zdf
    C
    C* Compute tke with equation
    C
    tke = km*wshrsq - kh*bvsq
    C
    C* If the < 0, we've reach top of boundary layer. Set topbl = T
    C
    IF (tke .lt. 0.0) THEN
 edrbl = 0.0
 topbl = .true.
 ELSE
 edrbl = tke**.333
 END IF
```

In some embodiments of the DSEE, output obtained from the MWAVE and INTTURB components may then be processed through a vertical velocity turbulence with perimeter turbulence integration component (VVTURB2). The storm velocity is computed 415, as is the EDR from computed updrafts 416. The maximum updraft speed at the grid point equilibrium level (EL) is computed 417. While the updraft speed is above the EL, the storm's divergence is calculated 418, after which the storm top is identified 419. Storm overshoot (the storm top minus the storm EL) and storm drag (the overshoot squared multiplied by the stability between the EL and storm up squared) are calculated 420. The magnitude of the wind velocity minus the storm velocity is calculated (e.g., as the Doppler speed) 421. The EDR above the storm top is computed 422. If there is turbulence within a set distance or radius, by way of example thirty kilometers, of the storm 423, then the EDR near the storm is also computed 424. Otherwise, only the EDR from downdrafts is additionally computed 425. Finally, all EDRs computed from INTURB and VVTURB2 components are summed and converted to TKE 426.

The following code fragment shows one embodiment of a methodology for processing of a VVTURB2 algorithm:

```
    C
    C* Compute mean wind near freezing level (estimate of
    C* storm velocity)
    C
    nlyrs = nlev - 1
    DO j = 1, nlyrs
    CALL ST_INCH (INT(rlevel(j)), clvl1, iret)
    CALL ST_INCH (INT(rlevel(j+1)), clvl2, iret)
    pbar = (rlevel(j) + rlevel(j+1))/2.0
    IF (pbar .gt. 400.) THEN
```

```
  glevel = clvl2//':'//clvl1
     gvcord = 'PRES'
     gfunc = 'LAV(TMPC)'
  CALL DG_GRID (timfnd, glevel, gvcord, gfunc, pfunc, t,
  + igx, igy, time, level, ivcord, parm, iret)
  gvcord = 'PRES'
  gfunc = 'UR(VLAV(WIND))'
  CALL DG_GRID (timfnd, glevel, gvcord, gfunc, pfunc, u,
  + igx, igy, time, level, ivcord, parm, iret)
  ierr = iret + ierr
  gvcord = 'PRES'
  gfunc = 'VR(VLAV(WIND))'
  CALL DG_GRID (timfnd, glevel, gvcord, gfunc, pfunc, v,
  + igx, igy, time, level, ivcord, parm, iret)
   C
   C* Find weighted average of winds in all layers in which
   C* -5C < t < 5C, weighting layer closer to 0C the highest.
   C
   DO i = 1, maxpts
      tabs = ABS(t(i))
       IF (tabs .lt. 5.0) THEN
          ufrzl(i) = ufrzl(i) + (5.0 - tabs)*u(i)
          vfrzl(i) = vfrzl(i) + (5.0 - tabs)*v(i)
          tsum(i) = tsum(i) + (5.0 - tabs)
       END IF
   END DO
END IF
END DO
   C* Compute edr from mean vertical velocity
   C
   IF (wmean .gt. 10.0) THEN
edr (i) = (.035+.0016*(wmean-10.0))**.333
ELSE
edr (i) = (.0035*wmean)**.333
END IF
ELSE
edr (i) = 0.0
END IF
IF (wwnd(i) .gt. maxvv(i)) THEN
havtop(i) = .false.
maxvv(i) = wwnd(i)
el(i) = z(i)
iii = 0
   C
   C* Divergence above EL is deceleration of the updraft divided by
   C* thickness.
   C
   ELSE IF (.not. havtop(i)) THEN
divhi(i) = (vvbase(i)-wwnd(i))/tkns(i)
bvsqtop(i) = bvsqtop(i) + bvsq(i)
iii = iii + 1
ELSE
divhi(i) = 0.0
END IF
   C
   C* Define storm top
   C
   IF ((maxvv(i) .gt. 1.0) .and. (wwnd(i) .lt..1)
   + .and. (.not. havtop(i))) THEN
havtop(i) = .true.
stmtop(i) = z(i) - tkns(i)/2.0
+ - tkns(i)*vvbase(i)*vvbase(i)/wsq
ovshoot (i) = stmtop(i) - el (i)
```

```
IF (iii .ne. 0) THEN
bvsqtop(i) = bvsqtop(i)/iii
ELSE
bvsqtop(i) = 0.0
END IF
   C
   C* Compute storm overshooting drag and storm top relative wind
   C* (relative to freezing level wind)
   C
   drag (i) = ovshoot(i)*ovshoot(i)*bvsqtop(i)
   dopu = u(i) - ufrzl(i)
   dopv = v(i) - vfrzl(i)
   dopspd = SQRT(dopu*dopu + dopv*dopv)
   pnu0(i) = dden(i)*SQRT(bvsq(i))*dopspd
   IF ((wsq .le. 0.0) .and. havtop(i)) THEN
stab = SQRT(bvsq(i))
dopu = u(i) - ufrzl(i)
dopv = v(i) - vfrzl(i)
dopspd = SQRT(dopu*dopu + dopv*dopv)
   C
   C* Compute EDR above storm top as a function of drag
   C
   IF (ahat .ge. 1.0) THEN
edrtop = (drag(i)*.0004)**.333
edr(i) = MAX(edr(i), edrtop)
drag(i) = drag(i)*((2.5-ahat)/1.5)
END IF
   C
   C* Compute turbulence near storms if grid distance low enough.
   C
   DO i = 1,maxpts
IF (edr(i) .ne. RMISSD) THEN
     gdd = (gdx(i)+gdy(i))/2.0
     IF (gdd .lt. 30000. .and. .not.havtop(i)) THEN
   C
   C* Compute tke near storm using Term 2C of L-F radiation
   C* using same method as in ULTURB.
   C
      IF (MOD(i,igx) .eq. 1) THEN
         ddivdx = (divhi(i+1)-divhi(i))/gdx(i)
      ELSE IF (MOD(i,igx) .eq. 0) THEN
         ddivdx = (divhi(i)-divhi(i-1))/gdx(i)
      ELSE
         ddivdx = (divhi(i+1)-divhi(i-1))/2.0/gdx(i)
      END IF
      IF (i .le. igx) THEN
          ddivdy = (divhi(i+igx)-divhi(i))/gdy(i)
      ELSE IF (i .gt. (maxpts-igx)) THEN
          ddivdy = (divhi(i)-divhi(i-igx))/gdy(i)
      ELSE
          ddivdy = (divhi(i+igx)-divhi(i-igx))/2.0/gdy(i)
      END IF
      crsdiv = -ff(i)*(u(i)*ddivdy - v(i)*ddivdx)
      ahat = SQRT(ABS(crsdiv)/cc)
      IF (ahat .gt. 2.5) ahat = 2.5
      rich = bvsq(i)/wshrsq(i)
      IF (rich .lt. 0.0) rich = 0.0
      IF (rich .lt. 0.25) THEN
         amin = 0.0
       ELSE
         amin = 2.0 - 1.0/SQRT(rich)
       END IF
       IF (ahat .gt. 1.0) THEN
```

```
        tkebuoy = kh*(ahat-1.0)*bvsq(i) + km*wshrsq(i)
      ELSE
        tkebuoy = 0.0
      END IF
      IF (amin .ge. ahat) THEN
        tke = tkebuoy
      ELSE
        tke = km*wshrsq(i)*(1.0 + SQRT(rich)*ahat)**2
         + - kh*bvsq(i)
      END IF
      IF (tke .lt. 0.0) tke = 0.0
      edrnear = tke**.333
      edr(i) = MAX(edr(i),edrnear)
   END IF
END IF
END DO
  C
  C* Compute downdraft velocities (a function of the windex
  C and how far below the freezing level) and downdraft edr
  C
  fl = 304.8
  DO WHILE (fl .le. 6097.)
CALL ST_INCH (INT(fl), glevel, iret)
gvcord = 'HGHT'
gfunc = 'EDR+2'
CALL DG_GRID (timfnd, glevel, gvcord, gfunc, pfunc, edr,
+ igx, igy, time, klevel, kvcord, parm, iret)
DO i = 1, maxpts
    IF (maxvv(i) .gt. 10.) THEN
       IF (fl .gt. sfcz(i)) THEN
           wdown = windex(i)*(frzlz(i)-fl)/frzlz(i)
           IF (wdown .gt. 10.0) THEN
               edrdown = (.035+.0016*(wdown-10.0))**.333
           ELSE IF (wdown .gt. 0.0 ) THEN
               edrdown = (.0035*wdown)**.333
           ELSE
               edrdown = 0.0
           END IF
           edr (i) = MAX (edr(i), edrdown)
        END IF
    END IF
    END DO
```

The following code fragment shows an additional or alternative embodiment of enhanced algorithm/code to address above-storm turbulence for some embodiments, an example image resulting for which is shown in Figure 4B:

```
  C* Compute turbulence above storm top.
  C
               IF ((wsq .le. 0.0) .and. havtop(i)) THEN
                 stab = SQRT(bvsq(i))
                 dopu = u(i) - ufrzl(i)
                 dopv = v(i) - vfrzl(i)
                 dopspd = SQRT(dopu*dopu + dopv*dopv)
                 pnu = dden(i)*stab*dopspd
                 IF (dopspd .eq. 0.0 ) THEN
                   ahat = 2.5
                 ELSE
                   ahat = ovshoot(i)*stab/dopspd*SQRT(pnu0(i)/pnu)
                 END IF
                 IF (ahat .gt. 2.5) ahat = 2.5
                 IF (ahat .ge. 1.0) THEN
                   edrtop = (drag(i)*.0004)**.333
                   edr(i) = MAX(edr(i), edrtop)
```

```
            drag(i) = drag(i)*((2.5-ahat)/1.5)
          END IF
        END IF
      END DO
C
```

Figure 5 shows an example of how the DSEE may be incorporated into existing and/or prospect flight planning tools. The DSEE may be included with online services, with desktop services, with mobile applications, and/or the like. In this embodiment of the disclosure, a flight planning tool has an interface 501 representative of an online flight planning service with user profile information. As an interactive element 502, the DSEE may allow users to factor integrated turbulence prediction into flight path creation. The DSEE may allow users to consider several ways of incorporating turbulence prediction into their flight path considering their flight requirements 503. In this example, the DSEE may offer shortest path generation where turbulence may not be a considering factor in flight path creation, turbulence circumvention where turbulence avoidance is a serious flight consideration, some turbulence circumvention with emphasis on shortest path generation where turbulence avoidance warrants some consideration, but may not be a primary goal and/or the like. The DSEE may then generate an enhanced, integrated turbulence forecast within the specified flight path region 504 and suggest flight path alterations with respect to the level of turbulence circumvention desired.

Figure 6 shows one example of an expanded logic flow diagram of flight path considerations when the DSEE is part of an integrated flight planning tool. In one embodiment of the disclosure, the flight planning service may access/input user profile information 600 which may include such information type of aircraft and/or flight service such as passenger 601, private 602 and/or commercial cargo/transport 603, the consideration of which may influence turbulence avoidance (i.e. commercial cargo transport may prioritize shortest path with minimal evasion while passenger may emphasize turbulence circumvention over speed or directness). The DSEE may request additional user profile information for flight path construction 604. In some embodiments of the disclosure, such information may include the origin grid point and departure time of the flight, the destination grid point, and/or the maximum travel time the flight can utilize in constructing its path 605. In some embodiments of the disclosure, the DSEE may infer user information from previously stored user profile data and/or prior flight path generation 606. In some embodiments, this information may include the aircraft type, its fuel requirements, its standard flying altitude, previous planned flight paths, and/or the like 608. In some embodiments, user profile and flight creation information that is both input and/or inferred by the DSEE may be used to update the user profile data for future DSEE use 608. In some embodiments of the disclosure, the DSEE may use other stored profile information where similar parameters resulted in successful flight path creation. In some embodiments of the disclosure, the DSEE may use additional input, such as those from sources external to the flight planning tool, such as historical flight plan data and/or the like. The DSEE may then calculate the grid size of the region 609 over which the DSEE may consider flight path creation, using input such as the origin, destination, maximum flight time, and/or facilities of the aircraft and/or type of flight. In some embodiments of the disclosure, two dimensional grid space may be considered for initial path planning purposes. In some embodiments of the disclosure, three dimensional grid space may be considered for path planning purposes. In some embodiments of the disclosure, two dimensional grid space may be considered for initial path planning purposes, which may then be integrated with additional dimensional information as necessary to accurately determine available grid space inside which the flight path may still meet flight path parameters.

In some embodiments of the disclosure, this initial input component may then be followed by DSEE (algorithmic) turbulence integration 610 of the generated geospatial grid region, some examples of which have been described in Figures 2, 3, and 4. The DSEE may create an overlay to the generated grid region 611 and may request additional information about the desired parameters of the flight path through this grid region 612. In some embodiments of the disclosure, these parameters may include schedule-based path-finding (shortest path immediacy), schedule-based but with circumvention of acute turbulence (shortest path avoiding high hazard turbulence areas), turbulence circumvention (navigating out of turbulence areas), and/or any combination of or intermediate stage to these parameters. The DSEE may then use available input as described in the input component to determine all flight path creation parameters 614. The DSEE may then create a flight path over the integrated turbulence grid region 615, considering flight path creation parameters 613. The DSEE may then display the proposed flight path to the user as a terminal overlay, standard or high definition map overlay and/or the like 616, as is applicable to the flight planning tool. If the flight path is satisfactory 617, the user may then exit the flight path planning component of the DSEE as an incorporated flight planning tool option, In some embodiments of the disclosure, the DSEE may allow the user to export the determined flight path to other media, save the flight path to the user profile, share the flight path with additional users, and/or the like. In some embodiments of the disclosure, if the proposed flight path is not satisfactory 617, the DSEE may allow the user to modify flight path creation parameters 618. In some embodiments of the disclosure, the user may reenter a flight path creation component as specified earlier 612. In some embodiments of the disclosure, users may be allowed to visually manipulate flight path options using the proposed flight path turbulence grid overlay. In some embodiments of the disclosure, the user may be able to reenter flight path creation, visually manipulate the proposed flight path and/or combine these methods in any intermediate path modification.

Figure 7 shows an example of a vertical slice dissection of a proposed flight path through which an aircraft may pass through multiple turbulence types and where an aircraft may experience enhanced turbulence integration as calculated by the DSEE. In this example, the aircraft experiences no turbulence at either origin A 701 or destination B 707, but as the aircraft rises through the atmosphere along the projected flight path, it may begin to encounter turbulence regions. In this example, between 20 and 30 kilofeet (kft), the aircraft at position 720 has encountered a thunderstorm region 702. As the aircraft moves directionally forward along its flight path, it reaches the upper level 704 where CAT may be pronounced. In this example, the aircraft at position 730 is in an enhanced thunderstorm and upper level CAT region where integrated turbulence as calculated by the DSEE may show greater turbulence hazard than either turbulence regions, separately or combined in a conventional summation. In this example, at position 740 the aircraft has moved into an enhanced upper level and mountain wave turbulence region 705 which, as calculated by the DSEE, may show greater turbulence hazard than either turbulence regions, separately or combined in a conventional summation. At position 750, the aircraft descends in a mountain turbulence region where mountain and gravity wave turbulence may be pronounced. At position 760, the aircraft has arrived at its destination, having experienced multi-hazard turbulence events in both singular and overlap turbulence regions.

Figure 8 shows an example grid output of one embodiment of the DSEE, where integration components may produce staged map overlays of each component of the DSEE turbulence calculation process. In some embodiments of the DSEE, the DSEE may show an initial MWAVE grid output 801, incorporating MWAVE turbulence calculations into a singular, non-enhanced turbulence map overlay. In one embodiment of the DSEE, the map overlay may be color-coded to indicate areas of turbulence hazard where clear represents no turbulence, green represents light turbulence hazard, yellow represents moderate turbulence hazard, and red represents severe turbulence hazard. In some embodiments of the disclosure, the DSEE may output a forecast as a four-dimensional grid of EDR values in multiple file formats, such as GRIB2 and/or geometric vector data such as Geographic Information System (GIS) shapefiles, for use in any GIS display, software, integrator, and/or the like. In one embodiment of the disclosure, the DSEE may display the results of the integration of its MWAVE and INTTURB components 802, with enhanced turbulence regions. In some embodiments of the DSEE, the output may be a color-coded map overlay, export files for use in geospatial display systems, and/or the like. In one embodiment of the disclosure, the DSEE may then display the integration of its INTTURB component with its VVTURB2 component 803. In some embodiments of the DSEE, the output may be a color-coded map overlay, export files for use in geospatial display systems, and/or the like. In one embodiment of the disclosure, the DSEE may display a finalized output of full (algorithmic) turbulence integration component 804, as described in Figures 2, 3, and 4. In some embodiments of the DSEE, the output may be a color-coded map overlay, export files for use in geospatial display systems, and/or the like. In some embodiments of the disclosure, these outputs may be available as separate data feeds, software/tool options, export files and/or the like. In some embodiments of the disclosure, these outputs may be available internally to the DSEE and only integrated outputs available externally in the form of data feeds, software/tool options, export files, and/or the like.

Figure 9 demonstrates one example of how DSEE Integration component(s) may incorporate external data feeds and may provide various partners, third party software applications/tools, end users, integrators, internal and external flight planning services, and/or the like with integrated turbulence output in the form of comma-separated value (CSV), geometric vector data files, gridded binary (GRIB) format, data feeds, and/or the like. In one embodiment, the DSEE receives and/or requests global models/modeling data for a variety of weather and/or geographic models 901, including but not limited to global models 901a and/or regional models 901b. In some embodiments, Global Forecast System (GFS) modeling 902a from the National Oceanic and Atmospheric Administration (NOAA) is utilized as input. In some embodiments, the DSEE receives Rapid Refresh (RAP) 902b modeling from the NOAA as input. In some embodiments, the DSEE receives GEM 902c (Global Environmental Multiscale Model) as input. In some embodiments, the DSEE receives ECMWF 902d modeling as input. In one embodiment, the DSEE receives GFS, RAP, GEM, ECMWF, and/or similar modeling information as input. Some embodiments of the DSEE are model agnostic. In some embodiments the DSEE produces one or more GRIB2 file(s) 903 and/or record outputs that may be appended in GRIB format for use in file distribution by DSEE partners 904. In some embodiments, DSEE partners may distribute DSEE output through various communication networks 905 such as local area networks (LAN) and/or external networks such as the internet which may provide DSEE partners, third party applications/tools 906, and/or end users 906a with DSEE output. In some embodiments of the DSEE, such output may be in propagated GRIB files as provided to DSEE partners. In some embodiments of the DSEE, such output may be converted to a visual form for display on a web browser, smart phone application, software package and/or the like. In some embodiments of the DSEE, electronic messaging 907 such as email, SMS text, push notifications, and/or the like may be employed to alert end users of important data updates from the DSEE, DSEE partners, and/or other parties providing DSEE output data.

In some embodiments, the DSEE may provide a file or data stream as output, in which values of the DSEE during component production, including but not limited to EDR finalization, may be recorded or provided. One example of a DSEE CSV output file is provided below, showing an in-flight time sequence of forecasted turbulence:

Flight PHX-MSP dd mm yyyy Leave:0413Z Arrive:0646Z
Turbulence Forecast (EDR*100)

| Time | Latitude | Longitude | Altitude (kft) | MWAVE | COMTURB | VVTURB | INTTURB | VVINTTURB | FINAL | Explanation |
|---|---|---|---|---|---|---|---|---|---|---|
| 413 | 33.5 | -111.8 | 50 | 0 | 0 | 0 | 0 | 1 | 1 | |
| 423 | 34.5 | -111.6 | 250 | 0 | 0 | 0 | 0 | 26 | 26 | Near-storm turbulence |
| 433 | 35.4 | -110.3 | 370 | 0 | 0 | 0 | 0 | 1 | 1 | |
| 443 | 36.2 | -109 | 370 | 0 | 0 | 1 | 25 | 1 | 25 | Mountain wave and free gravity wave amplitudes combine |
| 453 | 36.9 | -107.7 | 370 | 0 | 0 | 0 | 0 | 0 | 0 | |
| 503 | 37.3 | -106 | 370 | 0 | 0 | 0 | 0 | 34 | 34 | Storm top turbulence |
| 513 | 38.1 | -104.7 | 370 | 0 | 0 | 1 | 35 | 1 | 35 | Mountain wave and free gravity wave amplitudes combine |
| 523 | 38.9 | -103.6 | 370 | 0 | 0 | 1 | 0 | 1 | 1 | |
| 533 | 39.9 | -102.3 | 370 | 0 | 45 | 0 | 45 | 0 | 45 | |
| 543 | 40.9 | -101 | 370 | 0 | 0 | 1 | 0 | 1 | 1 | |
| 553 | 41.8 | -99.7 | 370 | 0 | 51 | 1 | 51 | 1 | 51 | |
| 603 | 42.6 | -98.5 | 370 | 0 | 34 | 0 | 34 | 0 | 34 | |
| 613 | 43.5 | -97 | 370 | 0 | 30 | 1 | 30 | 1 | 30 | |
| 623 | 44.4 | -95.3 | 290 | 0 | 18 | 43 | 18 | 43 | 43 | |
| 633 | 44.7 | -94 | 100 | 0 | 0 | 24 | 0 | 24 | 24 | |
| 643 | 44.8 | -93.2 | 20 | 0 | 19 | 0 | 19 | 51 | 51 | Near-storm turbulence |

In some embodiments of the DSEE, a file or feed (e.g., a CSV file) output from the DSEE may be provided as input to a geometric vector data generator 907, which may provide additional data output options. In some embodiments of the DSEE, the geometric vector data generator may output geometric vector data files to a file server 930 which may provide the data output to an alert server 920 which may provide the output a communications networks 905 to such partners, third parties, software applications, end users and/or the like as described. In some embodiments of the DSEE, the geometric vector data generator may output geometric vector data files, such as shapefiles, for storage in GIS database(s) 908. In some embodiments of the DSEE, Web Mapping Services (WMS) and/or Web Feature Services (WFS) 909 may obtain the geometric vector data files from GIS database(s) and provide geographic service integrators 911 with DSEE output data through various communication networks 905 as described. In some embodiments of the DSEE, file server(s) 908 and/or WMS may incorporate the DSEE output data into a DSEE integrated server 940 with application, data, and/or network components. A DSEE integrated server may employ such output data from DSEE (algorithmic) components in proprietary software tools, web services, mobile applications and/or the like. In one embodiment of the DSEE, a DSEE integrated server may employ DSEE component output for use in flight planning tools 912, such as AviationSentry Online®.

Figure 10A shows an example terrain height map 1001 in meters over the Colorado area in the 0.25 deg latitude/longitude grid world terrain database. In this embodiment of the DSEE, black areas are regions where the terrain is relatively flat.

Figure 10B shows two examples of asymmetry in computed terrain height as described in 10A along x and y directions. In one embodiment of the DSEE, asymmetry is computed as the negative height change in the east (x) direction 1002. In one embodiment of the DSEE, asymmetry is computed as the negative height change in the north (y) direction 1003.

Figure 11A shows one example of a 3-hour RAP model forecast 1101 showing Streamlines and isotachs (kts) of the forecast flow at 250mb (near FL350).

Figure 11B shows one example of Lighthill-Ford radiation 1102 computed at 10668 m (FL350) for the forecast flow shown in Figure 11A. Lighthill-Ford radiation is the gravity wave diagnostic in ULTURB, a (algorithmic) component of the DSEE, in one embodiment of the DSEE.

Figure 11C shows one example of ULTURB turbulence forecast 1103 in EDR values for the forecast flow described in Figure 11A. ULTURB, a component of the DSEE in one embodiment, combines the gravity wave diagnostic described in Figure 11B, the Richardson number, and the vertical wind shear.

Figure 11D provides an example of output generated by the DSEE, a 4D grid of EDR values, which may be made available in several forms including, by way of non-limiting example, GRIB2 format and GIS shapefiles. As discussed above, EDR value is the Eddy Dissipation Rate and is defined as the rate at which kinetic energy from turbulence is absorbed by breaking down the eddies smaller and smaller until all the energy is converted to heat by viscous forces. EDR is expressed as kinetic energy per unit mass per second in units of velocity squared per second ($m^2/s^3$). The EDR is the cube root of the turbulent kinetic energy (TKE). When adding the EDR values together from VVTURB2 and INTTURB, the values may be converted back to TKE, added together, and converted back to EDR (take the cube root of the sum).

Figure 11D also illustrates various interface features that may be used to navigate the four-dimensional grid, such as a time slider 1110 to move through various calculated time grids, an elevation slider 1112 to view various elevations, and a detail widget, to adjust the granularity/detail of the displayed turbulence interface.

In some embodiments, the DSEE server may issue PHP/SQL commands to query a database table (such as FIGURE 20, Profile 2019c) for profile data. An example profile data query, substantially in the form of PHP/SQL commands, is provided below:

```
<?PHP
header('Content-Type: text/plain');
mysql_connect("254.93.179.112",$DBserver,$password); // access database server
mysql_select_db("DSEE_DB.SQL"); // select database table to search
//create query
$query = "SELECT field1 field2 field3 FROM ProfileTable WHERE user LIKE '%'
   $prof";
$result = mysql_query($query); // perform the search query
mysql_close("DSEE_DB.SQL"); // close database access
?>
```

The DSEE server may store the profile data in a DSEE database. For example, the DSEE server may issue PHP/SQL commands to store the data to a database table (such as FIGURE 20, Profile 2019c). An example profile data store command, substantially in the form of PHP/SQL commands, is provided below:

```
<?PHP
header('Content-Type: text/plain');
mysql_connect("254.92.185.103",$DBserver,$password); // access database server
mysql_select("DSEE_DB.SQL"); // select database to append
mysql_query("INSERT INTO ProfileTable (fieldname1, fieldname2, fieldname3)
VALUES ($fieldvar1, $fieldvar2, $fieldvar3)"); // add data to table in
   database
mysql_close("DSEE_DB.SQL"); // close connection to database
?>
```

Various embodiments of the DSEE may be used to provide real-time, pre-flight and/or in-flight turbulence reporting, planning and response. The integrated, unified turbulence system provided by the DSEE may be used in flight equipment and/or ground equipment. The DSEE may provide weather/aviation decision support (e.g., via graphical displays) and/or provide alerts/triggers. Although it is discussed in terms of re-routing in time of increased turbulence, in some embodiments, the DSEE may identify more efficient paths based on real-time updates where there is decreased turbulence over a shorter physical distance, and may update a flight plan accordingly. The DSEE identifies 4D areas for flight hazards, and a user may choose or set their profile based on particular hazards (e.g., a passenger airline would have a different hazard/turbulence profile than an air freight company, and a large airliner would have a different profile from a small plane or helicopter). Various cost calculations and risk calculations may also be used in determining alerts and/or flight paths. In some embodiments, real-time feedback may come from plane-mounted instrument sensors and provide updates to predicted turbulence. Such information may be used to refine models/algorithms for turbulence determination. Although examples were discussed in the context of jet airliners, it is to be understood that the DSEE may be utilized for low-level services, such as helicopters, unmanned aerial vehicles, as well as high speed and/or military aircraft, and may even have potential ground applications, especially in mountainous terrain. The DSEE may work with air traffic control, particularly in management of routing. In some embodiments, the DSEE may input directly in avionics systems to guide planes.

Prior to the DSEE, forecasts of turbulence, if even available, were generally qualitative (e.g., light/heavy), independent of aircraft type, and did not include all sources of turbulence (e.g., they specifically exclude thunderstorms) or interactions of turbulence, thus making them unusable for most practical applications such as flight planning. The integrated turbulence forecast of the DSEE is unique because it dynamically determines the location and level at which each comprehensive turbulence determination is made, based on the meteorological conditions at that point in space and time. In some embodiments, the result is a single, integrated forecast that includes all sources of turbulence, and is produced in quantitative units, such as Eddy Dissipation Rate (EDR), thus making it suitable for practical uses, such as flight planning applications, and allows for categorical flexibility specific to an aircraft.

In some embodiments, the DSEE integrates three DSEE turbulence components/algorithms, ULTURB, BLTURB, and MWAVE into one component/program called INTTURB. In some additional or alternative embodiments, the DSEE integrates VVTURB with ULTURB and BLTURB into a component/program called VVINTTURB. Output from all components/algorithms may in EDR, an aircraft-independent metric of turbulence intensity. The DSEE may assign an EDR value at each model grid point and at each flight level. Observations of turbulence may also be used for further tuning of the forecast where and when they are available. In some embodiments, the DSEE may utilize a VVSTORMSE component/algorithm, as discussed below.

Embodiments of the DSEE may be configured to determine warnings for relatively reduced volumes/areas/sizes of airspace, substantially more granular and detailed than, for example, traditional convective SIGMETs. A Convective SIGMET is typically issued as a text message for convection over the continental United States, for example, for an area of thunderstorms affecting an area of 3,000 square miles or greater. The DSEE and/or VVSTORMSE may provide granularity by reducing the size of the analyzed area by 10%, 15%, 20%, 25%, 30%, 35%, 40%, 45%, 50%, 55%, 60%, 65%, 70%, 75%, 80%, 85%, 90%, and/or 95%. Depending on the embodiment, the area granularity may be of the following, or within a range of any of the following: 0.05 $km^2$, 0.1 $km^2$, 0.2 $km^2$, 0.3 $km^2$, 0.4 $km^2$, 0.5 $km^2$, 0.6 $km^2$, 0.7 $km^2$, 0.8 $km^2$, 0.9 $km^2$, 1 $km^2$, 2 $km^2$, 3 $km^2$, 4 $km^2$, 5 $km^2$, 6 $km^2$, 7 $km^2$, 8 $km^2$, 9 $km^2$, 10 $km^2$, 11$km^2$, 12 $km^2$, 13 $km^2$, 14 $km^2$, 15 $km^2$, 16 $km^2$, 17 $km^2$, 18 $km^2$, 19 $km^2$, 20 $km^2$, 21 $km^2$, 22 $km^2$, 23 $km^2$, 24 $km^2$, 25 $km^2$, 26 $km^2$, 27 $km^2$, 28 $km^2$, 29 $km^2$, 30 $km^2$, 31 $km^2$, 32 $km^2$, 33 $km^2$, 34 $km^2$, 35 $km^2$, 36 $km^2$, 37 $km^2$, 38 $km^2$, 39 $km^2$, 40 $km^2$, 41 $km^2$, 42 $km^2$, 43 $km^2$, 44 $km^2$, 45 $km^2$, 46 $km^2$, 47 $km^2$, 48 $km^2$, 49 $km^2$, 50 $km^2$, 55 $km^2$, 60 $km^2$, 65 $km^2$, 70 $km^2$, 75 $km^2$, 80 $km^2$, 85 $km^2$, 90 $km^2$, 95 $km^2$, 100 $km^2$, 105 $km^2$, 110 $km^2$, 115 $km^2$, 120 $km^2$, 125 $km^2$, 130 $km^2$, 135 $km^2$, 140 $km^2$, 145 $km^2$, 150 $km^2$, 155 $km^2$, 160 $km^2$, 165 $km^2$, 170 $km^2$, 175 $km^2$, 180 $km^2$, 185 $km^2$, 190 $km^2$, 195 $km^2$, 200 $km^2$, 205 $km^2$, 210 $km^2$, 215 $km^2$, 220 $km^2$, 225 $km^2$, 230 $km^2$, 235 $km^2$, 240 $km^2$, 245 $km^2$, 250 $km^2$, 255 $km^2$, 260 $km^2$, 265 $km^2$, 270 $km^2$, 275 $km^2$, 280 $km^2$, 285 $km^2$, 290 $km^2$, 295 $km^2$, 300 $km^2$, 305 $km^2$, 310 $km^2$, 315 $km^2$, 320 $km^2$, 325 $km^2$, 330 $km^2$, 335 $km^2$, 340 $km^2$, 345 $km^2$, 350 $km^2$, 355 $km^2$, 360 $km^2$, 365 $km^2$, 370 $km^2$, 375 $km^2$, 380 $km^2$, 385 $km^2$, 390 $km^2$, 395 $km^2$, 400 $km^2$, 425 $km^2$, 450 $km^2$, 475 $km^2$, 500 $km^2$, 525 $km^2$, 550 $km^2$, 575 $km^2$, 600 $km^2$, 625 $km^2$, 650 $km^2$, 675 $km^2$, 700 $km^2$, 725 $km^2$, 750 $km^2$, 775 $km^2$, 800 $km^2$, 825 $km^2$, 850 $km^2$, 875 $km^2$, 900 $km^2$, 925 $km^2$, 950 $km^2$, 975 $km^2$, 1000 $km^2$, 1100 $km^2$, 1200 $km^2$, 1300 $km^2$, 1400 $km^2$, 1500 $km^2$, 1600 $km^2$, 1700 $km^2$, 1800 $km^2$, 1900 $km^2$, 2000 $km^2$, 2100 $km^2$, 2200 $km^2$, 2300 $km^2$, 2400 $km^2$, 2500 $km^2$, 2600 $km^2$, 2700 $km^2$, 2800 $km^2$, 2900 $km^2$, 3000 $km^2$, 3100 $km^2$, 3200 $km^2$, 3300 $km^2$, 3400 $km^2$, 3500 $km^2$, 3600 $km^2$, 3700 $km^2$, 3800 $km^2$, 3900 $km^2$, 4000 $km^2$, 4100 $km^2$, 4200 $km^2$, 4300 $km^2$, 4400 $km^2$, 4500 $km^2$, 4600 $km^2$, 4700 $km^2$, 4800 $km^2$, 4900 $km^2$, 5000 $km^2$, 5500 $km^2$, 6000 $km^2$, 6500 $km^2$, 7000 $km^2$, 7500 $km^2$. The area granularity may be in the range of any two of the previous areas, such as by way of non-limiting example, between 0.1 $km^2$ and 1000 $km^2$, 10 $km^2$ and 200 $km^2$, 100 $km^2$ and 5000 $km^2$, 800 $km^2$ and 5500 $km^2$, 900 $km^2$ and 4500 $km^2$, and/or the like. The shape of the area may be, by way of non-limiting example, square, rectangular, parallelogram, n-gon, irregular, and/or the like.

The DSEE and/or VVSTORMSE may provide granularity by reducing the size of the analyzed airspace volumes by 15%, 20%, 25%, 30%, 35%, 40%, 45%, 50%, 55%, 60%, 65%, 70%, 75%, 80%, 85%, 90%, and/or 95%. Depending on the embodiment, the volume granularity may be of the following or within a range of the any of the following: 0.1 $km^3$, 0.2 $km^3$, 0.3 $km^3$, 0.4 $km^3$, 0.5 $km^3$, 0.6 $km^3$, 0.7 $km^3$, 0.8 $km^3$, 0.9 $km^3$, 1 $km^3$, 2 $km^3$, 3 $km^3$, 4 $km^3$, 5 $km^3$, 6 $km^3$, 7 $km^3$, 8 $km^3$, 9 $km^3$, 10 $km^3$, 11 $km^3$, 12 $km^3$, 13 $km^3$, 14 $km^3$, 15 $km^3$, 16 $km^3$, 17 $km^3$, 18 $km^3$, 19 $km^3$, 20 $km^3$, 21 $km^3$, 22 $km^3$, 23 $km^3$, 24 $km^3$, 25 $km^3$, 26 $km^3$, 27 $km^3$, 28 $km^3$, 29 $km^3$, 30 $km^3$, 31 $km^3$, 32 $km^3$, 33 $km^3$, 34 $km^3$, 35 $km^3$, 36 $km^3$, 37 $km^3$, 38 $km^3$, 39 $km^3$, 40 $km^3$, 41 $km^3$, 42 $km^3$, 43 $km^3$, 44 $km^3$, 45 $km^3$, 46 $km^3$, 47 $km^3$, 48 $km^3$, 49 $km^3$, 50 $km^3$, 55 $km^3$, 60 $km^3$, 65 $km^3$, 70 $km^3$, 75 $km^3$, 80 $km^3$, 85 $km^3$, 90 $km^3$, 95 $km^3$, 100 $km^3$, 105 $km^3$, 110 $km^3$, 115 $km^3$, 120 $km^3$, 125 $km^3$, 130 $km^3$, 135 $km^3$, 140 $km^3$, 145 $km^3$, 150 $km^3$, 155 $km^3$, 160 $km^3$, 165 $km^3$, 170 $km^3$, 175 $km^3$, 180 $km^3$, 185 $km^3$, 190 $km^3$, 195 $km^3$, 200 $km^3$, 205 $km^3$, 210 $km^3$, 215 $km^3$, 220 $km^3$, 225 $km^3$, 230 $km^3$, 235 $km^3$, 240 $km^3$, 245 $km^3$, 250 $km^3$, 255 $km^3$, 260 $km^3$, 265 $km^3$, 270 $km^3$, 275 $km^3$, 280 $km^3$, 285 $km^3$, 290 $km^3$, 295 $km^3$, 300 $km^3$, 305 $km^3$, 310 $km^3$, 315 $km^3$, 320 $km^3$, 325 $km^3$, 330 $km^3$, 335 $km^3$, 340 $km^3$, 345 $km^3$, 350 $km^3$, 355 $km^3$, 360 $km^3$, 365 $km^3$, 370 $km^3$, 375 $km^3$, 380 $km^3$, 385 $km^3$, 390 $km^3$, 395 $km^3$, 400 $km^3$, 425 $km^3$, 450 $km^3$, 475 $km^3$, 500 $km^3$, 525 $km^3$, 550 $km^3$, 575 $km^3$, 600 $km^3$, 625 $km^3$, 650 $km^3$, 675 $km^3$, 700 $km^3$, 725 $km^3$, 750 $km^3$, 775 $km^3$, 800 $km^3$, 825 $km^3$, 850 $km^3$, 875 $km^3$, 900 $km^3$, 925 $km^3$, 950 $km^3$, 975 $km^3$, 1000 $km^3$, 1100 $km^3$, 1200 $km^3$, 1300 $km^3$, 1400 $km^3$, 1500 $km^3$, 1600 $km^3$, 1700 $km^3$, 1800 $km^3$, 1900 $km^3$, 2000 $km^3$, 2100 $km^3$, 2200 $km^3$, 2300 $km^3$, 2400 $km^3$, 2500 $km^3$, 2600 $km^3$, 2700 $km^3$, 2800 $km^3$, 2900 $km^3$, 3000 $km^3$, 3100 $km^3$, 3200 $km^3$, 3300 $km^3$, 3400 $km^3$, 3500 $km^3$, 3600 $km^3$, 3700 $km^3$, 3800 $km^3$, 3900 $km^3$, 4000 $km^3$, 4100 $km^3$, 4200 $km^3$, 4300 $km^3$, 4400 $km^3$, 4500 $km^3$, 4600 $km^3$, 4700 $km^3$, 4800 $km^3$, 4900 $km^3$, 5000 $km^3$, 5500 $km^3$, 6000 $km^3$, 6500 $km^3$, 7000 $km^3$, 7500 $km^3$, 8000 $km^3$, 8500 $km^3$, 9000 $km^3$, 9500 $km^3$, 10000 $km^3$. The volume granulariy may be in the range of any two of the previous, such as by way of non-limiting example, between 0.1 $km^3$ and 10000 $km^3$, 10 $km^3$ and 200 $km^3$, 100 $km^3$ and 5000 $km^3$, 800 $km^3$ and 5500 $km^3$, 900 $km^3$ and 4500 $km^3$, and/or the like. The shape of the volume may be, by way of non-limiting example, cuboid, parallelepiped, polygonal, irregular, and/or the like.

With reduced airspace volumes, such implementations of the DSEE issue fewer aircraft alerts, resulting in increased compliance with and/or adherence to warnings. In some embodiments, the DSEE avoids over-forecasting of alerts, including avoidance of over-forecasting convective turbulence. Some aircraft-flight-following operations warn aircraft of impending turbulence based on text messages issued by the National Weather Service. These messages may coarsely outline the threat volume often resulting in alerting aircraft not in the direct path of the turbulence. While non-convective turbulence is determined from numerical weather forecast models as it cannot generally be directly observed, the DSEE may accurately infer convective turbulence from observations from radar, satellite, or lightning.

For example, rather than alerting the entire atmospheric volume from the surface to very high altitudes (based on assumption that all altitudes are affected whenever, for example, radar reflectivity reaches a certain threshold or whenever lightning is observed), the DSEE can provide alerts with enhanced granularity. The DSEE can predict/identify regions of relatively lower convective turbulence (primarily correlated to storm updraft and downdraft strength) from the storm-supporting environment.

In some embodiments of the DSEE, a VVSTORMSE component may have a plurality of subcomponents. In one exemplary embodiment, illustrated in Figure 12, the VVSTORMSE component receives 1202 and analyzes a numerical weather forecast model 1204 for areas of atmospheric potential instability. It assigns a turbulence-intensity at each altitude 1206 based on the updraft or downdraft magnitude that the environment can support and assigns a turbulence intensity (see discussion of Figure 12A below). An exemplary algorithmic implementation for one embodiment is illustrated in the below code fragment:

```
C
C* Lift most unstable parcel to find potential instability
C* (if parcel has an LFC).
C* Wwnd vertical velocity ('+' is up and '-' is down)
C* Edr eddy dissipation rate
C* Plcl pressure at the lifted condensation level (the pressure when
C* Lifted air becomes saturated)
C* Pbar pressure level being analyzed
C* Thte equivalent potential temperature
C* Thta potential temperature
C* Pthte parcel equivalent potential temperature
C* Pctdil percent dilution to dilute parcel with environmental air
C* Tkns layer thickness
C* Ff Coriolis parameter
C* Vort absolute vorticity
C* Avorg absolute geostrophic vorticity
C* Pelt parcel temperature (PR_TMST is function that computes it)
C* Tenv environmental temperature (degK)
C* Pcldif temperature difference between parcel and environment
C* Wsq square of vertical acceleration
C* Vvsq square of vertical velocity
C* Vvbase vertical velocity at layer base
C* Wmean mean upward vertical velocity in layer
C* Fl Flight level (m)
C* Windex maximum downward vertical velocity (at surface)
C* Maxvv maximum upward vertical velocity
C* Frzmsl freezing level above sea level
C* Frzlz freezing level above ground elevation
C* Sfcz surface elevation
C* Wdown downward vertical velocity at flight level
C* Edrdown edr from wdown
C* Edrlow edr from wmean
C
       DO i = 1, maxpts
         zsum = zsum + z(i) + tkns(i)/2.
         IF (sfcp (i) .lt. rlevel (j+1)) THEN
          wwnd (i) = RMISSD
         edr (i) = RMISSD
         ELSE
         IF (plcl(i) .gt. pbar) THEN
           IF (thte(i) .eq. RMISSD) thte(i) = thta(i)
```

```
           IF (pthte(i) .gt. thte(i)) THEN
             pctdil = tkns(i)/10000.0
             pthte(i) = (1.0-pctdil)*pthte(i) + pctdil*thte(i)
            END IF
           IF (ff(i) .gt. 0.0 ) THEN
             vort = MAX (avorg (i), ff (i))
           ELSE
             vort = MIN (avorg (i), ff (i))
            END IF
           pclt = PR_TMST(pthte(i),pbar,0.0)
           tenv = t(i) + 273.16
           pcldif = pclt - tenv
           IF (pcldif .gt. 20.0) THEN
             wsq = 0.0
           ELSE
             IF (ABS(ff(i)) .lt..00005) THEN
               wsq = 2.0*tkns(i)*GRAVTY*pcldif/tenv
             ELSE
               wsq = 2.0*tkns(i)*GRAVTY*pcldif/tenv +
+ 0.5*ff(i)/vort*gwshrsq(i)
              END IF
            END IF
           IF ((wsq .gt. 0.0) .and. (.not. abvlfc(i))) THEN
             abvlfc (i) = .true.
            END IF
         ELSE
           wsq = 0.0
           END IF
         vvsq = vvbase(i)*vvbase(i) + wsq
         IF (vvsq .lt. 0.0 ) THEN
           wwnd(i) = 0.0
         ELSE
           wwnd(i) = SQRT (vvsq)
           END IF
         wmean = (vvbase(i)+wwnd(i))/2.
         C
         C* Compute EDR from updraft speed (wmean).
         C
         IF (wmean .gt. 10.0) THEN
           edr(i) = (.06 + .009*(wmean-10.0))**.333
         ELSE
           edr(i) = (.006*wmean)**.333
         END IF
         C
         C* Compute downdraft velocities and downdraft edr
         C
      jj = 1
     fl = 304.8
     DO WHILE (fl .le. 6097.)
       DO i = 1, maxpts
          IF (edrlow(jj,i) .ne. RMISSD .or. windex(i) .ne. RMISSD)
+ THEN
            edrdown = 0.0
           IF (maxvv(i) .gt. 10.) THEN
              frzmsl = frzlz(i) + sfcz(i)
            IF (fl .gt. sfcz(i) .and. fl .lt. frzmsl) THEN
              wdown = windex(i)*(frzmsl-fl)/frzlz(i)
             IF (wdown .gt. 10.0) THEN
               edrdown = (.06+.009*(wdown-10.0))**.333
             ELSE IF (wdown .gt. 0.0 ) THEN
               edrdown = (.006*wdown)**.333
             END IF
              END IF
```

```
            END IF
          edr (i) = MAX (edrlow(jj,i), edrdown)
           ELSE
             edr(i) = RMISSD
          END IF
        END DO
```

Then the DSEE/VVSTORMSE component (or subcomponent(s)/program(s)) masks the potential turbulence forecast with convective observations and/or future derived observations 1208. The following provides an example code fragment addressing this aspect for some embodiments of the DSEE/VVSTORMSE component(s)/subcomponent(s):

```
C
C* Open radar file and read echo tops.
C* Gdrfile radar echo top filename
C* Etop echo top (computed by DG_GRID)
C* Gdefile edr filename
C* El equilibrium level
C* Edr potential edr at flight level
C
   CALL DG_NFIL (gdrfile, ", iret)
   IF (iret .ne. 0) THEN
     write (6,*) 'Unable to process radar file input'
     STOP
   END IF
   CALL DG_NDTM (fhrdr, iret)
   grdnam = ' '
   gpack = 'NONE'
   CALL DG_NTIM (.false., .false., time, nxttm, ier)
   CALL TG_DUAL (time, timfnd, ier)
   gvcord = 'NONE'
    glevel = '0'
   gfunc = 'QUO(NET,.003048)'
   CALL DG_GRID (timfnd, glevel, gvcord, gfunc, pfunc, etop,
 + igx, igy, time, level, ivcord, parm, iret)
 C
 C* Open edr file and read edr data.
 C
   CALL DG_NFIL (gdefile, gdout, iret)
   IF (iret .ne. 0) THEN
     write (6,*) 'Unable to process edr file input'
     STOP
   END IF
   CALL DG_NDTM (fhedr, iret)
   grdnam = ' '
   gpack = 'NONE'
   CALL DG_NTIM (.false., .false., time, nxttm, ier)
   CALL TG_DUAL (time, timfnd, ier)
   gvcord = 'NONE'
    glevel = '0'
   gfunc = 'EQLV'
   CALL DG_GRID (timfnd, glevel, gvcord, gfunc, pfunc, el,
 + igx, igy, time, level, ivcord, parm, iret)
    maxpts = igx*igy
    C*
   gvcord = 'HGHT'
   CALL LV_CORD (gvcord, sparm, ivcord, iret)
   C
   C* Find levels in model.
   C
   CALL DG_GLEV (1, time, ivcord, LLMXLV,
 + iflev, nlev, iret)
   DO j = 1, nlev
```

```
      rlevel (j) = FLOAT (iflev (1,j))
    END DO
    CALL LV_SORT (ivcord, nlev, rlevel, iret)
    C
    C
    DO j = 1, nlev
      CALL ST_INCH (INT(rlevel(j)), glevel, iret)
      C
      C* Read edr grid.
      C
      gvcord = 'HGHT'
      gfunc = 'EDR'
      CALL DG_GRID (timfnd, glevel, gvcord, gfunc, pfunc, edr,
  + igx, igy, time, level, ivcord, parm, iret)
  C
  C* Mask edr data with echo tops > el.
  C
        DO i = 1, maxpts
         IF (etop(i) .eq. RMISSD .or. el(i) .eq. RMISSD) THEN
           edr(i) = RMISSD
         ELSE IF (etop(i) .lt. el(i)) THEN
           edr(i) = 0.0
         END IF
       END DO
```

Observations may be, by way of non-limiting example, radar, satellite, and/or lightning data and the future derived observations may be numerically predicted future projections of radar, satellite, and/or lightning; and/or the like. Observations may be received and/or imported as data files representing data such as is shown in Figures 12B and 12D. In the case of radar data, only those radar areas whose tops exceed the equilibrium level (EL) - the level at which storm updrafts begin to decelerate (e.g., calculated as discussed previously) - mask the VVSTORMSE potential turbulence area at each altitude. Figure 12F illustrates determined equilibrium levels for this example. Whenever storm tops exceed the EL, the storms have reached their full potential to produce turbulence. A non-limiting example of masking is illustrated by the example code fragment below:

```
C
C* Mask edr data with echo tops > el.
C
       DO i = 1, maxpts
        IF (etop(i) .eq. RMISSD .or. el(i) .eq. RMISSD) THEN
          edr(i) = RMISSD
        ELSE IF (etop(i) .lt. el(i)) THEN
          edr(i) = 0.0
        END IF
      END DO
```

Similarly, in some implementations, satellite derived convective cloud nowcasts may be applied to additionally or alternatively mask off convectively induced turbulence areas. Lightning density data above a specified threshold(s) or parameter(s) may also be used as a mask in some embodiments. In some embodiments of the DSEE, the VVSTORMSE is configured to discern more detail about the turbulence threat than a simple binary (yes/no) answer that a radar-only or a lightning-only decision method would make. The innovative combination of observations and forecasts enabled by DSEE and/or VVSTORMSE provide storm observations in proper context, and reducing or eliminating the need for user-interpretation.

In one implementation of the DSEE, VVSTORMSE finds a parcel based on specified parameters, such as the most unstable parcel below the 500 mb level, at each grid point. Then it lifts this parcel to find its level of free convection (LFC) if there is one. If it has an LFC, then VVSTORMSE determines the upward vertical velocity that the parcel would have. VVSTORMSE determines the turbulence potential in eddy dissipation rate (EDR) from the potential vertical velocity, the maximum vertical velocity defining the equilibrium level (EL), the level at which the parcel begins to decelerate. Then VVSTORMSE determines a potential downward vertical velocity and the potential EDR from potential downward motion. In such an implementation, VVSTORMSE determines potential EDR grids at flight levels at specified intervals, such as every 1000 ft from the surface to the numerical model's highest level, such as is shown in the exemplary code fragment below:

```
C
C* Open radar file and read echo tops.
C
        CALL DG_NFIL (gdrfile, '', iret)
        IF (iret .ne. 0) THEN
          write (6,*) 'Unable to process radar file input'
          STOP
        END IF
        CALL DG_NDTM (fhrdr, iret)
        grdnam = ' '
        gpack = 'NONE'
        CALL DG_NTIM (.false., .false., time, nxttm, ier)
        CALL TG_DUAL (time, timfnd, ier)
        gvcord = 'NONE'
    glevel = '0'
        gfunc = 'QUO(NET,.003048)'
        CALL DG_GRID (timfnd, glevel, gvcord, gfunc, pfunc, etop,
  + igx, igy, time, level, ivcord, parm, iret)
  C
  C* Open edr file and read edr data.
  C
        CALL DG_NFIL (gdefile, gdout, iret)
        IF (iret .ne. 0) THEN
          write (6,*) 'Unable to process edr file input'
          STOP
        END IF
        CALL DG_NDTM (fhedr, iret)
        grdnam = ' '
        gpack = 'NONE'
        CALL DG_NTIM (.false., .false., time, nxttm, ier)
        CALL TG_DUAL (time, timfnd, ier)
        gvcord = 'NONE'
    glevel = '0'
        gfunc = 'EQLV'
        CALL DG_GRID (timfnd, glevel, gvcord, gfunc, pfunc, el,
  + igx, igy, time, level, ivcord, parm, iret)
    maxpts = igx*igy
    C*
        gvcord = 'HGHT'
        CALL LV_CORD (gvcord, sparm, ivcord, iret)
        C
        C* Find levels in model.
        C
        CALL DG_GLEV (1, time, ivcord, LLMXLV,
  + iflev, nlev, iret)
        DO j = 1, nlev
      rlevel (j) = FLOAT (iflev (1,j))
        END DO
        CALL LV_SORT (ivcord, nlev, rlevel, iret)
        C
        C
        DO j = 1, nlev
          CALL ST_INCH (INT(rlevel(j)), glevel, iret)
          C
          C* Read edr grid.
          C
          gvcord = 'HGHT'
          gfunc = 'EDR'
          CALL DG_GRID (timfnd, glevel, gvcord, gfunc, pfunc, edr,
  + igx, igy, time, level, ivcord, parm, iret)
  C
```

```
C* Mask edr data with echo tops > el.
C
           DO i = 1, maxpts
         IF (etop(i) .eq. RMISSD .or. el(i) .eq. RMISSD) THEN
           edr(i) = RMISSD
         ELSE IF (etop(i) .lt. el(i)) THEN
           edr(i) = 0.0
         END IF
       END DO
```

For example, Figure 12A provides an example VVSTORMSE component output of turbulence potential for one such grid at FL250 from the one-hour rapid refresh forecast model verifying at 1500 UTC. The figure shows widespread potential for strong turbulence (e.g., EDR > .55).

VVSTORMSE and/or a second VVSTORMSE component/subcomponent and/or program may then mask the potential turbulence forecast with convective observations and future-derived observations, including radar echo tops, lightning strikes, and satellite data, including but not limited to satellite overshoot detection data. Depending on the implementation, observations may be radar, satellite, lightning data, and/or the like, and the future-derived observations may be numerically predicted future projections of radar, satellite, lightning, and/or the like. In some embodiments, for radar data, only those radar areas whose tops exceed the EL mask of the VVSTORMSE potential turbulence area(s) at each altitude are utilized. In some implementations, when storm tops exceed the EL, the storms may be specified as having reached their full potential to produce turbulence.

Figure 12B shows observed radar top data at 1500 UTC (radar echo tops in 1000s of feet). The VVSTORMSE component identifies active convective tops, i.e., tops above the equilibrium level. Note that the equilibrium level may vary from location to location, and may not be a set particular value for a region (i.e., it varies across the map), for example, as illustrated in Figure 12F. The tops identified as active convective tops may then be used to mask the turbulence potential. The following code fragment illustrates an example embodiment of a methodology for masking:

```
C
C* Open radar file and read echo tops.
C
         CALL DG_NFIL (gdrfile, '', iret)
         IF (iret .ne. 0) THEN
           write (6,*) 'Unable to process radar file input'
           STOP
         END IF
         CALL DG_NDTM (fhrdr, iret)
         grdnam = ' '
         gpack = 'NONE'
         CALL DG_NTIM (.false., .false., time, nxttm, ier)
         CALL TG_DUAL (time, timfnd, ier)
         gvcord = 'NONE'
     glevel = '0'
         gfunc = 'QUO(NET,.003048)'
         CALL DG_GRID (timfnd, glevel, gvcord, gfunc, pfunc, etop,
  + igx, igy, time, level, ivcord, parm, iret)
  C
  C* Open edr file and read edr data.
  C
         CALL DG_NFIL (gdefile, gdout, iret)
         IF (iret .ne. 0) THEN
           write (6,*) 'Unable to process edr file input'
           STOP
         END IF
         CALL DG_NDTM (fhedr, iret)
         grdnam = ' '
         gpack = 'NONE'
         CALL DG_NTIM (.false., .false., time, nxttm, ier)
         CALL TG_DUAL (time, timfnd, ier)
         gvcord = 'NONE'
     glevel = '0'
         gfunc = 'EQLV'
```

```
       CALL DG_GRID (timfnd, glevel, gvcord, gfunc, pfunc, el,
+ igx, igy, time, level, ivcord, parm, iret)
    maxpts = igx*igy
    C*
       gvcord = 'HGHT'
       CALL LV_CORD (gvcord, sparm, ivcord, iret)
       C
       C* Find levels in model.
       C
       CALL DG_GLEV (1, time, ivcord, LLMXLV,
+ iflev, nlev, iret)
       DO j = 1, nlev
     rlevel (j) = FLOAT (iflev (1,j))
       END DO
       CALL LV_SORT (ivcord, nlev, rlevel, iret)
       C
       C
       DO j = 1, nlev
         CALL ST_INCH (INT(rlevel(j)), glevel, iret)
         C
         C* Read edr grid.
         C
         gvcord = 'HGHT'
         gfunc = 'EDR'
         CALL DG_GRID (timfnd, glevel, gvcord, gfunc, pfunc, edr,
+ igx, igy, time, level, ivcord, parm, iret)
C
C* Mask edr data with echo tops > el.
C
           DO i = 1, maxpts
       IF (etop(i) .eq. RMISSD .or. el(i) .eq. RMISSD) THEN
         edr(i) = RMISSD
       ELSE IF (etop(i) .lt. el(i)) THEN
         edr(i) = 0.0
       END IF
     END DO
```

Figure 12C shows the subsequent mask - that is, the FL250 EDR resulting from masking the data shown in Figure 12A with the data of Figure 12B. The results are grids of the areas of active convective turbulence. As can be seen, there are areas of strong convection across southeastern Missouri and northern Iowa. There is some convection over northeastern Iowa, but the VVSTORMSE component identifies that that turbulence is relatively weaker. As such, the DSEE may be able to facilitate aircraft navigation over the turbulence in northeastern Iowa, even though there are radar echoes in that area.

In some embodiments, lightning flash density data within identified parameters/above a specified threshold may be used as a mask, as illustrated in Figures 12D and 12E. Figure 12D illustrates lightning flash density per 100 $km^2$ in the 10 minutes prior to 1500 UTC, although other parameters, factors and/or measures may be utilized, depending on the embodiment, for example, lightning data may be determined and/or received and/or processed on a regional, national and/or global scale. In the figure, the lightning flash density appears to be highest over central Illinois. Lightning flash density information may be derived from a variety of sources, including stationary sensors, mobile sensors, satellites, and/or the like. Real-time or near real-time lightning flash or strike data may also be provided via a feed, such as SCHNEIDER ELECTRIC MXVISION WEATHERSENTRY and/or NATIONAL LIGHTNING DETECTION NETWORK data. In some embodiments, the DSEE may utilize real-time lightning detection data and/or data directed to advance warning of impending lightning, including quantifiable parameters such as the time and location of recent strikes and dynamics, such as rate of movement, direction and intensity of the associated storm. In some embodiments, lightning grid data, such as illustrated in Figure 12D, is generated by creating an initial grid of zeros where lightning point data is placed on the grid by rounding the latitude/longitude pairs to the nearest grid point which creates a grid of lightning density, which may then be provided as input to the VVSTORMSE component. In some embodiments, lightning data is generated by creating an initial 3-Dimensional grid of zeros where lightning point data is placed on the 3D grid by rounding the latitude/longitude/altitude triples to the nearest 3D grid point which creates a three dimensional grid of lightning density, which may then be provided as input to the VVSTORMSE component.

Figure 12E illustrates FL250 EDR derived by masking the data of Figure 12A with the Figure 12D lightning density data greater than zero. Note that the areas identified in Figure 12C and 12E are similar, but are not the same. Depending on the embodiment and/or implementation, the DSEE may utilize echo top data, lightning data, or a combination or hybrid to mask the convective turbulence and identify warning areas or zones. In some embodiments, different masking data may be weighted differently (e.g., storm top data 0.30 and lightning flash data 0.70), and in some implementations, the weighting may be configured to be adjusted dynamically, for example, based on real-time weather and/or geo-location data.

Note that not all highlighted areas in Figures 12C and 12E are for severe turbulence (colored red). In some embodiments, DSEE/VVSTORMSE has the ability to discern more detail about the turbulence threat than a simple binary (e.g., yes/no) answer that a radar-only or a lightning-only decision method would provide. The unique combination of observations and forecasts of DSEE/VVSTORMSE provide storm observations into proper context, without requiring user interpretation.

In some embodiments, the DSEE/VVSTORMSE finds the most unstable air parcel and assumes that the parcel has potential instability at the LFC. The DSEE determines if the parcel is moist, and if so, lifts the parcel along the moist adiabat (moist lifting line). Such implementations allow for determination of interrelated factors, for example, knowing how high the parcel is lifted (e.g., to the next level) can be used to determine the moisture content and temperature based on the interrelationship. If the parcel is not moist, the EDR may, in some implementations, be set to null, although in some embodiments, if the parcel is not moist, the parcel may be raised along the dry adiabat (or dry lifting line). The DSEE may compare lifted temperature to the environmental temperature to determine a buoyant acceleration. The DSEE may utilize the acceleration and vertical velocity at the base of the layer to identify the vertical velocity at the top of the layer, and may compute the updraft EDR based on the updraft speed.

The DSEE, in some embodiments, determines the downdraft EDR based on the maximum value of the downdraft (e.g., maximum downdraft velocity). In some implementations, the DSEE begins at the freezing level (i.e., the level in atmosphere where temp is zero degrees Celsius) and accelerates (e.g., via linear interpolation from freezing level to the surface level) until the maximum velocity at the level of the ground.

The DSEE utilizes updraft and/or downdraft parameters (i.e., velocities) to compute EDRS. In some embodiments, for example, if downdraft velocity is greater than updraft velocity at a given point, the downdraft velocity is used to determine the EDR for the point. In some embodiments of the DSEE/VVSTORMSE, if a parcel in a layer is warmer than its environment, it gets accelerated upward, and that acceleration/velocity used to compute EDR. In some implementations, the DSEE utilizes vertical temperature change in determining the EDR, while further implementations also utilize horizontal temperature changes.

Figure 13 provides an exemplary logic flow diagram illustrating storm EDR determination and masking for an embodiment of the DSEE and/or VVSTORMSE component. For each parcel 1330 (the parameters of which may be previously specified or may dynamically configured for a particular user or implementation), a binary determination of moist is made 1332 and if not, the EDR set to null. If the parcel is moist 1332, and if the lifted condensation level pressure is greater than the current layer pressure level 1334, the parcel temperature 1336 and environmental temperature 1338 are determined. The below example code fragment illustrates parcel temperature determination at a particular level on a specified moist adiabat:

Figure 13 provides and exemplary logic flow diagram illustrating storm EDR determination and masking for an embodiment of the DSEE and/or VVSTORMSE component. For each parcel 1330 (the parameters of which may be previously specified or may dynamically configured for a particular user or implementation), a binary determination of moist is made 1332 and if not, the EDR set to null. If the parcel is moist 1332, and if the lifted condensation level pressure is greater than the current layer pressure level 1334, the parcel temperature 1336 and environmental temperature 1338 are determined. The below example code fragment illustrates parcel temperature determination at a particular level on a specified moist adiabat:

```
C-----------------------------------------------------------------
         IF (ERMISS (thte).or. ERMISS (pres)
   + .or. ERMISS (tguess) .or. (thte .le. 0.)
   + .or. (pres .le. 0) .or. (tguess .lt. 0.) ) THEN
             PR_TMST = RMISSD
             RETURN
         END IF
         C
         C* Move tguess into another variable.
         C
         tg = tguess
         C
         C* If TGUESS is passed as 0. it is computed from a specified scheme.
         C
```

```
        IF (tg .eq. 0.) tg =
   * (thte - .5 * (MAX (thte-270., 0.) ) ** 1.05)
   * *(pres / 1000.) ** .2
   C
   C* Set convergence and initial guess in degrees C.
   C
        epsi = .01
        tgnu = PR_TMKC (tg)
        C
        C* Set a limit of 100 iterations. Compute TENU, TENUP, the
        C* THTE's at, one degree above the guess temperature.
        C
        DO i = 1, 100
          tgnup = tgnu + 1.
          tenu = PR_THTE (pres, tgnu, tgnu)
          tenup = PR_THTE (pres, tgnup, tgnup)
          C
          C* Check that the THTE's exist.
          C
          IF ((ERMISS (tenu) ) .or. (ERMISS (tenup))) THEN
              PR_TMST = RMISSD
              RETURN
          END IF
          C
          C* Compute the correction, DELTG; return on convergence.
          C
          cor = (thte - tenu ) / (tenup - tenu)
          tgnu = tgnu + cor
          IF ((cor .lt. epsi) .and. (-cor .lt. epsi)) THEN
              PR_TMST = PR_TMCK (tgnu)
              RETURN
          END IF
        END DO
        C
        C* Failed to converge - return missing.
        C
        PR_TMST = RMISSD
        RETURN
        END
```

The DSEE may determine the difference between the parcel temperature and the environment temperature 1340 and determines the vertical acceleration 1344 (e.g., based on the layer thickness, temperature difference, environmental temperature, gravitational constant, and/or the like). If the parcel is moist 1332, and if the lifted condensation level pressure is not greater than the current layer pressure level 1334, the vertical acceleration is set to zero 1335. The vertical velocity at the top of the layer is determined 1348 (e.g., based on the acceleration and the base vertical velocity) and the mean upward vertical velocity for the parcel is determined 1350 (e.g., based on the average of the base and top vertical velocities). The mean vertical velocity may then be utilized to determine the updraft EDR 1352 for that layer/parcel. The actual downward vertical velocity is determined 1354 (e.g., based on the freezing level and maximum downward vertical velocity) and the downdraft EDR determined 1358 for that layer/parcel. The DSEE determines the overall EDR 1358 from the updraft and downdraft determinations, for example, in some implementations, the larger of the updraft EDR and downdraft EDR.

The DSEE may then retrieve and/or receive masking data 1371, such as radar echo top data and/or lightning flash density data. In the radar echo top data implementation, for each layer (point), if the echo top is less than the equilibrium level 1373, the EDR is masked 1375 (e.g., set to zero). If the echo top is not less than the equilibrium level 1373, the EDR is unchanged 1377.

Figure 14 provides an exemplary logic flow diagram illustrating aspects of a VVSTORMSE component operation for an embodiment of the DSEE. For each parcel 1430 (the parameters of which may be previously specified or may dynamically configured for a particular user or implementation), a moist determination is made 1432 and if not, the EDR set to null. If the parcel is moist 1432, and if the lifted condensation level pressure is not greater than the current layer pressure level 1434, the vertical acceleration is set to zero 1435. If the parcel is moist 1432, and if the lifted condensation level pressure is greater than the current layer pressure level 1434, the parcel temperature is determined 1436 and environmental temperature is determined 1438, along with the difference between them 1440. As a quality control, if the determined difference is not within parameters 1442, the vertical acceleration is set to zero 1435. If the determined difference is within parameters 1442, the vertical acceleration is determined 1444. If the vertical acceleration is negative 1446, the vertical velocity at the top is set to zero 1447. If the vertical acceleration is not negative 1446, the vertical velocity at the top of the layer is determined 1448 and the mean upward vertical velocity is determined 1450. The mean vertical velocity may then be utilized to determine the updraft EDR 1452. The actual downward vertical velocity is determined 1454 and the downdraft EDR is determined 1458, and the overall EDR is determined 1458. The EDR data may then be masked by echo top data, lightning flash density data, and/or storm overshoot data 1469.

Figure 15 illustrates an embodiment of the DSEE's integration component. Beginning with weather, turbulence, lightning, radar, satellite, terrain, model, sensor, and/or like data input 1501, which may, in some implementations, provide the DSEE with four-dimensional grid points (three-dimensional space plus time), temperature, winds, humidity, topography, current turbulent conditions, lightning data, radar data, satellite data, model data, historical conditions, and/or the like, the DSEE may, in some embodiments, first process the input through a mountain wave turbulence (MWAVE) component. The non-dimensional mountain wave amplitude ($\hat{a}_{mv}$) 1502 and computes the mountain top wave drag 1503. The following code fragment shows one embodiment of a methodology for such processing:

```
C
    C* a is the non-dimensional wave amplitude (at mountain top)
    C
    a (i,m,n) = stab0*h(m,n)/spd0
    h0 (m,n) = a(i,m,n)
    C
    C* ddrct is the wind and mountain top wind direction difference
    C
    ddrct = ABS(drct-drct0(m,n))
    IF ((ddrct .lt. 90.0) .or. (ddrct .gt. 270.0)) THEN
    C
    C* a above the mountain top is adjusted for stability, wind,
    C* and density changes.
    C
    a (i,m,n) = stab*h(m,n)/spd/COS(ddrct*DTR)*
    + SQRT(pnu0(m,n)/(pmodel*stab*spd))
    ELSE
    a (i,m,n) = 0.0
    END IF
    C
    C* maximum a is 2.5
    C
    IF (a(i,m,n) .gt. 2.5) a(i,m,n) = 2.5
    C
    C* Find max 'a' below h0max.
    C
    IF (11 .lt. nlyrs) THEN
    amax0 = a(ll,m,n) - (zsdg(ll,m,n)-h0max)/
    + (zsdg(ll,m,n)-zsdg(ll+1,m,n))*
    + (a(ll,m,n)-a(ll+1,m,n))
    111 = 11
    DO i = 11,1,-1
   IF ((a (i,m,n) .ne. RMISSD) and.
   + (a(i,m,n) .gt. amax0)*) THEN
     111 = i-1
     amax0 = a(i,m,n)
   END IF
   END DO
    C
    C* 'a' is increased at all levels below max 'a'.
    C
    DO i = 111,1,-1
   IF (a (i,m,n) .ne. RMISSD) THEN
     a (i,m,n) = amax0
     enhc (i,m,n) = 1.0
```

```
   END IF
   END DO
   END IF
    C
    C* Find .75 vertical wavelength (and 1.75, 2.75, 3.75).
    C
    zrefl = (nn + .75)*lambda(m,n) + elv(m,n)
    11 = 1
    DO i = 1,nlyrs
IF (zsdg(i,m,n) .lt. zrefl) ll = i
END DO
IF (11 .lt. nlyrs) THEN
ar = a(ll,m,n) - (zsdg(ll,m,n)-zrefl)/
+ (zsdg(ll,m,n)-zsdg(ll+1,m,n))*
+ (a(ll,m,n)-a(ll+1,m,n))
    C
    C* Find .50 vertical wavelength (and 1.50, 2.50, 3.75).
    C
    zhalf = (nn + .50)*lambda(m,n) + elv(m,n)
    111 = 1
    DO i = 1,ll
IF (zsdg(i,m,n) .lt. zhalf) lll = i
END DO
ahalf = a(lll,m,n) - (zsdg(lll,m,n)-zhalf)/
+ (zsdg(lll,m,n)-zsdg(lll+1,m,n))*
+ (a(lll,m,n)-a(lll+1,m,n))
    C
    C* 'a' is increased by reflected 'a' if layered
    C* favorably.
    C
    IF ((ahalf .lt. ar ).and.( ahalf .lt. 0.85 ) )THEN
rcoeff = (ar-ahalf)**2/(ar+ahalf)**2
refl = rcoeff*ar
havrfl = .true.
DO i = 11,1,-1
IF ((a(i,m,n) .ne. RMISSD) .and.
+ (havrfl)) THEN
     arfl = a(i,m,n) + refl
     a (i,m,n) = arfl
     IF (a(i,m,n) .gt. 2.5) a(i,m,n) = 2.5
        enhc (i,m,n) = 1.0
END IF
END DO
    C
    C* Compute mountain top wave drag
    C
    drag (m,n) = PI/4.0*h(m,n)*pnu0(m,n)
```

In some embodiments of the DSEE, output obtained from the MWAVE component may then be directed into an integrated turbulence (INTTURB) component, which computes upper level non-dimensional gravity wave amplitude ($\hat{a}_{ul}$) 1504, and sum $\hat{a}_{mv}$ and $\hat{a}_{ul}$ into ($\hat{a}$) to determine buoyant turbulent kinetic energy ($TKE_{buoy}$) 1505. If $\hat{a}$ is greater than 1 1506, then $TKE_{buoy} = TKE_{mv} + TKE_{ul\text{-}buoy}$ 1507. Otherwise, $TKE_{buoy} = 0$ 1508. If $\hat{a}$ greater than $\hat{a}_{min}$ 1509, then $TKE = TKE_{ul\text{-}wshr}$ 1510. The boundary layer eddy dissipation rate (EDR) is computed 1511 and if $EDR_{bl}$ is greater than zero and $\hat{a}_{mv}$ is not enhanced 1512, then the $EDR = EDR_{bl}$ 1513, else the EDR is the $TKE^{1/3}$ 1514.

The following code fragment shows one embodiment of a methodology for processing of the INTTURB:

```
    C* Non-dimensional L-F amplitude is square root of L-F radiation
    C* divided by constant. Constant is for 20km resolution grids
    C* and is proportionally scaled to resolution of current grid.
    C
    ahatlf = SQRT(ABS(lfrad)/cc*gdd/20000.)
    C
```

```
   C
   C* ahat is sum of If and mw ahats
   C
   ahat = ahatlf + ahatmw(i)
   C
   C* Maximum ahat = 2.5
   C
   IF (ahat .gt. 2.5) ahat = 2.5
   IF (ahat .gt. 1.0) THEN
   C
   C* mountain wave tke is proportional to drag.
   C
   tkemw = drag(i)*.0004
   C
   C* Reduce mw drag above this level
   C
   IF (nhnc(i) .eq. 0.0)
+ drag(i) = drag(i)*((2.5-ahat)/1.5)
tkebuoy = kh*(ahat-1.0)*bvsq(i) + km*wshrsq(i)
+ + tkemw
IF (ahat .lt. 1.0) THEN tkebuoy = 0.0
tke = km*wshrsq(i)*(1.0 + SQRT(rich)*ahat)**2
+ -kh*bvsq(i)
   C
   C* Compute layer stability and wind shear
   C
   thtamn = (thta + sfcthta)/2.0
   bvsq = GRAVTY*thtadf/zdf/thtamn
   udf = u - sfcu
   vdf = v - sfcv
   wshrsq = (udf*udf + vdf*vdf )/zdf/zdf
   C
   C* Compute tke with equation
   C
   tke = km*wshrsq - kh*bvsq
   C
   C* If the < 0, we've reach top of boundary layer. Set topbl = T
   C
   IF (tke .lt. 0.0) THEN
edrbl = 0.0
topbl = .true.
ELSE
edrbl = tke**.333
END IF
```

In some embodiments, output obtained from the MWAVE and INTTURB components may then be processed through a VVSTORMSE integration component. For each parcel 1530 a moist determination is made 1532 and if not, the EDR set to null. If the parcel is moist 1532, and if the lifted condensation level pressure is greater than the current layer pressure level 1534, the difference between the parcel temperature and environmental temperature 1540 and vertical acceleration 1544 are determined (e.g., based on the layer thickness, temperature difference, environmental temperature, gravitational constant, and/or the like). If the parcel is moist 1532, and if the lifted condensation level pressure is not greater than the current layer pressure level 1534, the vertical acceleration is set to zero 1535. The vertical velocity at the top of the layer is determined 1548 and the mean upward vertical velocity is determined 1550. The mean vertical velocity may then be utilized to determine the updraft EDR 1552. The actual downward vertical velocity is determined 1554 and the downdraft EDR determined 1558. The overall EDR is determined 1558 for the layer/parcel (e.g., based on updraft and downdraft determinations), and the mask/masking data applied 1559. EDRs from INTURB and VVSTORMSE components are combined/integrated and output 1560. In some embodiments, the EDRs may be summed. In some embodiments, the EDRs are converted to TKE.

Figure 16 provides an illustrative overview of features of an implementation of the DSEE. As shown in the figure, at time = 0, no convective storms have developed in the current path of the aircraft. At time = 1, a cumulus tower develops enough to trigger a lightning strike and is processed by the DSEE/VVSTORMSE to identify possible threat area. At time = 2, the DSEE/VVSTORMSE identifies that the storm is increasing, identifying threat areas. Based on this, the aircraft is redirected along a path with fewer identified hazards.

Embodiments of the DSEE and/or the VVSTORMSE component(s) provide a granular view of the vertical distribution of convective turbulence. In some embodiments, the DSEE is configured for flight following. Some embodiments of DSEE combine determinations of non-convective turbulence forecasts and convective turbulence into a nowcast that may be utilized in the variety of ways, including those discussed herein with respect to flight path determination and other aviation and weather-dependent activities and applications. Some implementations of the DSEE integrate forecast turbulence and storm turbulence to provide comprehensive flight planning, flight following, and/or comprehensive dynamic real-time rerouting for all altitudes. DSEE flight following implementations may provide up-to-date and/or short term forecasts for aircraft in a given area. In some implementations, alerts/updates may be provided to aircraft directly, and/or to dispatchers or other personnel. In some embodiments, the DSEE may be configured to integrate with management suite or application, such as SCHEIDER ELECTRIC AVIATIONSENTRY.

In some embodiments, the DSEE, for example utilizing a VVSTORMSE component, provides a 0-1 hour turbulence nowcast/forecast based on physical relationships rather than solely based on observational/statistical relationships. The DSEE and/or VVSTORMSE component is configured with flexible input variables, allowing for elegant adaptation to include indicators of current convection, and for and exploitation of the same, rather than requiring a complete recalibration if a new variable is identified.

For example, in some embodiments of the DSEE, the magnitude of the united effects of a conditionally unstable lapse rate and a parcel with a LFC are elegantly combined in a diagnostic called convective available potential energy (CAPE). The DSEE/VVSTORMSE (VVSTORMSE) may determine (i.e., compute) CAPE by lifting a parcel along the appropriate dry and moist adiabats. If, by lifting, the parcel can become warmer than its environment, the parcel could reach its LFC. Then the parcel will accelerate upward by buoyant forces until it becomes cooler than its environment again - that level is called the Equilibrium Level (EL). The amount of buoyant acceleration at any level is proportional to the temperature difference between the lifted parcel and the environment. Using the determined parcel acceleration, the VVSTORMSE can determine the updraft velocity ($w$) at any level in a potential storm. In some embodiments, the integrated value of the buoyant potential energy between the LFC and the EL is the CAPE and is equal to the maximum updraft velocity squared over two (($w_{max}$^2)/2), where the maximum updraft velocity ($w_{max}$) is a measure of the potential strength of a thunderstorm.

In some embodiments, a typical potentially unstable parcel has to be forcefully lifted to its LFC. The integrated amount of force similarly computed as CAPE between the original parcel level and the LFC is called the convective inhibition (CIN). CIN is a measure of the strength of the "cap," the stable layer above the parcel level that keeps the parcel at its original level. The energy of forced lifting the parcel needs to be greater than the CIN in order for the parcel to reach its LFC. This process may be referred to as "breaking" the cap. VVSTORMSE identifies zones of forced upward lifting. If parcels in those zones can be lifted to their LFC, then VVSTORMSE continues tracking the parcel until it returns to zero somewhere above the EL. The maximum upward vertical velocity is a measure of the storm's potential strength. The level where the upward velocity returns to zero is a measure of its potential top. If parcels cannot reach their LFC or if parcels have no LFC, then no thunderstorms can form. Maximum vertical speeds that result from forced lifting in current observed or numerical model forecast diagnostics are only about 10 cm/s. These motions would be sufficient if CIN values were zero. However, CIN values can be 100 j/kg or more in an otherwise favorable environment. Even if CIN = 0.5 j/kg, the forced vertical speed to overcome that value would be 1 m/s. As such, traditional numerical model diagnostic vertical motions may be inadequately low.

In some embodiments, VVSTORMSE utilizes numerical model data to determine vertical motion for lifting from three diagnostics: the model's own omega field, vertical motion arising from divergence of frontogenesis vectors, and vertical motion arising from Eckman pumping. The model's omega provides sources of vertical motion from processes such as temperature advection and terrain elevation changes. Frontogenesis vectors contain divergence, vorticity, and deformation forcing information so are a complete kinematic description of the vertical motion field. Eckman pumping describes the frictional forcing of vertical motion at the top of the boundary layer and is proportional to the vorticity.

In some embodiments, VVSTORMSE may utilize a framework for convective triggers in numerical models. In some embodiments, VVSTORMSE inflates the maximum diagnostic ($w$) by:

$$w = w_m * \delta x / L * (1 - z_{agl} / H)$$

where $w_m$ is the diagnostic vertical velocity, $\delta x$ is the model grid resolution, $L$ = the grid resolution need to explicitly resolve the vertical motion (e.g., 1 km), $z_{agl}$ is the height above ground, and $H$ = is the threshold height (e.g., 4000 m). This inflated vertical velocity is the maximum possible with the given environmental conditions. The formula shows that the higher the grid resolution (lower $\delta x$), the less the inflation. Also, the inflation effect decreases the higher above ground. For example, using a 40 km resolution, a parcel 1 km above ground will have a parameterized vertical velocity 30 (40 × 0.75) times that computed by a diagnostic. With this formula, a parameterized vertical velocity can be computed at any grid resolution and at every grid level. In some embodiments, at any grid point, a diagnostic vertical velocity may first be determined/computed at the lowest level above ground. If, at the inflated vertical velocity, a parcel reaches its LFC, VVSTORMSE may continue to track the parcel's vertical velocity as it rises buoyantly. If there is a more unstable parcel aloft or if the forced vertical velocity is higher aloft, then the process may begin again at the new level.

In a horizontal temperature gradient parcels have an additional instability that arises from an inertial imbalance. This instability reduces CINs and increases CAPEs. Since this additional instability is a function of the square of the temperature gradient, it may be most prominent in frontal zones where thunderstorms are likely to be forced. In some implementations, VVSTORMSE adjusts the layer stability for this effect before determining the parcel's acceleration.

In some embodiments, parcel buoyancy is reduced by an elegant bulk entrainment function in which the parcel's wet bulb potential temperature is diluted by a 1% of the environment's wet bulb potential temperature for a given rise (e.g., every 100 m rise) of the parcel.

Once thunderstorms form, they may continue to exist even without external lifting mechanisms by creating internal gust fronts that lift parcels into their updrafts. Utilizing mass conservation, the speed of the lifted parcel at the updraft base ($w_b$) is proportional to the maximum updraft speed by the ratio of the densities at the updraft maximum and at the lifted parcel level. If a forecast updraft exists and the difference between model forecast times is below a set level (e.g., three hours or less), for the next model forecast time VVSTORMSE predicts where that updraft base will be using a combinatorial storm motion forecasting techniques. The parcel at that new location is lifted at the $w_b$ speed. If it is able to reach its LFC, then VVSTORMSE may create a new updraft. In addition, VVSTORMSE may simulate downdraft effects by suppressing the new forecast time's forced lifting at the storm's old location and at all points between the old and new locations. Such an implementation allows VVSTORMSE to predict a storm's location in an area without any lift evident from the model diagnostics.

In some embodiments, the DSEE allows for integration of observations from a variety of sources, and projection of observations into a short or very short specified period in the future (e.g., a one hour nowcast projection). The DSEE can provide/display the spread of EDR turbulence for the specified period nowcast, and can be updated based on a sub-periodic basis (e.g., every 10 minutes). In some embodiments, the DSEE provides altitude-specific nowcasts.

In some embodiments, as illustrated in Figures 17A-H, to determine a nowcast, the DSEE starts with a turbulence initial estimate (or first guess), based on non-convective turbulence forecast 1702 (e.g., clear-air, mountain wave, and/or boundary layer turbulence, as determined by INTTURB and/or the like, as discussed above; example display/output 1702A). The DSEE then determines a convective turbulence forecast 1704 (e.g., based on convection, updrafts, downdrafts, and/or overshooting tops, as determined by VVSTORMSE and/or like, as discussed above; example display/output 1704A). The DSEE determines/receives lightning data 1706 (example display/output 1706A), and EDR grid points of the convective turbulence forecast are masked by the lightning data 1708 (as discussed above; example display/output 1708A). The below code fragment illustrates exemplary creation of a convective turbulence nowcast (e.g., via a LTG2EDR component or subcomponent 2051) based on lightning flash density and forecast model EDR:

```
C
C* Open lightning file and read flash density.
C
   CALL DG_NFIL (gdlfile, ", iret)
   IF (iret .ne. 0 ) THEN
     write (6,*) 'Unable to process lightning file input'
     STOP
   END IF
   CALL DG_NDTM (fhltg, iret)
   grdnam = ' '
   gpack = 'NONE'
   CALL DG_NTIM (.false., .false., timel, nxttm, ier)
   CALL TG_DUAL (timel, timfnd, ier)
   gvcord = 'NONE'
    glevel = '0'
   gfunc = 'LTG'
   CALL DG_GRID (timfnd, glevel, gvcord, gfunc, pfunc, ltng,
  + igx, igy, time, level, ivcord, parm, iret)
    maxpts = igx*igy
    DO i = 1, maxpts
      ltng0(i) = ltng(i)
    END DO
   gvcord = 'NONE'
    glevel = '0'
```

```
  gfunc = 'LATR'
  CALL DG_GRID (timfnd, glevel, gvcord, gfunc, pfunc, latr,
+ igx, igy, time, level, ivcord, parm, iret)
  gvcord = 'NONE'
   glevel = '0'
  gfunc = 'LONR'
  CALL DG_GRID (timfnd, glevel, gvcord, gfunc, pfunc, lonr,
+ igx, igy, time, level, ivcord, parm, iret)
C
C* Open edr file and read storm velocities.
C
  CALL DG_NFIL (gdefile, gdout, iret)
  IF (iret .ne. 0) THEN
    write (6,*) 'Unable to process edr file input'
    STOP
  END IF
  CALL DG_NDTM (fhedr, iret)
  grdnam = ' '
  gpack = 'NONE'
  CALL DG_NTIM (.false., .false., time, nxttm, ier)
  CALL TG_DUAL (time, timfnd, ier)
  gvcord = 'NONE'
   glevel = '0'
  gfunc = 'USTM'
  CALL DG_GRID (timfnd, glevel, gvcord, gfunc, pfunc, ustm,
+ igx, igy, time, level, ivcord, parm, iret)
  gfunc = 'VSTM'
  CALL DG_GRID (timfnd, glevel, gvcord, gfunc, pfunc, vstm,
+ igx, igy, time, level, ivcord, parm, iret)
  gfunc = 'UPRG'
  CALL DG_GRID (timfnd, glevel, gvcord, gfunc, pfunc, uprop,
+ igx, igy, time, level, ivcord, parm, iret)
  gfunc = 'VPRG'
  CALL DG_GRID (timfnd, glevel, gvcord, gfunc, pfunc, vprop,
+ igx, igy, time, level, ivcord, parm, iret)
C
C* Forecast future lightning to one hour, 5 min.
C
   DO i = 1,maxpts
   C
   C* Use advecting storm velocity
   C
     IF (ltng0(i) .gt. 0.1) THEN
       lt0 = latr(i) + vstm(i)*300./mperrad
       ln0 = lonr(i) + ustm(i)*300./mperrad/COS(lt0)
       DO k = 1,6
         lt1 = lt0 + vstm(i)*600./mperrad
         ln1 = ln0 + ustm(i)*600./mperrad/COS(lt0)
         latmn = MIN (lt0, lt1)
         latmx = MAX (lt0, lt1)
         lonmn = MIN (ln0, ln1)
         lonmx = MAX (ln0, ln1)
         DO n = 1, maxpts
           IF (latr(n).ge.latmn .and. latr(n).le.latmx) THEN
             IF (lonr(n).ge.lonmn .and. lonr(n).le.lonmx) THEN
               IF (ltng(n) .lt. Itng0(i)) ltng(n) = ltng0(i)
             END IF
           END IF
         END DO
         lt0 = lt1
         ln0 = ln1
       END DO
       C
```

```
          C* Use propagating storm velocity
          C
          lt0 = latr(i) + vprop(i)*300./mperrad
          ln0 = lonr(i) + uprop(i)*300./mperrad/COS(lt0)
          DO k = 1,6
            lt1 = lt0 + vprop(i)*600./mperrad
            ln1 = ln0 + uprop(i)*600./mperrad/COS(lt0)
            latmn = MIN (lt0, lt1)
            latmx = MAX (lt0, lt1)
            lonmn = MIN (ln0, ln1)
            lonmx = MAX (ln0, ln1)
            DO n = 1, maxpts
              IF (latr(n).ge.latmn .and. latr(n).le.latmx) THEN
                IF (lonr(n).ge.lonmn .and. lonr(n).le.lonmx) THEN
                  IF (ltng(n) .lt. ltng0(i)) ltng(n) = ltng0(i)
                END IF
              END IF
            END DO
            lt0 = lt1
            ln0 = ln1
          END DO
        END IF
      END DO
     gvcord = 'HGHT'
     CALL LV_CORD (gvcord, sparm, ivcord, iret)
     C
     C* Find levels in model.
     C
     CALL DG_GLEV (1, time, ivcord, LLMXLV,
   + iflev, nlev, iret)
     DO j = 1, nlev
        rlevel (j) = FLOAT (iflev (1,j))
     END DO
     CALL LV_SORT (ivcord, nlev, rlevel, iret)
     C
     C
     DO j = 1, nlev
       CALL ST_INCH (INT(rlevel(j)), glevel, iret)
       C
       C* Read edr and t grids.
       C
       gvcord = 'HGHT'
       gfunc = 'EDR'
       CALL DG_GRID (timfnd, glevel, gvcord, gfunc, pfunc, edr,
   + igx, igy, time, level, ivcord, parm, iret)
       gvcord = 'HGHT'
       gfunc = 'TMPC'
       CALL DG_GRID (timfnd, glevel, gvcord, gfunc, pfunc, t,
   + igx, igy, time, level, ivcord, parm, iret)
   C
   C* Mask edr data with lightning > 0 or
   C* if lightning is high enough, assign edr as function of
   C* lightning.
   C
       DO i = 1, maxpts
          IF (ltng(i) .eq. RMISSD) THEN
            edr(i) = RMISSD
          ELSE IF (ltng(i) .le. 0.1) THEN
            edr(i) = 0.0
          ELSE
            wlog = LOG10(ltng(i))*.56
            IF (t(i) .gt. -40.0) THEN
              wwnd = (10**wlog + 7.0)*((15.0 - t(i))/55.0)
```

```
          ELSE
            wwnd = (10**wlog + 7.0)*((t(i) + 60.0)/20.0)
          END IF
          IF (wwnd .lt. 0.0) wwnd = 0.0
          IF (wwnd .gt. 10.0) THEN
            edrltg = (.059+.009*(wwnd-10.0))**.333
          ELSE
            edrltg = (.0059*wwnd)**.333
          END IF
          edr(i) = MAX (edr(i),edrltg)
        END IF
      END DO
      ifl(1) = INT(rlevel(j))
      ifl(2) = -1
     parm = 'edr'
     CALL DG_NWDT (edr, timel, ifl, ivcord, parm, ighdr,
+ gpack, .true., iret)
      IF (iret .eq. 0) write (6,*) timel(1), parm, 'at',
+ ifl(1), 'grid write successful'
    END DO
    C*
   END
```

The DSEE then projects 1710 each EDR grid point by the specified nowcast term or period (e.g., 60 minutes). This projection can comprise moving each EDR grid point by the Storm Advecting Wind and the Storm Propagating Vector based on the term or period. The Storm Advecting Wind is the vertically smoothed wind at the freezing level. The Storm Propagating Vector (a measure of heat and moisture in the atmosphere) is the advecting wind with deviations along Θe gradient vector with magnitude proportional to the Θe gradient magnitude and the maximum potential updraft, such that the more unstable the air mass, the greater the deviation. For example, if the nowcast were 1 hour, a grid point would be propagated 60 minutes for the Storm Advecting Wind and 60 minutes by the Storm Propagating Vector (example display/output 1710A). In some embodiments, each forecast point is the highest lightning count expected. The DSEE then integrates the non-convective turbulence and the masked convective turbulence to provide a turbulence initial estimate or first guess 1712 for the given area and time (example display/output 1712A).

In some embodiments, the DSEE adjusts/modifies the initial estimate/first guess with or by received turbulence observations 1714 from a specified prior point or interval (e.g., 60 minutes prior, 30 minutes prior, 15 minutes prior, 30-45 minutes prior, etc.). For example, the initial estimate or first guess can be modified by turbulence observations received 60 minutes prior to observation time. Turbulence observations may be *in situ* EDR observations (e.g., from instruments/sensors in a plane), radar, satellite, PIREPs, and/or any other such source that could be converted to EDR and specified for a particular location and altitude.

The DSEE can receive/determine EDR observations 1714 and assimilate/integrate EDR observations into the initial estimate/first guess turbulence 1716, for example, via 3-dimensional statistical interpolation as illustrated in the code fragment presented in the discussion of Figure 18, below. In some embodiments, preliminary/initial estimate/first guess grid points are modified/altered by an amount of the first guess/observation difference inversely weighted by the square of the distance between the grid point and the observation, and/or the like. The DSEE can utilize a horizontal area of influence, such as an ellipse along the wind direction with eccentricity proportional to the wind speed in the horizontal direction (as illustrated by the example display/output 1714A, for a single EDR observation (approximately 0.75 EDR)), and the area of influence (here, elliptical) could be, for example, a 200 km circular radius (it is to be understood that this is exemplary, and that other shapes, areas, and measures are contemplated). Vertically, EDR observations influence grid points within a specified range, such as 3000 feet. In the example shown, the shape of the ellipse is along the wind direction (from South South West), with the eccentricity proportional to the wind speed (i.e., the faster the speed the thinner the ellipse). Figure 17H provides an example nowcast with a turbulence observation integrated (display/output 1716A) - for clarity, the provided display does not show convective turbulence features.

In some embodiments, the DSEE assimilates/integrates PIREPs similar to EDR observations, while providing additional quality control. The DSEE can receive and decode raw PIREPS. The DSEE can assign subjective PIREP intensity a specified EDR, such as (by way of non-limiting example only): Light - 0.15; Light-moderate - 0.25; Moderate - 0.35; Moderate-severe - 0.45; Severe - 0.55; Extreme - 0.75.

In some embodiments, the DSEE can adjust EDR(s) associated with a PIREP by aircraft turbulence response factor (*A*) to compensate for subjective turbulence across a variety of airframes. In one embodiment, the adjustment may be of the form shown below:

$$EDR_{PIREP} = EDR\left(\frac{A_{B738}}{A_{acft}}\right)^{1/3}$$

where

$$A = \frac{VS}{M}$$

and V is the speed of the aircraft (depending on the embodiment, the actual velocity at a particular time and/or the average cruise velocity of that model of aircraft could be utilized), S is the wing surface area of the aircraft, and M is the mass (again, depending on the embodiment, the mass could be the actual mass of the particular aircraft and/or a specified value, such as the maximum takeoff mass of that model of aircraft.

| $A_{acft}$ - examples: | |
|---|---|
| B738 (Boeing 737-800) | .3650 |
| A345 (Airbus 345) | .2858 |
| GLF5 (Gulfstream 5) | .6443 |
| C172 (Cessna 172) | .9186 |

As can be seen, "severe turbulence" for a Boeing 737-800 would be given greater weight than "severe turbulence" for a Cessna 172. Such embodiments may also have a threshold/cutoff, where only PIREPs with adjusted EDR/first guess errors within specified parameter(s) are assimilated (e.g., PIREPs with adjust EDR/first guess errors greater than 0.1 EDR units of all grid points within 150 km and 3000 feet vertically).

Figures 17I and 17J provide exemplary nowcasts that identify areas with a high probability of severe turbulence (over Florida and Italy, respectively). For each nowcast, aircraft passing through the identified areas subsequently experienced actual turbulence encounters/accidents, illustrating how the DSEE can be utilized to make air travel safer.

Figure 18 illustrates an embodiment of the DSEE turbulence nowcasting feature/component. Beginning with weather, lightning, radar, turbulence sensor, satellite, terrain, model, PIREPs, and/or like data input 1801, which may, in some implementations, provide the DSEE with four-dimensional grid points (three-dimensional space plus time), temperature, winds, humidity, topography, current turbulent conditions, lightning data, radar data, satellite data, model data, historical conditions, and/or the like, the DSEE may, in some embodiments, process the input through a mountain wave turbulence (MWAVE) component. The non-dimensional mountain wave amplitude ($\hat{a}_{mv}$) 1802 and the mountain top wave drag 1803 are determined, as discussed in detail above.

In some embodiments of the DSEE, output obtained from the MWAVE component may then be directed into an integrated turbulence (INTTURB) component, which computes upper level non-dimensional gravity wave amplitude ($\hat{a}_{ul}$) 1804, and sums $\hat{a}_{mv}$ and $\hat{a}_{ul}$ into ($\hat{a}$) to determine buoyant turbulent kinetic energy ($TKE_{buoy}$) 1805. If $\hat{a}$ is greater than 1 1806, then $TKE_{buoy} = TKE_{mv} + TKE_{ul\text{-}buoy}$ 1807. Otherwise, $TKE_{buoy} = 0$ 1808. If $\hat{a}$ greater than $\hat{a}_{min}$ 1809, then $TKE = TKE_{ul\text{-}wshr}$ 1810. The boundary layer eddy dissipation rate (EDR) is computed 1811 and if $EDR_{bl}$ is greater than zero and $\hat{a}_{mv}$ is not enhanced 1812, then the $EDR = EDR_{bl}$ 1813, else the EDR is the $TKE^{1/3}$ 1814.

In some embodiments, output obtained from the MWAVE and INTTURB components may then be processed through a VVSTORMSE integration component. For each parcel 1830 a moist determination is made 1832 and if not, the EDR set to null. If the parcel is moist 1832, and if the lifted condensation level pressure is greater than the current layer pressure level 1834, the difference between the parcel temperature and environmental temperature 1840 and vertical acceleration 1844 are determined (e.g., based on the layer thickness, temperature difference, environmental temperature, gravitational constant, and/or the like). If the parcel is moist 1832, and if the lifted condensation level pressure is not greater than the current layer pressure level 1834, the vertical acceleration is set to zero 1835. The vertical velocity at the top of the layer is determined 1848 and the mean upward vertical velocity is determined 1850. The mean vertical velocity may then be utilized to determine the updraft EDR 1852. The actual downward vertical velocity is determined 1854 and the downdraft EDR determined 1858. The non-convective turbulence and convective turbulence forecasts are determined 1858 for the layer/parcel, and lightning mask/masking data applied to the convective turbulence 1859. The masked convective turbulence is then projected over the nowcast range/period 1870, as discussed above, and the non-convective turbulence and projected masked convective turbulence are integrated 1872. An initial estimate or first guess for a nowcast can be based on the integrated non-convective turbulence and projected masked convective turbulence 1874. Turbulence observations are received 1876, and the integrated non-convective turbulence and projected masked convective turbulence initial estimate or first guess is transformed based on turbulence observations 1878. The below code fragment illustrates assimilation of *in situ* EDR/turbulence observations according to one embodiment (for example, as performed by an EDROBS component 2050):

```
C
C* Get grid file user input.
C
    WRITE (6, 1002)
   READ (5, 999) gdfile
    WRITE (6, 1003)
   READ (5, 999) gdout
    WRITE (6, 1004)
   READ (5, 999) fhour
    WRITE (6, 1005)
   READ (5, 999) insitu
   C
   C* Open insitu file.
   C
    OPEN (1, file = insitu)
    C
    C* Set up for GEMPAK.
    C
   CALL IN_BDTA (iret)
   mode = 1
   CALL GG_INIT (mode, iret)
   CALL DG_INTL (iret)
   C
   C* Open files and process forecast times.
   C
   CALL DG_NFIL (gdfile, gdout, iret)
   IF (iret .ne. 0) THEN
     write (6,*) 'Unable to process file input'
     STOP
   END IF
   CALL DG_NDTM (fhour, iret)
   C*
   grdnam = ' '
   gpack = 'NONE'
   CALL DG_NTIM (.false., .false., time, nxttm, ier)
     CALL TG_DUAL (time, timfnd, ier)
     gvcord = 'NONE'
     gfunc = 'LATR'
      glevel = '0'
 + igx, igy, time, level, nvcord, parm, iret)
     gfunc = 'LONR'
     CALL DG_GRID (timfnd, glevel, gvcord, gfunc, pfunc, lonr,
 + igx, igy, time, level, nvcord, parm, iret)
      maxpts = igx*igy
      C
      C* Find levels in model.
      C
   gvcord = 'HGHT'
   CALL LV_CORD (gvcord, sparm, ivcord, iret)
     CALL DG_GLEV (1, time, ivcord, LLMXLV,
 + iflev, nlev, iret)
     DO j = 1, nlev
        rlevel (j) = FLOAT (iflev (1,j))
     END DO
     CALL LV_SORT (ivcord, nlev, rlevel, iret)
     C
     C
     DO j = 1, nlev
       CALL ST_INCH (INT(rlevel(j)), glevel, iret)
```

```
      C
      C* Read EDR grid.
      C
      gvcord = 'HGHT'
      gfunc = 'EDR'
      CALL DG_GRID (timfnd, glevel, gvcord, gfunc, pfunc, edr,
+ igx, igy, time, level, ivcord, parm, iret)
       DO i = 1, maxpts
         err(i) = 0.0
         nn(i) = 0.0
       END DO
       C
       C* Read aircraft data.
       C
       DO k = 1,2
        READ (1, 998, iostat = io) olat, olon, oalt, odir, ospd,
+ oedr
        DO WHILE (io .eq. 0)
         CALL GTRANS ('M', 'G', 1, olat, olon, gx, gy, iret)
         olat = DTR*olat
         olon = DTR*olon
         oalt = oalt*.3048
         odir = DTR*(odir-270.0)
         ospd = ospd/1.9438
         IF (oedr .lt..10) oedr = 0.0
         C
         C* Find forecast EDR at aircraft location. Find forecast
         C* error.
         C
         CALL GR_INTP (1, gx, gy, 1, igx, igy, edr, fedr, iret)
         otke = oedr**3
         ftke = fedr**3
         etke = otke - ftke
         C
         C* Create search ellipsoid.
         C
         a = 100000. + 1800.*ospd
         b = 10000000000./a
         altpc = 1.0 - ABS(oalt - rlevel(j))/914.4
         C
         C* If forecast grid point is within ellipsoid, adjust grid
         C* point.
         C
         IF (altpc .gt. 0.0) THEN
          DO i = 1, maxpts
             x = mperrad*(lonr(i)-olon)*COS(latr(i))
             y = mperrad*(latr(i)-olat)
             xx = x*COS(odir) + y*SIN(odir)
             yy = x*SIN(odir) + y*COS(odir)
             xyexp = -4.0*((xx/a)**2 + (yy/b)**2)
             IF (xyexp .gt. -4.0) THEN
               err(i) = err(i) + etke*altpc*EXP(xyexp)
               nn(i) = nn(i) + 1
             END IF
           END DO
         END IF
         READ (1, 998, iostat = io) olat, olon, oalt, odir, ospd,
+ oedr
        END DO
        DO i = 1,maxpts
          IF (nn(i) .gt. 0) THEN
            fnn = FLOAT(nn(i))
            tke = edr(i)**3
```

```
            tke = tke + err(i)/fnn
            IF (tke .lt. 0.0) tke = 0.0
            edr(i) = tke**.333
            nn(i) = 0
          END IF
        END DO
        REWIND 1
       END DO
       C
       C* Write new edr grid.
       C
       ifl(1) = INT(rlevel(j))
       ifl(2) = -1
      parm = 'edr'
      CALL DG_NWDT (edr, time, ifl, ivcord, parm, ighdr,
+ gpack, .true., iret)
       IF (iret .eq. 0) write (6,*) time(1), parm, 'at',
+ ifl(1), ' grid write successful'
    END DO
    C*
  END
```

The transformed integrated non-convective turbulence and projected masked convective turbulence are then output as a turbulence nowcast 1880, which can be updated periodically and/or continuously, and/or based on the location of particular aircraft (i.e., updated dynamically as the aircraft progresses along its flight path).

In some embodiments, the DSEE 1901 may be available to provide nowcasts to aircraft 1902, air traffic controllers 1903, flight planning tools and software 1904a, third party applications 1905 that incorporate turbulence nowcast/feed, and the like. Figure 19 illustrates that in some embodiments, PIREPS and/or sensor data of aircraft in real-time turbulence conditions 1904 may be sent to the DSEE and utilized in providing nowcasts. In some embodiments, an array or pluarlity of sensors, local and/or remote, may be periodically polled by the aircraft itself, directly by the DSEE, and/or the like. The polled plurality or array of sensors may include, for example, sensors for measuring altitude, location, heading, speed, pitch, temperature, acceleration, barometric pressure, fuel consumption, fuel remaining for flight, number of passengers, aircraft weight, and/or the like. As used herein, location can refer to temporal (time) location, geospatial (lat, lon, alt) location, heading, speed, and/or the like.

Similarly, in some embodiments of the disclosure, additional/other sources of input may be weather stations 1920, satellites 1921 and/or other sources/sensors, which may provide radar data, lightning data, satellite data, and/or numerical weather forecast model data 1906 to the DSEE. In some embodiments of the DSEE, additional/other sources of input may be topological data 1908a which may provide terrain characteristic data 1905a to the DSEE. In some embodiments of the DSEE, the receipt of this input may occur prior to requests/alerts to or for turbulence nowcasting by the DSEE. In some embodiments of the DSEE, the receipt of this input may be ongoing during requests to the DSEE for dynamic turbulence forecasting and/or nowcasting. In some embodiments of the DSEE, receipt of input may be both before requests to the DSEE for turbulence nowcasting and ongoing during nowcasting. In some embodiments, an aircraft 1902 may request localized nowcast turbulence data 1907, an air traffic control system 1903 may request nowcast regional turbulence data as an updating feed 1909 and/or a nowcast regional turbulence data request 1911, a flight-planning tool or software may request nowcast turbulence within a flight path region or along a flight path course 1913. In some embodiments, the DSEE may direct such requests through a turbulence Integration component 1910 where DSEE algorithms and/or components such as MWAVE component, INTTURB component, and/or VVTURB2 component process input into EDR (eddy dissipation rate) values and render them for terminal 1930, standard/high-definition 1931, and/or displays of the like. In some embodiments, the Integration component 1910 may also include or utilize a VVSTORMSE component. In some implementations, a VVSTORMSE component may subsume and/or replace a VVTURB2 component. In some embodiments, the DSEE returns nowcast turbulence map 1908 terminal display to an aircraft, a nowcast regional data feed 1912 to an air traffic controller, a nowcast flight path turbulence 1914 display to flight-planning tool/software, a nowcast turbulence data feed 1915 to a third party application displaying turbulence data, and/or the like.

In some embodiments, the nowcast includes targeted and immediately-actionable information, distinct from a traditional weather forecast. For example, in the context of aviation, the nowcast can be for approximately one hour in the future or less, although it is to be understood that the nowcast may, in some embodiments of the DSEE, be provided for 180 minutes, 150 minutes, 120 minutes, 90 minutes, and/or the like. In some embodiments of the DSEE, the nowcast "observation" time is the time of an input lightning grid file (such as the lightning grid file discussed in relation to Figure 12D). Lightning grid files can be created periodically, for example, every minute, every 2 minutes, every 5 minutes, every 10 minutes, every 15 minutes, every 20 minutes, every 30 minutes, every hour, and/or the like. It is to be understood that periods may be varying and/or non-sequential (e.g., alternating between 5, 10 and 15 minute periods).

The DSEE can receive or determine/generate non-convective and convective turbulence data, as discussed above (e.g., via components/programs, such as INTTURB and VVSTORMSE). The DSEE can determine convective and non-convective turbulence data during normal modelling/processing times, prior to generating a nowcast.

Non-convective turbulence (i.e., clear-air turbulence, mountain wave turbulence, and/or boundary layer turbulence) is determined/calculated, such as is discussed previously in this disclosure (for example, via an INTTURB component).

The potential convective turbulence is determined (e.g., a VVSTORMSE component can compute the potential turbulence from convection). If a potentially unstable parcel is lifted to its LFC, it will accelerate based on temperature differences between the parcel and the environment. The DSEE may then determine/compute the potential upward/updraft vertical velocity at specified altitudes (or every altitude) based on the acceleration (e.g., via a VVSTORMSE component).

The DSEE can convert the potential updraft velocity to potential EDR (based on convective turbulence being correlated to updraft strength), at every altitude from the surface to the model top at specified intervals (e.g., every 1000 ft). The potential turbulence due to downdrafts and above overshooting tops can also be determined (e.g., via a VVSTORMSE component, as discussed previously). Thus, if a convective storm is identified, the DSEE and/or VVSTORMSE output will indicate the turbulence profile of that storm.

The DSEE and/or VVSTORMSE can also compute (at least) two velocities: (1) the storm velocity at which the convective elements will move, and (2) the propagating velocity at which storms will develop. In some embodiments, the storm velocity is the wind near the freezing level. The DSEE determines the propagating velocity, for example, based on the vector sum of the storm velocity and a deviation velocity along a parcel's original level wet-bulb potential temperature gradient. The deviation velocity can be proportional to the magnitude of the wet-bulb potential temperature gradient and the potential maximum updraft velocity. In some embodiments, storms in high wet-bulb potential temperature gradients and/or that have strong updrafts deviate the most from the storm velocity. Examples of storm velocity and propogating veleocity determinations according to some embodiments of the DSEE are provided in the code fragments below.

```
C* Find storm velocity and windex.
C
      nlyrs = nlev - 1
      DO j = 1, nlyrs
        CALL ST_INCH (INT(rlevel(j)),clvl1, iret)
        CALL ST_INCH (INT(rlevel(j+1)),clvl2, iret )
        pbar = (rlevel(j) + rlevel(j+1))/2.0
        IF (pbar .gt. 400.) THEN
          glevel = clvl1
          gvcord = 'PRES'
          gfunc = 'TMPC'
          CALL DG_GRID (timfnd, glevel, gvcord, gfunc, pfunc, t1,
 + igx, igy, time, level, ivcord, parm, iret)
          glevel = clvl2
          CALL DG_GRID (timfnd, glevel, gvcord, gfunc, pfunc, t2,
 + igx, igy, time, level, ivcord, parm, iret)
          glevel = clvl1
          gvcord = 'PRES'
          gfunc = 'HGHT'
          CALL DG_GRID (timfnd, glevel, gvcord, gfunc, pfunc, z1,
 + igx, igy, time, level, ivcord, parm, iret)
          glevel = clvl2
          CALL DG_GRID (timfnd, glevel, gvcord, gfunc, pfunc, z2,
 + igx, igy, time, level, ivcord, parm, iret)
          glevel = clvl2//':'//clvl1
          gvcord = 'PRES'
          gfunc = 'LAV(TMPC)'
          CALL DG_GRID (timfnd, glevel, gvcord, gfunc, pfunc, t,
 + igx, igy, time, level, ivcord, parm, iret)
          gfunc = 'MIXR(LAV(DWPC), LAV(PRES))'
          CALL DG_GRID (timfnd, glevel, gvcord, gfunc, pfunc, mixr,
 + igx, igy, time, level, ivcord, parm, iret)
          gvcord = 'PRES'
```

```
          gfunc = 'UR(VLAV(WIND))'
          CALL DG_GRID (timfnd, glevel, gvcord, gfunc, pfunc, u,
     + igx, igy, time, level, ivcord, parm, iret)
          gfunc = 'VR(VLAV(WIND))'
          CALL DG_GRID (timfnd, glevel, gvcord, gfunc, pfunc, v,
     + igx, igy, time, level, ivcord, parm, iret)
          DO i = 1,maxpts
            IF (.not. havfrzl(i)) THEN
              IF (t1(i) .eq. 0.0 .and. t2(i) .eq. 0.0) THEN
                frzlz(i) = z1(i)
                havfrzl(i) = .true.
              END IF
              IF (t1(i) .gt. 0.0 .and. t2(i) .le. 0.0) THEN
                frzlz(i) = z1(i) - (t2(i)/(t1(i)-t2(i))*
     + (z2(i)-z1(i)))
                havfrzl(i) = .true.
              END IF
              IF (havfrzl(i)) THEN
                mixr0(i) = mixr(i)
                frzlz(i) = frzlz(i) - sfcz(i)
              END IF
            END IF
            tabs = ABS(t(i))
            IF (tabs .lt. 5.0) THEN
              ustm(i) = ustm(i) + (5.0 - tabs)*u(i)
              vstm(i) = vstm(i) + (5.0 - tabs)*v(i)
              tsum(i) = tsum(i) + (5.0 - tabs)
            END IF
          END DO
        END IF
      END DO
      DO i = 1,maxpts
        IF (frzlz(i) .eq. RMISSD .or. sfct(i) .eq. RMISSD .or.
     + sfcr(i) .eq. RMISSD .or. mixr0(i) .eq. RMISSD) THEN
          windex(i) = RMISSD
        ELSE IF (frzlz(i) .lt. 0.0) THEN
          windex(i) = 0.0
        ELSE
          fzkm = frzlz(i)/1000.0
          IF (sfcr(i) .lt. 12.0) THEN
            ratio = sfcr(i)/12.0
          ELSE
            ratio = 1.0
          END IF
          glapse = sfct(i)/fzkm
          arg = fzkm*ratio*(glapse*glapse - 30.0 + sfcr(i) -
     + 2.0*mixr0(i))
          IF (arg .lt. 0.0) THEN
            windex(i) = 0.0
          ELSE
            windex(i) = 2.5*SQRT(arg)
          END IF
        END IF
        IF (tsum(i) .ne. 0.0) THEN
          ustm(i) = ustm(i)/tsum(i)
          vstm(i) = vstm(i)/tsum(i)
        END IF
      END DO
      C
      C* Find surface thte which is also the surface parcel thte.
      C
     DO i = 1, maxpts
       pthte (i) = PR_THTE (sfcp(i), sfct(i), sfctd(i))
```

```
    tlcl = PR_TLCL (sfct(i), sfctd(i))
    plcl (i) = PR_PLCL (sfct(i), sfcp(i), tlcl)
  END DO
  C
  C* Read and compute grids in all layers.
  C
  nlyrs = nlev - 1
  DO j = 1, nlyrs
    CALL ST_INCH (INT(rlevel(j)), clvl1, iret)
    CALL ST_INCH (INT(rlevel(j+1)), clvl2, iret)
    ierr = 0
    pbar = (rlevel(j) + rlevel(j+1))/2.0
    glevel = clvl2//':'//clvl1
    gvcord = 'PRES'
    gfunc = 'LAV(HGHT)'
    CALL DG_GRID (timfnd, glevel, gvcord, gfunc, pfunc, z,
+ igx, igy, time, level, ivcord, parm, iret)
    ierr = iret + ierr
    gvcord = 'PRES'
    gfunc = 'LAV(THTE)'
    CALL DG_GRID (timfnd, glevel, gvcord, gfunc, pfunc, thte,
+ igx, igy, time, level, ivcord, parm, iret)
    ierr = iret + ierr
    gvcord = 'PRES'
    gfunc = 'LAV(THTA)'
    CALL DG_GRID (timfnd, glevel, gvcord, gfunc, pfunc, thta,
+ igx, igy, time, level, ivcord, parm, iret)
    ierr = iret + ierr
    gvcord = 'PRES'
    gfunc = 'LAV(TMPC)'
    CALL DG_GRID (timfnd, glevel, gvcord, gfunc, pfunc, t,
+ igx, igy, time, level, ivcord, parm, iret)
    ierr = iret + ierr
    gvcord = 'PRES'
    gfunc = 'LAV(DWPC)'
    CALL DG_GRID (timfnd, glevel, gvcord, gfunc, pfunc, td,
+ igx, igy, time, level, ivcord, parm, iret)
    ierr = iret + ierr
     gvcord = 'PRES'
     gfunc = '(DDEN(LAV(PRES),LAV(TVRC))'
    CALL DG_GRID (timfnd, glevel, gvcord, gfunc, pfunc, dden,
+ igx, igy, time, level, ivcord, parm, iret)
    ierr = iret + ierr
     gvcord = 'PRES'
     gfunc = 'BVSQ(THTA)'
    CALL DG_GRID (timfnd, glevel, gvcord, gfunc, pfunc, bvsq,
+ igx, igy, time, level, ivcord, parm, iret)
    ierr = iret + ierr
     gvcord = 'PRES'
     gfunc = 'UR(VLAV(WIND))'
     CALL DG_GRID (timfnd, glevel, gvcord, gfunc, pfunc, u,
+ igx, igy, time, level, ivcord, parm, iret)
    ierr = iret + ierr
     gfunc = 'VR(VLAV(WIND))'
     CALL DG_GRID (timfnd, glevel, gvcord, gfunc, pfunc, v,
+ igx, igy, time, level, ivcord, parm, iret)
    ierr = iret + ierr
    gvcord = 'PRES'
    gvect = 'GRAD(LAV(THTE))'
    CALL DG_VECT (timfnd, glevel, gvcord, gvect, pfunc, ugrad,
+ vgrad, igx, igy, time, level, ivcord, parmu,
+ parmv, iret)
    ierr = iret + ierr
```

```
      IF (ierr .ne. 0) write (6,*) 'ERROR IN COMPUTING PCL GRIDS'
      C
      C* Find a more unstable parcel below 500mb.
      C
      DO i = 1, maxpts
        IF ((rlevel(j) .gt. 500.0) .and.
+ (rlevel(j) .lt. sfcp(i))) THEN
          IF ((thte(i) .gt. pthte(i) .and. .not.abvlfc(i)))
+ THEN
           pthte (i) = thte (i)
          pthta (i) = thta (i)
             upgrad(i) = ugrad(i)
             vpgrad(i) = vgrad(i)
          tlcl = PR_TLCL (t(i), td(i))
          plcl (i) = PR_PLCL (t(i), pbar, tlcl)
          END IF
        END IF
      END DO
      ierr = 0
      glevel = clvl2//':'//clvl1
      gvcord = 'PRES'
      gfunc = 'LDF(HGHT)'
      CALL DG_GRID (timfnd, glevel, gvcord, gfunc, pfunc, tkns,
+ igx, igy, time, level, ivcord, parm, iret)
      ierr = iret + ierr
      gvcord = 'PRES'
      gfunc = 'AVOR(GEO(LAV(HGHT)))'
      CALL DG_GRID (timfnd, glevel, gvcord, gfunc, pfunc, avorg,
+ igx, igy, time, level, ivcord, parm, iret)
      ier = iret + ierr
      gvcord = 'PRES'
      gfunc = 'MUL(MAG(THRM(HGHT)),MAG(THRM(HGHT)))'
      CALL DG_GRID (timfnd, glevel, gvcord, gfunc, pfunc, gwshrsq,
+ igx, igy, time, level, ivcord, parm, iret)
      DO i = 1, maxpts
        IF (gwshrsq(i) .gt. 1000.) gwshrsq(i) = 1000.
      END DO
      ierr = iret + ierr
      IF (ierr .ne. 0 ) write (6,*) 'ERROR IN COMPUTING GRIDS'
      zsum = 0.0
      DO i = 1, maxpts
        zsum = zsum + z(i) + tkns(i)/2.
        IF (sfcp (i) .lt. rlevel (j+1)) THEN
         wwnd (i) = RMISSD
        edr (i) = RMISSD
        ELSE
        IF (plcl(i) .gt. pbar) THEN
          IF (thte(i) .eq. RMISSD) thte(i) = thta(i)
          IF (pthte(i) .gt. thte(i)) THEN
            pctdil = tkns(i)/10000.0
            pthte(i) = (1.0-pctdil)*pthte(i) + pctdil*thte(i)
           END IF
          IF (ff(i) .gt. 0.0) THEN
            vort = MAX (avorg (i), ff (i))
          ELSE
            vort = MIN (avorg (i), ff (i))
           END IF
          pclt = PR_TMST(pthte(i),pbar,0.0)
          tenv = t(i) + 273.16
          pcldif = pclt - tenv
          IF (pcldif .gt. 20.0) THEN
            wsq = 0.0
          ELSE
```

```
              IF (ABS(ff(i)) .lt..00005) THEN
                wsq = 2.0*tkns(i)*GRAVTY*pcldif/tenv
              ELSE
                wsq = 2.0*tkns(i)*GRAVTY*pcldif/tenv +
     + 0.5*ff(i)/vort*gwshrsq(i)
               END IF
             END IF
            IF ((wsq .gt. 0.0) .and. (.not. abvlfc(i))) THEN
              abvlfc (i) = .true.
             END IF
          ELSE
            wsq = 0.0
           END IF
          vvsq = vvbase(i)*vvbase(i) + wsq
          IF (vvsq .lt. 0.0) THEN
            wwnd(i) = 0.0
          ELSE
            wwnd(i) = SQRT (vvsq)
           END IF
          wmean = (vvbase(i)+wwnd(i))/2.
          IF (wmean .gt. 10.0) THEN
            edr(i) = (.06 + .009*(wmean-10.0))**.333
          ELSE
            edr(i) = (.006*wmean)**.333
          END IF
          C
          C* Compute storm top
          C
          IF (wwnd(i) .gt. maxvv(i)) THEN
            maxvv(i) = wwnd(i)
            el(i) = z(i)
          END IF
          IF ((maxvv(i) .gt. 5.0) .and. (wwnd(i) .lt. 0.1)
     + .and. (.not. havtop(i))) THEN
            havtop(i) = .true.
            stmtop(i) = z(i) - tkns(i)/2.0
     + - tkns(i)*vvbase(i)*vvbase(i)/wsq
               ovshoot(i) = stmtop(i) - el(i)
               dopu = u(i) - ustm(i)
               dopv = v(i) - vstm(i)
               dopspd = SQRT(dopu*dopu + ddopv*dopv)
               pnu0(i) = dden(i)*SQRT(bvsq(i))*dopspd
               drag(i) = PI/4.0*ovshoot(i)*pnu0(i)
          END IF
          IF ((j .eq. nlyrs) .and. (wwnd(i) .ne. 0.0) .and.
      + .not. havtop(i)) THEN
            IF (wsq .lt. 0.0) THEN
              stmtop(i) = z(i) + tkns(i)*wwnd(i)/SQRT(-wsq)
              IF (stmtop(i) .gt. (z(i)+3000.))
     + stmtop(i) = z(i) + 3000.
            ELSE
              stmtop(i) = z(i) + 3000.
            END IF
          END IF
          vvbase(i) = wwnd(i)
          END IF
        END DO
        C
        C* Compute potential turbulence above storm top
        C
         IF ((wsq .le. 0.0) .and. havtop(i)) THEN
           stab = SQRT(bvsq(i))
           dopu = u(i) - ustm(i)
```

```
            dopv = v(i) - vstm(i)
            dopspd = SQRT(dopu*dopu + dopv*dopv)
            pnu = dden(i)*stab*dopspd
            IF (dopspd .eq. 0.0) THEN
              ahat = 2.5
            ELSE
              ahat = ovshoot(i)*stab/dopspd*SQRT(pnu0(i)/pnu)
            END IF
            IF (ahat .gt. 2.5) ahat = 2.5
            IF (ahat .ge. 1.0) THEN
              edttop = (drag(i)*.0004)**.333
              edr(i) = MAX(edr(i), edrtop)
              drag(i) = drag(i)*((2.5-ahat)/1.5)
            END IF
          END IF
          C
          C* Write grids to output file.
          C
         zavg = zsum/maxpts
         kvcord = 3
         DO WHILE (fl .lt. zavg)
           ifl(1) = fl + 0.5
           ifl(2) = -1
           parm = 'edr'
           CALL DG_NWDT (edr, time, ifl, kvcord, parm, ighdr,
     + gpack, .true., iret)
            IF (iret .eq. 0) write (6,*) time(1), parm,
     + ' at', ifl(1), ' grid write successful'
           parm = 'tmpc'
           CALL DG_NWDT (t, time, ifl, kvcord, parm, ighdr,
     + gpack, .true., iret)
            IF (iret .eq. 0) write (6,*) time(1), parm,
     + 'at', ifl(1), 'grid write successful'
            IF (fl .lt. 6097.) THEN
              DO i = 1,maxpts
                edrlow(jj,i) = edr(i)
              END DO
            END IF
            jj = jj + 1
           fl = fl + 304.8
         END DO
       END DO
       C
       C* Compute storm propagation velocity
       C
        DO i = 1, maxpts
          IF (upgrad(i) .eq. RMISSD .or. vpgrad(i) .eq. RMISSD) THEN
            uprop(i) = 0.0
            vprop(i) = 0.0
          ELSE
            uprop(i) = upgrad(i)*4000.*maxvv(i) + ustm(i)
            vprop(i) = vpgrad(i)*4000.*maxvv(i) + vstm(i)
          END IF
        END DO
        C
        C* Write ustm, vstm, uprop, vprop, maxvv, eqlv, and stmtop grids
        C
       level (1) = 0
       level (2) = -1
       parm = 'ustm'
       jvcord = 0
       CALL DG_NWDT (ustm, time, level, jvcord, parm, ighdr,
     + gpack, .true., iret)
```

```
     IF (iret .eq. 0) write (6,*) time(1), parm,
+ ' at', level(1), ':', level(2),
+ 'grid write successful'
    parm = 'vstm'
    jvcord = 0
    CALL DG_NWDT (vstm, time, level, jvcord, parm, ighdr,
+ gpack, .true., iret)
     IF (iret .eq. 0) write (6,*) time(1), parm,
+ 'at', level(1), ':', level(2),
+ 'grid write successful'
    parm = 'uprg'
    jvcord = 0
    CALL DG_NWDT (uprop, time, level, jvcord, parm, ighdr,
+ gpack, .true., iret)
     IF (iret .eq. 0) write (6,*) time(1), parm,
+ 'at', level(1), ':', level(2),
+ 'grid write successful'
    parm = 'vprg'
    jvcord = 0
    CALL DG_NWDT (vprop, time, level, jvcord, parm, ighdr,
+ gpack, .true., iret)
     IF (iret .eq. 0) write (6,*) time(1), parm,
+ 'at', level(1), ':', level(2),
+ 'grid write successful'
    parm = 'wwnd'
    jvcord = 0
    CALL DG_NWDT (maxvv, time, level, jvcord, parm, ighdr,
+ gpack, .true., iret)
     IF (iret .eq. 0) write (6,*) time(1), parm,
+ 'at', level(1), ':', level(2),
+ 'grid write successful'
    parm = 'eqlv'
    CALL DG_NWDT (el, time, level, jvcord, parm, ighdr,
+ gpack, .true., iret)
     IF (iret .eq. 0) write (6,*) time(1), parm,
+ 'at', level(1), ':', level(2),
+ 'grid write successful'
    parm = 'tops'
    CALL DG_NWDT (stmtop, time, level, jvcord, parm, ighdr,
+ gpack, .true., iret)
     IF (iret .eq. 0) write (6,*) time(1), parm,
+ 'at', level(1), ':', level(2),
+ 'grid write successful'
C
C* Compute downdraft velocities and downdraft edr
C
     jj = 1
    fl = 304.8
    DO WHILE (fl .le. 6097.)
      DO i = 1, maxpts
         IF (edrlow(jj,i) .ne. RMISSD .or. windex(i) .ne. RMISSD)
+ THEN
           edrdown = 0.0
          IF (maxvv(i) .gt. 10.) THEN
             frzmsl = frzlz(i) + sfcz(i)
           IF (fl .gt. sfcz(i) .and. fl .lt. frzmsl) THEN
             wdown = windex(i)*(frzmsl-fl)/frzlz(i)
            IF (wdown .gt. 10.0) THEN
              edrdown = (.06+.009*(wdown-10.0))**.333
            ELSE IF (wdown .gt. 0.0) THEN
              edrdown = (.006*wdown)**.333
            END IF
             END IF
```

```
          END IF
        edr (i) = MAX (edrlow(jj,i), edrdown)
         ELSE
           edr(i) = RMISSD
        END IF
      END DO
      C
      C* Write grids to output file.
      C
      ifl (1) = fl + 0.5
      ifl (2) = -1
      parm = 'edr'
      CALL DG_NWDT (edr, time, ifl, kvcord, parm, ighdr,
+ gpack, .true., iret)
       IF (iret .eq. 0) write (6,*) time(1), parm,
+ 'at', ifl(1), 'grid write successful'
       jj = jj + 1
      fl = fl + 304.8
    END DO
    CALL DG_NTIM (.false., .false., time, nxttm, ier)
  END DO
  CALL DG_NEND (iret)
  C*
  END
```

In some embodiments of the DSEE, the nowcast's non-convective turbulence can be the most recent INTTURB forecast that verifies a specified time or period (e.g., 30-90 minutes) from the observation time.

In some embodiment of the DSEE, a LTG2EDR component 2051 (and/or subcomponent and/or program) determines the convective turbulence. For example, LTG2EDR may first forecasts each grid point with lightning count > 0 by moving that point at both the storm velocity and propagating velocity one hour. Each forecast point can be the highest lightning count expected. Then each point with lightning masks the potential EDR field (e.g., as determined by VVSTORMSE), resulting in only EDR grid points where lightning is forecast.

The lightning count (flash rate) can be correlated to the maximum updraft velocity. If the lightning count supports a stronger updraft than computed (e.g., computed by VVSTORMSE), the resulting EDR can be raised to be consistent with lightning count.

Then the forecast non-convective and convective EDR fields are combined/integrated (e.g., added) to create an initial estimate or first guess of the turbulence. The initial estimate or first guess is modified by any turbulence observations received in a specified period (e.g., 90 minutes, 60 minutes, 30 minutes, etc.) prior to observation time. These observations may be *in situ* EDR observations (i.e., resulting from sensors in a plane), pilot reports (PIREPs), and/or any other equivalent/relevant source. In some embodiments, in the case of EDR observations, initial estimate/first guess grid points are modified/altered, for example, by an amount of the first guess/observation difference inversely weighted by the square of the distance between the grid point and the observation. Horizontally, this can be defined by a two-dimensional area, such as an ellipse, polygon, or other shape, along the wind direction with eccentricity proportional to the wind speed. The elliptical area of influence can be equivalent to a specified area or measure, such as a 200 km circular radius. Figure 17G illustrates how a 0.75 EDR observation will modify an initial field of EDR = 0 everywhere. Vertically, the grid points within a specified distance (e.g., 3000 feet) of the observation are similarly adjusted depending on the difference between the observation altitude and the grid point altitude. Thus the observation influences grid points within specified (e.g., an ellipsoid-like) volume.

Embodiments of the DSEE provide an aircraft turbulence nowcast for a geospatial aviation volume by determining non-convective turbulence values for a geospatial aviation volume associated with an at least one aircraft and determining convective turbulence forecast values for the geospatial aviation volume (e.g., for 4-d spatial/temporal gridpoints within the volume). The DSEE can mask convective turbulence forecast values for the geospatial aviation volume by lightning data (e.g., lightning intensity) for the geospatial avaiation volume to provide masked convective turbulence values for the geospatial aviation volume, and project (forecast) the masked convective turbulence values through the geospatial aviation volume for a specified nowcast period (e.g., 60 minutes). The non-convective turbulence values and projected masked convective turbulence values are integrated to provide a preliminary turbulence estimate for the geospatial aviation volume for the specified nowcast period, and then transformed by actual turbulence observations associated with the geospatial aviation volume to generate an aircraft turbulence nowcast for the geospatial aviation volume associated with the at least one aircraft. The DSEE can then transmit the aircraft turbulence nowcast to a control system associated with the at least one aircraft (e.g., aircraft navigation systems, ground control systems, etc.), provide an alert based thereon, and/or determine/provide a flight plan deviation or alternate route (for which a turbulence nowcast may be determined and the compared to the nowcast for th initial route) for the aircraft to avoid or minimize turbulence (e.g., as discussed above with regard to Figure 1A and Figure 5). Some embodiments and/or aspects of the DSEE may be understood in view of Applicant's PCT application nos. PCT/US2013/078540, PCT/US2013/078546, and/or PCT/US2013/078541, each filed 31 December 2013. It is to be further understood that the DSEE may be a component or part of a comprehensive flight-hazard system, providing nowcasts as part of comprehensive hazard avoidance product that helps airplanes, airlines, air traffic controllers, and the like more safely navigate a variety of flight hazards by combining nowcasts with other turbulence predictions and/or airfoil icing predictions.

Figure 19A illustrates geostationary operational environmental satellite convective initiation data providing a probability measure that convection will occur within the next two hours. Figure 19B illustrates a convective cloud mask, with cloud mask values in red indicating the presence of immature cumulus and values in green indicate mature cumulus or cirrus clouds. A value of white indicates that no convective cloud is present. Figure 19C provides output of an overshooting top mask for an embodiment. In some embodiments, VVSTORMSE outputs grids of convective vertical velocities at all model levels. In addition, it may output grids of the maximum updraft, updraft tops, and updraft triggers. The maximum updraft display illustrates the location and intensity of potential convection. With the temporal resolution of a numerical model, VVSTORMSE output gives guidance forecasts for thunderstorms at specific times for as far out as a numerical model can forecast.

**DSEE Controller**

FIGURE 20 shows a block diagram illustrating embodiments of a DSEE controller 2001. In this embodiment, the DSEE controller 2001 may serve to aggregate, process, store, search, serve, identify, instruct, generate, match, and/or facilitate interactions with a computer through various technologies, and/or other related data. The DSEE can, for example, be configured such that various components described herein execute on either or both of one or more servers or mobile devices (such as device(s) onboard an aircraft). Each component of the DSEE may, in some embodiments, be distributed, as described below.

Typically, users, e.g., 2033a, which may be people and/or other systems, may engage information technology systems (e.g., computers) to facilitate information processing. In turn, computers employ processors to process information; such processors 2003 may be referred to as central processing units (CPU). One form of processor is referred to as a microprocessor. CPUs use communicative circuits to pass binary encoded signals acting as instructions to enable various operations. These instructions may be operational and/or data instructions containing and/or referencing other instructions and data in various processor accessible and operable areas of memory 2029 (e.g., registers, cache memory, random access memory, etc.). Such communicative instructions may be stored and/or transmitted in batches (e.g., batches of instructions) as programs and/or data components to facilitate desired operations. These stored instruction codes, e.g., programs, may engage the CPU circuit components and other motherboard and/or system components to perform desired operations. One type of program is a computer operating system, which, may be executed by CPU on a computer; the operating system enables and facilitates users to access and operate computer information technology and resources. Some resources that may be employed in information technology systems include: input and output mechanisms through which data may pass into and out of a computer; memory storage into which data may be saved; and processors by which information may be processed. These information technology systems may be used to collect data for later retrieval, analysis, and manipulation, which may be facilitated through a database program. These information technology systems provide interfaces that allow users to access and operate various system components.

In one embodiment, the DSEE controller 2001 may be connected to and/or communicate with entities such as, but not limited to: one or more users from user input devices 2011; peripheral devices 2012; an optional cryptographic processor device 2028; and/or a communications network 2013. For example, the DSEE controller 2001 may be connected to and/or communicate with users, e.g., 2033a, operating client device(s), e.g., 2033b, including, but not limited to, personal computer(s), server(s) and/or various mobile device(s) including, but not limited to, cellular telephone(s), smartphone(s), tablet computer(s), laptop computer(s), notebook(s), netbook(s), and/or the like.

Networks are commonly thought to comprise the interconnection and interoperation of clients, servers, and intermediary nodes in a graph topology. It should be noted that the term "server" as used throughout this application refers generally to a computer, other device, program, or combination thereof that processes and responds to the requests of remote users across a communications network. Servers serve their information to requesting "clients." The term "client" as used herein refers generally to a computer, program, other device, user and/or combination thereof that is capable of processing and making requests and obtaining and processing any responses from servers across a communications network. A computer, other device, program, or combination thereof that facilitates, processes information and requests, and/or furthers the passage of information from a source user to a destination user is commonly referred to as a "node." Networks are generally thought to facilitate the transfer of information from source points to destinations. A node specifically tasked with furthering the passage of information from a source to a destination is commonly called a "router." There are many forms of networks such as Local Area Networks (LANs), Pico networks, Wide Area Networks (WANs), Wireless Networks (WLANs), etc. For example, the Internet is generally accepted as being an interconnection of a multitude of networks whereby remote clients and servers may access and interoperate with one another. The DSEE controller 2001 may be based on computer systems that may comprise, but are not limited to, components such as: a computer systemization 2002 connected to memory 2029.

**Computer Systemization**

A computer systemization 2002 may comprise a clock 2030, central processing unit ("CPU(s)" and/or "processor(s)" (these terms are used interchangeable throughout the disclosure unless noted to the contrary)) 2003, a memory 2029 (e.g., a read only memory (ROM) 2006, a random access memory (RAM) 2005, etc.), and/or an interface bus 2007, and most frequently, although not necessarily, are all interconnected and/or communicating through a system bus 2004 on one or more (mother)board(s) 2002 having conductive and/or otherwise transportive circuit pathways through which instructions (e.g., binary encoded signals) may travel to effectuate communications, operations, storage, etc. The computer systemization may be connected to a power source 2086; e.g., optionally the power source may be internal. Optionally, a cryptographic processor 2026 and/or transceivers (e.g., ICs) 2074 may be connected to the system bus. In another embodiment, the cryptographic processor and/or transceivers may be connected as either internal and/or external peripheral devices 2012 via the interface bus I/O. In turn, the transceivers may be connected to antenna(s) 2075, thereby effectuating wireless transmission and reception of various communication and/or sensor protocols; for example the antenna(s) may connect to: a Texas Instruments WiLink WL1283 transceiver chip (e.g., providing 802.11n, Bluetooth 3.0, FM, global positioning system (GPS) (thereby allowing DSEE controller to determine its location)); Broadcom BCM4329FKUBG transceiver chip (e.g., providing 802.11n, Bluetooth 2.1 + EDR, FM, etc.); a Broadcom BCM4750IUB8 receiver chip (e.g., GPS); an Infineon Technologies X-Gold 618-PMB9800 (e.g., providing 2G/3G HSDPA/HSUPA communications); and/or the like. The system clock typically has a crystal oscillator and generates a base signal through the computer systemization's circuit pathways. The clock is typically coupled to the system bus and various clock multipliers that will increase or decrease the base operating frequency for other components interconnected in the computer systemization. The clock and various components in a computer systemization drive signals embodying information throughout the system. Such transmission and reception of instructions embodying information throughout a computer systemization may be commonly referred to as communications. These communicative instructions may further be transmitted, received, and the cause of return and/or reply communications beyond the instant computer systemization to: communications networks, input devices, other computer systemizations, peripheral devices, and/or the like. It should be understood that in alternative embodiments, any of the above components may be connected directly to one another, connected to the CPU, and/or organized in numerous variations employed as exemplified by various computer systems.

The CPU comprises at least one high-speed data processor adequate to execute program components for executing user and/or system-generated requests. Often, the processors themselves will incorporate various specialized processing units, such as, but not limited to: integrated system (bus) controllers, memory management control units, floating point units, and even specialized processing sub-units like graphics processing units, digital signal processing units, and/or the like. Additionally, processors may include internal fast access addressable memory, and be capable of mapping and addressing memory 2029 beyond the processor itself; internal memory may include, but is not limited to: fast registers, various levels of cache memory (e.g., level 1, 2, 3, etc.), RAM, etc. The processor may access this memory through the use of a memory address space that is accessible via instruction address, which the processor can construct and decode allowing it to access a circuit path to a specific memory address space having a memory state. The CPU may be a microprocessor or a plurality of microprocessors. The CPU interacts with memory through instruction passing through conductive and/or transportive conduits (e.g., (printed) electronic and/or optic circuits) to execute stored instructions (i.e., program code) according to conventional data processing techniques. Such instruction passing facilitates communication within the DSEE controller and beyond through various interfaces. Should processing requirements dictate a greater amount speed and/or capacity, distributed processors (e.g., Distributed DSEE), mainframe, multi-core, parallel, and/or super-computer architectures may similarly be employed. Alternatively, should deployment requirements dictate greater portability, smaller Personal Digital Assistants (PDAs) may be employed.

Depending on the particular implementation, features of the DSEE may be achieved by implementing a microcontroller such as CAST's R8051XC2 microcontroller; Intel's MCS 51 (i.e., 8051 microcontroller); and/or the like. Also, to implement certain features of the DSEE, some feature implementations may rely on embedded components, such as: Application-Specific Integrated Circuit ("ASIC"), Digital Signal Processing ("DSP"), Field Programmable Gate Array ("FPGA"), and/or the like embedded technology. For example, any of the DSEE component collection (distributed or otherwise) and/or features may be implemented via the microprocessor and/or via embedded components; e.g., via ASIC, coprocessor, DSP, FPGA, and/or the like. Alternately, some implementations of the DSEE may be implemented with embedded components that are configured and used to achieve a variety of features or signal processing.

Depending on the particular implementation, the embedded components may include software solutions, hardware solutions, and/or some combination of both hardware/software solutions. For example, DSEE features discussed herein may be achieved through implementing FPGAs, which are a semiconductor devices containing programmable logic components called "logic blocks", and programmable interconnects, such as the high performance FPGA Virtex series and/or the low cost Spartan series manufactured by Xilinx. Logic blocks and interconnects can be programmed by the customer or designer, after the FPGA is manufactured, to implement any of the DSEE features. A hierarchy of programmable interconnects allow logic blocks to be interconnected as needed by the DSEE system designer/administrator, somewhat like a one-chip programmable breadboard. An FPGA's logic blocks can be programmed to perform the operation of basic logic gates such as AND, and XOR, or more complex combinational operators such as decoders or simple mathematical operations. In most FPGAs, the logic blocks also include memory elements, which may be circuit flip-flops or more complete blocks of memory. In some circumstances, the DSEE may be developed on regular FPGAs and then migrated into a fixed version that more resembles ASIC implementations. Alternate or coordinating implementations may migrate DSEE controller features to a final ASIC instead of or in addition to FPGAs. Depending on the implementation all of the aforementioned embedded components and microprocessors may be considered the "CPU" and/or "processor" for the DSEE.

**Power Source**

The power source 2086 may be of any standard form for powering small electronic circuit board devices such as the following power cells: alkaline, lithium hydride, lithium ion, lithium polymer, nickel cadmium, solar cells, and/or the like. Other types of AC or DC power sources may be used as well. In the case of solar cells, in one embodiment, the case provides an aperture through which the solar cell may capture photonic energy. The power cell 2086 is connected to at least one of the interconnected subsequent components of the DSEE thereby providing an electric current to all subsequent components. In one example, the power source 2086 is connected to the system bus component 2004. In an alternative embodiment, an outside power source 2086 is provided through a connection across the I/O 2008 interface. For example, a USB and/or IEEE 1394 connection carries both data and power across the connection and is therefore a suitable source of power.

**Interface Adapters**

Interface bus(ses) 2007 may accept, connect, and/or communicate to a number of interface adapters, conventionally although not necessarily in the form of adapter cards, such as but not limited to: input output interfaces (I/O) 2008, storage interfaces 2009, network interfaces 2010, and/or the like. Optionally, cryptographic processor interfaces 2027 similarly may be connected to the interface bus. The interface bus provides for the communications of interface adapters with one another as well as with other components of the computer systemization. Interface adapters are adapted for a compatible interface bus. Interface adapters conventionally connect to the interface bus via a slot architecture. Conventional slot architectures may be employed, such as, but not limited to: Accelerated Graphics Port (AGP), Card Bus, (Extended) Industry Standard Architecture ((E)ISA), Micro Channel Architecture (MCA), NuBus, Peripheral Component Interconnect (Extended) (PCI(X)), PCI Express, Personal Computer Memory Card International Association (PCMCIA), and/or the like.

Storage interfaces 2009 may accept, communicate, and/or connect to a number of storage devices such as, but not limited to: storage devices 2014, removable disc devices, and/or the like. Storage interfaces may employ connection protocols such as, but not limited to: (Ultra) (Serial) Advanced Technology Attachment (Packet Interface) ((Ultra) (Serial) ATA(PI)), (Enhanced) Integrated Drive Electronics ((E)IDE), Institute of Electrical and Electronics Engineers (IEEE) 1394, fiber channel, Small Computer Systems Interface (SCSI), Universal Serial Bus (USB), and/or the like.

Network interfaces 2010 may accept, communicate, and/or connect to a communications network 2013. Through a communications network 2013, the DSEE controller is accessible through remote clients 2033b (e.g., computers with web browsers) by users 2033a. Network interfaces may employ connection protocols such as, but not limited to: direct connect, Ethernet (thick, thin, twisted pair 10/100/1000 Base T, and/or the like), Token Ring, wireless connection such as IEEE 802.11a-x, and/or the like. Should processing requirements dictate a greater amount speed and/or capacity, distributed network controllers (e.g., Distributed DSEE), architectures may similarly be employed to pool, load balance, and/or otherwise increase the communicative bandwidth required by the DSEE controller. A communications network may be any one and/or the combination of the following: a direct interconnection; the Internet; a Local Area Network (LAN); a Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and/or the like); and/or the like. A network interface may be regarded as a specialized form of an input output interface. Further, multiple network interfaces 2010 may be used to engage with various communications network types 2013. For example, multiple network interfaces may be employed to allow for the communication over broadcast, multicast, and/or unicast networks.

Input Output interfaces (I/O) 2008 may accept, communicate, and/or connect to user input devices 2011, peripheral devices 2012, cryptographic processor devices 2028, and/or the like. I/O may employ connection protocols such as, but not limited to: audio: analog, digital, monaural, RCA, stereo, and/or the like; data: Apple Desktop Bus (ADB), IEEE 1394a-b, serial, universal serial bus (USB); infrared; joystick; keyboard; midi; optical; PC AT; PS/2; parallel; radio; video interface: Apple Desktop Connector (ADC), BNC, coaxial, component, composite, digital, Digital Visual Interface (DVI), high-definition multimedia interface (HDMI), RCA, RF antennae, S-Video, VGA, and/or the like; wireless transceivers: 802.11a/b/g/n/x; Bluetooth; cellular (e.g., code division multiple access (CDMA), high speed packet access (HSPA(+)), high-speed downlink packet access (HSDPA), global system for mobile communications (GSM), long term evolution (LTE), WiMax, etc.); and/or the like. One typical output device may include a video display, which typically comprises a Cathode Ray Tube (CRT) or Liquid Crystal Display (LCD) based monitor with an interface (e.g., DVI circuitry and cable) that accepts signals from a video interface, may be used. The video interface composites information generated by a computer systemization and generates video signals based on the composited information in a video memory frame. Another output device is a television set, which accepts signals from a video interface. Typically, the video interface provides the composited video information through a video connection interface that accepts a video display interface (e.g., an RCA composite video connector accepting an RCA composite video cable; a DVI connector accepting a DVI display cable, etc.).

User input devices 2011 often are a type of peripheral device 2012 (see below) and may include: card readers, dongles, finger print readers, gloves, graphics tablets, joysticks, keyboards, microphones, mouse (mice), remote controls, retina readers, touch screens (e.g., capacitive, resistive, etc.), trackballs, trackpads, sensors (e.g., accelerometers, ambient light, GPS, gyroscopes, proximity, etc.), styluses, and/or the like.

Peripheral devices 2012 may be connected and/or communicate to I/O and/or other facilities of the like such as network interfaces, storage interfaces, directly to the interface bus, system bus, the CPU, and/or the like. Peripheral devices may be external, internal and/or part of the DSEE controller. Peripheral devices may include: antenna, audio devices (e.g., line-in, line-out, microphone input, speakers, etc.), cameras (e.g., still, video, webcam, etc.), dongles (e.g., for copy protection, ensuring secure transactions with a digital signature, and/or the like), external processors (for added capabilities; e.g., crypto devices 2028), force-feedback devices (e.g., vibrating motors), network interfaces, printers, scanners, storage devices, transceivers (e.g., cellular, GPS, etc.), video devices (e.g., goggles, monitors, etc.), video sources, visors, and/or the like. Peripheral devices often include types of input devices (e.g., cameras).

It should be noted that although user input devices and peripheral devices may be employed, the DSEE controller may be embodied as an embedded, dedicated, and/or monitor-less (i.e., headless) device, wherein access would be provided over a network interface connection.

Cryptographic units such as, but not limited to, microcontrollers, processors 2026, interfaces 2027, and/or devices 2028 may be attached, and/or communicate with the DSEE controller. A MC68HC16 microcontroller, manufactured by Motorola Inc., may be used for and/or within cryptographic units. The MC68HC16 microcontroller utilizes a 16-bit multiply-and-accumulate instruction in the 16 MHz configuration and requires less than one second to perform a 512-bit RSA private key operation. Cryptographic units support the authentication of communications from interacting agents, as well as allowing for anonymous transactions. Cryptographic units may also be configured as part of the CPU. Equivalent microcontrollers and/or processors may also be used. Other commercially available specialized cryptographic processors include: the Broadcom's CryptoNetX and other Security Processors; nCipher's nShield, SafeNet's Luna PCI (e.g., 7100) series; Semaphore Communications' 40 MHz Roadrunner 184; Sun's Cryptographic Accelerators (e.g., Accelerator 6000 PCIe Board, Accelerator 500 Daughtercard); Via Nano Processor (e.g., L2100, L2200, U2400) line, which is capable of performing 500+ MB/s of cryptographic instructions; VLSI Technology's 33 MHz 6868; and/or the like.

## Memory

Generally, any mechanization and/or embodiment allowing a processor to affect the storage and/or retrieval of information is regarded as memory 2029. However, memory is a fungible technology and resource, thus, any number of memory embodiments may be employed in lieu of or in concert with one another. It is to be understood that the DSEE controller and/or a computer systemization may employ various forms of memory 2029. For example, a computer systemization may be configured wherein the operation of on-chip CPU memory (e.g., registers), RAM, ROM, and any other storage devices are provided by a paper punch tape or paper punch card mechanism; however, such an embodiment would result in an extremely slow rate of operation. In a typical configuration, memory 2029 will include ROM 2006, RAM 2005, and a storage device 2014. A storage device 2014 may be any conventional computer system storage. Storage devices may include a drum; a (fixed and/or removable) magnetic disk drive; a magneto-optical drive; an optical drive (i.e., Blueray, CD ROM/RAM/Recordable (R)/ReWritable (RW), DVD R/RW, HD DVD R/RW etc.); an array of devices (e.g., Redundant Array of Independent Disks (RAID)); solid state memory devices (USB memory, solid state drives (SSD), etc.); other processor-readable storage mediums; and/or other devices of the like. Thus, a computer systemization generally requires and makes use of memory.

**Component Collection**

The memory 2029 may contain a collection of program and/or database components and/or data such as, but not limited to: operating system component(s) 2015 (operating system); information server component(s) 2016 (information server); user interface component(s) 2017 (user interface); Web browser component(s) 2018 (Web browser); database(s) 2019; mail server component(s) 2021; mail client component(s) 2022; cryptographic server component(s) 2020 (cryptographic server); the DSEE component(s) 2035; MWAVE component(s) 2041; INTTURB component(s) 2042; VVTURB2 component(s) 2043; Tracking component(s) 2044; Pathing component(s) 2045; Display component(s) 2046; Alerting component(s) 2047; Planning component(s) 2048; VVSTORMSE component(s) 2049; EDROBS component(s) 2050; LTG2EDR component(s) 2051; and/or the like (i.e., collectively a component collection). The aforementioned components may be incorporated into (e.g., be subcomponents of), loaded from, loaded by, or otherwise operatively available to and from the DSEE component(s) 2035. These components may be stored and accessed from the storage devices and/or from storage devices accessible through an interface bus. Although nonconventional program components such as those in the component collection, typically, are stored in a local storage device 2014, they may also be loaded and/or stored in memory such as: peripheral devices, RAM, remote "cloud" storage facilities accessible through a communications network, integrated ROM memory, via an FPGA or ASIC implementing component logic; and/or the like.

**Operating System Component**

The operating system component 2015 is an executable program component facilitating the operation of the DSEE controller. Typically, the operating system facilitates access of I/O, network interfaces, peripheral devices, storage devices, and/or the like. The operating system may be a highly fault tolerant, scalable, and secure system such as: Unix and Unix-like system distributions (such as AT&T's UNIX; Berkley Software Distribution (BSD) variations such as FreeBSD, NetBSD, OpenBSD, and/or the like; Linux distributions such as Red Hat, Debian, Ubuntu, and/or the like); and/or the like operating systems. However, more limited and/or less secure operating systems also may be employed such as Apple Macintosh OS, OS-X IBM OS/2, Microsoft DOS, Microsoft Windows 2000/2003/3.1/95/98/CE/Millenium/NT/Vista/XP (Server), Palm OS, and/or the like. An operating system may communicate to and/or with other components in a component collection, including itself, and/or the like. Most frequently, the operating system communicates with other program components, user interfaces, and/or the like. For example, the operating system may contain, communicate, generate, obtain, and/or provide program component, system, user, and/or data communications, requests, and/or responses. The operating system, once executed by the CPU, may enable the interaction with communications networks, data, I/O, peripheral devices, program components, memory, user input devices, and/or the like. The operating system may provide communications protocols that allow the DSEE controller to communicate with other entities through a communications network 2013. Various communication protocols may be used by the DSEE controller as a subcarrier transport mechanism for interaction, such as, but not limited to: multicast, TCP/IP, UDP, unicast, and/or the like.

**Information Server Component**

An information server component 2016 is a stored program component that is executed by a CPU. The information server may be a conventional Internet information server such as, but not limited to Apache Software Foundation's Apache, Microsoft's Internet Information Server, and/or the like. The information server may allow for the execution of program components through facilities such as Active Server Page (ASP), ActiveX, (ANSI) (Objective-) C (++), C# and/or .NET, Common Gateway Interface (CGI) scripts, dynamic (D) hypertext markup language (HTML), FLASH, Java, JavaScript, Practical Extraction Report Language (PERL), Hypertext Pre-Processor (PHP), pipes, Python, wireless application protocol (WAP), WebObjects, and/or the like. The information server may support secure communications protocols such as, but not limited to, File Transfer Protocol (FTP); HyperText Transfer Protocol (HTTP); Secure Hypertext Transfer Protocol (HTTPS), Secure Socket Layer (SSL), messaging protocols (e.g., ICQ, Internet Relay Chat (IRC), Presence and Instant Messaging Protocol (PRIM), Internet Engineering Task Force's (IETF's) Session Initiation Protocol (SIP), SIP for Instant Messaging and Presence Leveraging Extensions (SIMPLE), open XML-based Extensible Messaging and Presence Protocol (XMPP) (i.e., Jabber or Open Mobile Alliance's (OMA's) Instant Messaging and Presence Service (IMPS)), Representational State Transfer (REST), and/or the like. The information server provides results in the form of Web pages to Web browsers, and allows for the manipulated generation of the Web pages through interaction with other program components. After a Domain Name System (DNS) resolution portion of an HTTP request is resolved to a particular information server, the information server resolves requests for information at specified locations on the DSEE controller based on the remainder of the HTTP request. For example, a request such as http://123.124.125.126/myInformation.html might have the IP portion of the request "123.124.125.126" resolved by a DNS server to an information server at that IP address; that information server might in turn further parse the http request for the "/myInformation.html" portion of the request and resolve it to a location in memory containing the information "myInformation.html." Additionally, other information serving protocols may be employed across various ports, e.g., FTP communications across port 21, and/or the like. An information server may communicate to and/or with other components in a component collection, including itself, and/or facilities of the like. Most frequently, the information server communicates with the DSEE database 2019, operating system component(s), other program components, user interfaces, browsers, and/or the like.

Access to the DSEE database may be achieved through a number of database bridge mechanisms such as through scripting languages as enumerated below (e.g., CGI) and through inter-application communication channels as enumerated below (e.g., CORBA, WebObjects, etc.). Any data requests through a web browser are parsed through the bridge mechanism into appropriate grammars as required by the DSEE. In one embodiment, the information server would provide a Web form accessible by a Web browser. Entries made into supplied fields in the Web form are tagged as having been entered into the particular fields, and parsed as such. The entered terms are then passed along with the field tags, which act to instruct the parser to generate queries directed to appropriate tables and/or fields. In one embodiment, the parser may generate queries in standard SQL by instantiating a search string with the proper join/select commands based on the tagged text entries, wherein the resulting command is provided over the bridge mechanism to the DSEE as a query. Upon generating query results from the query, the results are passed over the bridge mechanism, and may be parsed for formatting and generation of a new results Web page by the bridge mechanism. Such a new results Web page is then provided to the information server, which may supply it to the requesting Web browser. Also, an information server may contain, communicate, generate, obtain, and/or provide program component, system, user, and/or data communications, requests, and/or responses.

### User Interface Component

Computer interfaces in some respects are similar to automobile operation interfaces. Automobile operation interface elements such as steering wheels, gearshifts, and speedometers facilitate the access, operation, and display of automobile resources, and status. Computer interaction interface elements such as check boxes, cursors, menus, scrollers, and windows (collectively and commonly referred to as widgets) similarly facilitate the access, capabilities, operation, and display of data and computer hardware and operating system resources, and status. Operation interfaces are commonly called user interfaces. Graphical user interfaces (GUIs) such as the Apple Macintosh Operating System's Aqua, IBM's OS/2, Microsoft's Windows 2000/2003/3.1/95/98/CE/Millenium/NT/XP/Vista/7 (i.e., Aero), Unix's X-Windows (e.g., which may include additional Unix graphic interface libraries and layers such as K Desktop Environment (KDE), mythTV and GNU Network Object Model Environment (GNOME)), web interface libraries (e.g., ActiveX, AJAX, (D)HTML, FLASH, Java, JavaScript, etc. interface libraries such as, but not limited to, Dojo, jQuery(UI), MooTools, Prototype, script.aculo.us, SWFObject, Yahoo! User Interface, any of which may be used and) provide a baseline and means of accessing and displaying information graphically to users.

A user interface component 2017 is a stored program component that is executed by a CPU. The user interface may be a conventional graphic user interface as provided by, with, and/or atop operating systems and/or operating environments such as already discussed. The user interface may allow for the display, execution, interaction, manipulation, and/or operation of program components and/or system facilities through textual and/or graphical facilities. The user interface provides a facility through which users may affect, interact, and/or operate a computer system. A user interface may communicate to and/or with other components in a component collection, including itself, and/or facilities of the like. Most frequently, the user interface communicates with operating system component(s), other program components, and/or the like. The user interface may contain, communicate, generate, obtain, and/or provide program component, system, user, and/or data communications, requests, and/or responses.

### Web Browser Component

A Web browser component 2018 is a stored program component that is executed by a CPU. The Web browser may be a conventional hypertext viewing application such as Microsoft Internet Explorer or Netscape Navigator. Secure Web browsing may be supplied with 128bit (or greater) encryption by way of HTTPS, SSL, and/or the like. Web browsers allowing for the execution of program components through facilities such as ActiveX, AJAX, (D)HTML, FLASH, Java, JavaScript, web browser plug-in APIs (e.g., FireFox, Safari Plug-in, and/or the like APIs), and/or the like. Web browsers and like information access tools may be integrated into PDAs, cellular telephones, and/or other mobile devices. A Web browser may communicate to and/or with other components in a component collection, including itself, and/or facilities of the like. Most frequently, the Web browser communicates with information servers, operating systems, integrated program components (e.g., plug-ins), and/or the like; e.g., it may contain, communicate, generate, obtain, and/or provide program component, system, user, and/or data communications, requests, and/or responses. Also, in place of a Web browser and information server, a combined application may be developed to perform similar operations of both. The combined application would similarly affect the obtaining and the provision of information to users, user agents, and/or the like from the DSEE enabled nodes. The combined application may be nugatory on systems employing standard Web browsers.

### Mail Server Component

A mail server component 2021 is a stored program component that is executed by a CPU 2003. The mail server may be a conventional Internet mail server such as, but not limited to sendmail, Microsoft Exchange, and/or the like. The mail server may allow for the execution of program components through facilities such as ASP, ActiveX, (ANSI) (Objective-) C (++), C# and/or .NET, CGI scripts, Java, JavaScript, PERL, PHP, pipes, Python, WebObjects, and/or the like. The mail server may support communications protocols such as, but not limited to: Internet message access protocol (IMAP), Messaging Application Programming Interface (MAPI)/Microsoft Exchange, post office protocol (POP3), simple mail transfer protocol (SMTP), and/or the like. The mail server can route, forward, and process incoming and outgoing mail messages that have been sent, relayed and/or otherwise traversing through and/or to the DSEE. Access to the DSEE mail may be achieved through a number of APIs offered by the individual Web server components and/or the operating system. Also, a mail server may contain, communicate, generate, obtain, and/or provide program component, system, user, and/or data communications, requests, information, and/or responses.

### Mail Client Component

A mail client component 2022 is a stored program component that is executed by a CPU 2003. The mail client may be a conventional mail viewing application such as Apple Mail, Microsoft Entourage, Microsoft Outlook, Microsoft Outlook Express, Mozilla, Thunderbird, and/or the like. Mail clients may support a number of transfer protocols, such as: IMAP, Microsoft Exchange, POP3, SMTP, and/or the like. A mail client may communicate to and/or with other components in a component collection, including itself, and/or facilities of the like. Most frequently, the mail client communicates with mail servers, operating systems, other mail clients, and/or the like; e.g., it may contain, communicate, generate, obtain, and/or provide program component, system, user, and/or data communications, requests, information, and/or responses. Generally, the mail client provides a facility to compose and transmit electronic mail messages.

### Cryptographic Server Component

A cryptographic server component 2020 is a stored program component that is executed by a CPU 2003, cryptographic processor 2026, cryptographic processor interface 2027, cryptographic processor device 2028, and/or the like. Cryptographic processor interfaces will allow for expedition of encryption and/or decryption requests by the cryptographic component; however, the cryptographic component, alternatively, may run on a conventional CPU. The cryptographic component allows for the encryption and/or decryption of provided data. The cryptographic component allows for both symmetric and asymmetric (e.g., Pretty Good Protection (PGP)) encryption and/or decryption. The cryptographic component may employ cryptographic techniques such as, but not limited to: digital certificates (e.g., X.509 authentication framework), digital signatures, dual signatures, enveloping, password access protection, public key management, and/or the like. The cryptographic component will facilitate numerous (encryption and/or decryption) security protocols such as, but not limited to: checksum, Data Encryption Standard (DES), Elliptical Curve Encryption (ECC), International Data Encryption Algorithm (IDEA), Message Digest 5 (MD5, which is a one way hash operation), passwords, Rivest Cipher (RC5), Rijndael (AES), RSA, Secure Hash Algorithm (SHA), Secure Socket Layer (SSL), Secure Hypertext Transfer Protocol (HTTPS), and/or the like. Employing such encryption security protocols, the DSEE may encrypt all incoming and/or outgoing communications and may serve as node within a virtual private network (VPN) with a wider communications network. The cryptographic component facilitates the process of "security authorization" whereby access to a resource is inhibited by a security protocol wherein the cryptographic component effects authorized access to the secured resource. In addition, the cryptographic component may provide unique identifiers of content, e.g., employing and MD5 hash to obtain a unique signature for a digital audio file. A cryptographic component may communicate to and/or with other components in a component collection, including itself, and/or facilities of the like. The cryptographic component supports encryption schemes allowing for the secure transmission of information across a communications network to enable the DSEE component to engage in secure transactions if so desired. The cryptographic component facilitates the secure accessing of resources on the DSEE and facilitates the access of secured resources on remote systems; i.e., it may act as a client and/or server of secured resources. Most frequently, the cryptographic component communicates with information server component(s), operating system component(s), other program components, and/or the like. The cryptographic component may contain, communicate, generate, obtain, and/or provide program component, system, user, and/or data communications, requests, and/or responses.

**DSEE Database Component**

The DSEE database component 2019 may be embodied in a database and its stored data. The database is a stored program component, which is executed by the CPU; the stored program component portion configuring the CPU to process the stored data. The database may be a conventional, fault tolerant, relational, scalable, secure database such as Oracle or Sybase. Relational databases are an extension of a flat file. Relational databases consist of a series of related tables. The tables are interconnected via a key field. Use of the key field allows the combination of the tables by indexing against the key field; i.e., the key fields act as dimensional pivot points for combining information from various tables. Relationships generally identify links maintained between tables by matching primary keys. Primary keys represent fields that uniquely identify the rows of a table in a relational database. More precisely, they uniquely identify rows of a table on the "one" side of a one-to-many relationship.

Alternatively, the DSEE database may be implemented using various standard data-structures, such as an array, hash, (linked) list, struct, structured text file (e.g., XML), table, and/or the like. Such data-structures may be stored in memory and/or in (structured) files. In another alternative, an object-oriented database may be used, such as Frontier, ObjectStore, Poet, Zope, and/or the like. Object databases can include a number of object collections that are grouped and/or linked together by common attributes; they may be related to other object collections by some common attributes. Object-oriented databases perform similarly to relational databases with the exception that objects are not just pieces of data but may have other types of capabilities encapsulated within a given object. The database may be implemented as a mix of data structures, objects, and relational structures. Databases may be consolidated and/or distributed in countless variations through standard data processing techniques. Portions of databases, e.g., tables, may be exported and/or imported and thus decentralized and/or integrated.

In one embodiment, the database component 2019 includes several tables 2019a-q. A User table 2019a may include fields such as, but not limited to: user_id, ssn, dob, first_name, last_name, age, state, address_firstline, address_secondline, zipcode, devices_list, contact_info, contact_type, alt_contact_info, alt_contact_type, user_equipment, user_plane, user_profile, and/or the like. An Account table 2019b may include fields such as, but not limited to: acct_id, acct_user, acct_history, acct_access, acct_status, acct_subscription, acct_profile, and/or the like.

A Profile table 2019c may include fields such as, but not limited to: prof_id, prof_assets, prof_history, prof_details, profile_aircraft, and/or the like. A Terrain table 2019d may include fields such as, but not limited to: terrain_id, terrain_details, terrain_parameters, terrain_var, and/or the like. A Resource table 2019e may include fields such as, but not limited to: resource_id, resource_location, resource_acct, and/or the like. An Equiptment table 2019f may include fields such as, but not limited to: equip_id, equip_location, equip_acct, equip_contact, equip_type, and/or the like. A Model table 2019g may include fields such as, but not limited to: model_id, model_assc, model_feedback, model_param, model_var, and/or the like. A Weather data table 2019h may include fields such as, but not limited to: weather_data_id, weather_source, weather_location, weather_data_type, weather_acct, weather_var, and/or the like. In one embodiment, the weather data table is populated through one or more weather data feeds. A Feedback table 2019i may include fields such as, but not limited to: feedback_id, feedback_source, source_location, feedback_time, feedback_acct, and/or the like.

An Aircraft table 2019j may include fields such as, but not limited to: aircraft_id, aircraft_type, aircraft_profile, aircraft_fuel_capacity, aircraft_route, aircraft_use, aircraft_owner, aircraft_location, aircraft_acct, aircraft_flightplan, aircraft_parameters, aircraft_sensor, aircraft_operator, aircraft_speed, aircraft_cruisevelocity, aircraft_airfoil, aircraft_wing_surface_area, aircraft_mass, aircraft_max_takeoff_mass, aircraft_alerts, and/or the like. A Flight Plan table 2019k may include fields such as, but not limited to: flightplan_id, flightplan_source, flightplan_start_location, flightplan_start_time, flightplan_end_location, flightplan_end_time, flightplan_acct, flightplan_aircraft, flightplan_profile, flightplan_type, flightplan_alerts, flightplan_parameters, and/or the like. An Airfoil table 20191 may include fields such as, but not limited to: airfoil_id, airfoil_source, airfoil_aircraft, airfoil_icing_profile, airfoil_icing_determination, airfoil_profile, airfoil_type, airfoil_pi, airfoil_alerts, airfoil_parameters, and/or the like. A Radar table 2019m may include fields such as, but not limited to: radar_id, radar_source, radar_profile, radar_data, radar_type, radar_feed, radar_alerts, radar_parameters, and/or the like. A Lightning data table 2019n may include fields such as, but not limited to: lightning_data_id, lightning_data_source, lightning_source_profile, lightning_location, lightning_type, lightning_feed, lighning_alerts, lightning_data_parameters, and/or the like. A Satellite table 2019o may include fields such as, but not limited to: satellite_id, satellite_source, satellite_profile, satellite_type, satellite_feed, satellite_parameters, and/or the like. A Sensor table 2019p may include fields such as, but not limited to: sensor_id, sensor_source, sensor_aircraft, sensor_type, sensor_profile, sensor_feed, sensor_location, sensor_altitude, sensor_EDR, sensor_turbulence, sensor_time, sensor_parameters, and/or the like. A PIREP table 2019p may include fields such as, but not limited to: PIREP_id, PIREP_source, PIREP_aircraft, PIREP_type, PIREP_lat, PIREP_lon, PIREP_alt, PIREP_time, PIREP_profile, PIREP_edr, PIREP_edr_adjustment, PIREP_turbulence, PIREP_parameters, and/or the like.

In one embodiment, the DSEE database component(s) may interact with other database systems. For example, when employing a distributed database system. In such an embodiment, queries and data access by any DSEE component may treat the combination of the DSEE database component results from a second segment in a distributed database system as an itegrated database layer. Such a database layer may be accessed as a single database entity, for example through a DSEE database component, by any DSEE component.

In one embodiment, user programs may contain various user interface primitives, which may serve to update the DSEE. Also, various accounts may require custom database tables depending upon the environments and the types of clients the DSEE may need to serve. It should be noted that any unique fields may be designated as a key field throughout. In an alternative embodiment, these tables have been decentralized into their own databases and their respective database controllers (i.e., individual database controllers for each of the above tables). Employing standard data processing techniques, one may further distribute the databases over several computer systemizations and/or storage devices. Similarly, configurations of the decentralized database controllers may be varied by consolidating and/or distributing the various database components 2019a-q. The DSEE may be configured to keep track of various settings, inputs, and parameters via database controllers.

The DSEE database may communicate to and/or with other components in a component collection, including itself, and/or facilities of the like. Most frequently, the DSEE database communicates with the DSEE component, other program components, and/or the like. The database may contain, retain, and provide information regarding other nodes and data.

**DSEE Component**

The DSEE component 2035 is a stored program component that is executed by a CPU. In one embodiment, the DSEE component incorporates any and/or all combinations of the aspects of the DSEE discussed in the previous figures. As such, the DSEE affects accessing, obtaining and the provision of information, services, transactions, and/or the like across various communications networks.

The DSEE component may transform weather data input via DSEE components into real-time and/or predictive turbulence feeds and displays, and/or the like and use of the DSEE. In one embodiment, the DSEE component 2035 takes inputs (e.g., weather forecast data, models, terrain, sensor data, and/or the like) etc., and transforms the inputs via various components (e.g., MWAVE component 2041; INTTURB component 2042; VVTURB2 component 2043; a Tracking component 2044; a Pathing component 2045; a Display component 2046; an Alerting component 2047; a Planning component 2048; a VVSTORMSE component 2049; an EDROBS component 2050; an LTG2EDR component 2051; and/or the like), into outputs (e.g., turbulence nowcasts, predictive flight path turbulence, real-time turbulence data feed, flight following alerts, flight path modifications/optimizations, turbulence alerts, and/or the like).

The DSEE component enabling access of information between nodes may be developed by employing standard development tools and languages such as, but not limited to: Apache components, Assembly, ActiveX, binary executables, (ANSI) (Objective-) C (++), C# and/or .NET, database adapters, CGI scripts, Java, JavaScript, mapping tools, procedural and object oriented development tools, PERL, PHP, Python, shell scripts, SQL commands, web application server extensions, web development environments and libraries (e.g., Microsoft's ActiveX; Adobe AIR, FLEX & FLASH; AJAX; (D)HTML; Dojo, Java; JavaScript; jQuery(UI); MooTools; Prototype; script.aculo.us; Simple Object Access Protocol (SOAP); SWFObject; Yahoo! User Interface; and/or the like), WebObjects, and/or the like. In one embodiment, the DSEE server employs a cryptographic server to encrypt and decrypt communications. The DSEE component may communicate to and/or with other components in a component collection, including itself, and/or facilities of the like. Most frequently, the DSEE component communicates with the DSEE database component(s), operating system component(s), other program components, and/or the like. The DSEE may contain, communicate, generate, obtain, and/or provide program component, system, user, and/or data communications, requests, and/or responses.

**Distributed DSEE Components**

The structure and/or operation of any of the DSEE node controller components may be combined, consolidated, and/or distributed in any number of ways to facilitate development and/or deployment. Similarly, the component collection may be combined in any number of ways to facilitate deployment and/or development. To accomplish this, one may integrate the components into a common code base or in a facility that can dynamically load the components on demand in an integrated fashion.

The component collection may be consolidated and/or distributed in countless variations through standard data processing and/or development techniques. Multiple instances of any one of the program components in the program component collection may be instantiated on a single node, and/or across numerous nodes to improve performance through load-balancing and/or data-processing techniques. Furthermore, single instances may also be distributed across multiple controllers and/or storage devices; e.g., databases. All program component instances and controllers working in concert may do so through standard data processing communication techniques.

The configuration of the DSEE controller will depend on the context of system deployment. Factors such as, but not limited to, the budget, capacity, location, and/or use of the underlying hardware resources may affect deployment requirements and configuration. Regardless of if the configuration results in more consolidated and/or integrated program components, results in a more distributed series of program components, and/or results in some combination between a consolidated and distributed configuration, data may be communicated, obtained, and/or provided. Instances of components consolidated into a common code base from the program component collection may communicate, obtain, and/or provide data. This may be accomplished through intra-application data processing communication techniques such as, but not limited to: data referencing (e.g., pointers), internal messaging, object instance variable communication, shared memory space, variable passing, and/or the like.

If component collection components are discrete, separate, and/or external to one another, then communicating, obtaining, and/or providing data with and/or to other components may be accomplished through inter-application data processing communication techniques such as, but not limited to: Application Program Interfaces (API) information passage; (distributed) Component Object Model ((D)COM), (Distributed) Object Linking and Embedding ((D)OLE), and/or the like), Common Object Request Broker Architecture (CORBA), Jini local and remote application program interfaces, JavaScript Object Notation (JSON), Remote Method Invocation (RMI), SOAP, Representational State Transfer (REST), process pipes, shared files, and/or the like. Messages sent between discrete component components for inter-application communication or within memory spaces of a singular component for intra-application communication may be facilitated through the creation and parsing of a grammar. A grammar may be developed by using development tools such as lex, yacc, XML, and/or the like, which allow for grammar generation and parsing capabilities, which in turn may form the basis of communication messages within and between components.

For example, a grammar may be arranged to recognize the tokens of an HTTP post command, e.g.:
w3c -post http://... Value 1

where Value1 is discerned as being a parameter because "http://" is part of the grammar syntax, and what follows is considered part of the post value. Similarly, with such a grammar, a variable "Value1" may be inserted into an "http://" post command and then sent. The grammar syntax itself may be presented as structured data that is interpreted and/or otherwise used to generate the parsing mechanism (e.g., a syntax description text file as processed by lex, yacc, etc.). Also, once the parsing mechanism is generated and/or instantiated, it itself may process and/or parse structured data such as, but not limited to: character (e.g., tab) delineated text, HTML, structured text streams, XML, and/or the like structured data. In another embodiment, inter-application data processing protocols themselves may have integrated and/or readily available parsers (e.g., JSON, SOAP, and/or like parsers) that may be employed to parse (e.g., communications) data. Further, the parsing grammar may be used beyond message parsing, but may also be used to parse: databases, data collections, data stores, structured data, and/or the like. Again, the desired configuration will depend upon the context, environment, and requirements of system deployment.

For example, in some implementations, the DSEE controller may be executing a PHP script implementing a Secure Sockets Layer ("SSL") socket server via the information server, which listens to incoming communications on a server port to which a client may send data, e.g., data encoded in JSON format. Upon identifying an incoming communication, the PHP script may read the incoming message from the client device, parse the received JSON-encoded text data to extract information from the JSON-encoded text data into PHP script variables, and store the data (e.g., client identifying information, etc.) and/or extracted information in a relational database accessible using the Structured Query Language ("SQL"). An exemplary listing, written substantially in the form of PHP/SQL commands, to accept JSON-encoded input data from a client device via a SSL connection, parse the data to extract variables, and store the data to a database, is provided below:

```
<?PHP
header('Content-Type: text/plain');
// set ip address and port to listen to for incoming data
$address = '192.168.0.100';
$port = 255;
// create a server-side SSL socket, listen for/accept incoming communication
$sock = socket_create(AF_INET, SOCK_STREAM, 0);
socket_bind($sock, $address, $port) or die('Could not bind to address');
socket_listen($sock);
$client = socket_accept($sock);
// read input data from client device in 1024 byte blocks until end of message
do {
   $input = "";
   $input = socket_read($client, 1024);
   $data .= $input;
} while($input != "");
// parse data to extract variables
```

```
$obj = json_decode($data, true);
// store input data in a database
mysql_connect("201.408.185.132",$DBserver,$password); // access database server
mysql_select("CLIENT_DB.SQL"); // select database to append
mysql_query("INSERT INTO UserTable (transmission)
VALUES ($data)"); // add data to UserTable table in a CLIENT database
mysql_close("CLIENT_DB.SQL"); // close connection to database
?>
```

Also, the following resources may be used to provide example embodiments regarding SOAP parser implementation:

http://www.xav.com/perl/site/lib/SOAP/Parser.html
http://publib.boulder.ibm.com/infocenter/tivihelp/v2r1/index.jsp?topic=/com.ibm.IBMDI.doc/referenceguide295 .htm

and other parser implementations:
http://publib.boulder.ibm.com/infocenter/tivihelp/v2r1/index.jsp?topic=/com.ibm.IBMDI. doc/referenceguide259.htm

## Claims

**1.** A dynamic storm environment short-term in-flight turbulence forecast processor-implemented method, comprising:

receiving a flight profile for an aircraft, the flight profile including an at least one initial route;
determining non-convective turbulence and a convective turbulence forecast for at least a portion of the at least one initial route;
receiving lightning data for at least the portion of the at least one initial route;
masking the convective turbulence forecast by the received lightning data;
projecting the masked convective turbulence forecast for a specified nowcast period;
integrating the projected masked convective turbulence forecast and the non-convective turbulence to determine a preliminary turbulence estimate;
determining a turbulence nowcast for the specified nowcast period, via a processor, using the preliminary turbulence estimate and at least one turbulence observation associated with the at least one portion of the at least one initial route;
determining turbulence threshold compliance based on the turbulence nowcast and the flight profile; and
generating a turbulence exception if the turbulence nowcast exceeds threshold turbulence parameters.

**2.** The method of claim 1, wherein the turbulence exception comprises: an alert for the aircraft; and/or determining an at least one adjusted route.

**3.** The method of claim 1, wherein the turbulence exception comprises determining an at least one adjusted route and optionally an alert for the Aircraft, the determination of the at least one adjusted route being based on flight profile data.

**4.** The method of claim 3, wherein the flight profile data comprises at least one of flight service type, aircraft airframe, available fuel reserves, and flight destination location.

**5.** The method of any preceding claim, wherein determining non-convective turbulence and a convective turbulence forecast for at least the portion of the at least one initial route includes:

determining a plurality of four-dimensional grid points for a specified temporal geographic space-time area associated with the portion of the at least one initial route;
obtaining atmospheric data based on the temporal geographic space-time area;
for each point of the plurality of four-dimensional grid points, determining at least one of: areas of atmospheric potential instability; a potential turbulence intensity at each grid point; an upper level non-dimensional gravity wave amplitude; a buoyant turbulent kinetic energy; a boundary layer eddy dissipation rate; storm velocity and eddy dissipation rate from updrafts; maximum updraft speed at grid point equilibrium level; storm divergence while the updraft speed is above the equilibrium level and identifying storm top; storm overshoot and storm drag; Doppler speed; eddy dissipation rate above the storm top; eddy dissipation rate from downdrafts; and determining at least one of the turbulent kinetic energy and/or the total eddy dissipation rate for each grid point.

**6.** The method of claim 5, wherein the atmospheric data comprises at least one of temperature data, wind data, humidity data, numerical weather forecast model data, and aircraft sensor data.

**7.** The method of claim 1, wherein determining non-convective turbulence and a convective turbulence forecast for at least the portion of the at least one initial route includes:

determining a plurality of four-dimensional grid points for a specified temporal geographic space-time area;
obtaining atmospheric data;
for each point of the plurality of four-dimensional grid point,

determining areas of atmospheric potential instability, and
determining a potential turbulence intensity at each grid point;

masking potential turbulence intensity at an at least one grid point; and
determining at least one of the turbulent kinetic energy and the total eddy dissipation rate for each grid point.

**8.** The method of claim 7, wherein the masking of potential turbulence intensity is based on at least one of convective observations, future-derived observations, lightning density, satellite data, and storm overshoot data.

**9.** The method of any of the preceding claims, wherein projecting the masked convective turbulence forecast includes moving each of a plurality of eddy dissipation rate grid points associated with the masked convective turbulence forecast based on storm advecting wind and storm propagating vector for the specified nowcast period.

**10.** The method of any of the preceding claims, wherein the at least one turbulence observation is from before the nowcast period.

**11.** The method of any of the preceding claims, wherein the at least one turbulence observation includes at least one of an in-flight turbulence observation and one or more real-time turbulence observations.

**12.** The method of any of the preceding claims, wherein the at least one turbulence observation includes PIREP data, wherein the PIREP data isweighted by an aircraft response factor.

**13.** The method of any of the preceding claims, wherein determining the turbulence nowcast using the preliminary turbulence estimate and the at least one turbulence observation is, for a particular point, based on the difference between the preliminary turbulence estimate for the point and the at least one turbulence observation, inversely weighted by a factor of the distance between the point and the at least one turbulence observation.

**14.** The method of any of the preceding claims, wherein determining non-convective turbulence and a convective turbulence forecast for at least a portion of the at least one initial route includes: determining non-dimensional mountain wave amplitude ($\hat{a}_{mv}$) and the mountain top wave drag; determining upper level non-dimensional gravity wave amplitude ($\hat{a}_{ul}$); summing $\hat{a}_{mv}$ and $\hat{a}_{ul}$ into ($\hat{a}$) to determine buoyant turbulent kinetic energy ($TKE_{buoy}$); setting $TKE_{buoy} = TKE_{mv} + TKE_{ul\text{-}buoy}$ if $\hat{a}$ is greater than 1, and setting $TKE_{buoy} = 0$ if $\hat{a}$ is not greater than 1; setting $TKE = TKE_{ul\text{-}wshr}$ if $\hat{a}$ greater than $\hat{a}_{min}$; determining a boundary layer EDR, wherein if $EDR_{bl}$ is greater than zero and $\hat{a}_{mv}$ is not enhanced, then setting $EDR = EDR_{bl}$, else setting EDR as $TKE^{1/3}$; and wherein determining non-convective turbulence and a convective turbulence forecast for at least a portion of the at least one initial route includes:

determining if an associated parcel or portion is moist, and if not, setting an associated EDR to null, wherein if the parcel or portion is moist, and if a lifted condensation level pressure is greater than a current layer pressure level, determining a difference between a parcel or portion temperature and environmental temperature and vertical acceleration, and wherein if the parcel or portion is moist, and if the lifted condensation level pressure is not greater than the current layer pressure level, setting the vertical acceleration to zero;
determining an updraft EDR and a downdraft EDR, the downdraft EDR based on actual downward vertical velocity; and
setting an overall EDR for the associated parcel or portion based on the larger of the updraft EDR and downdraft EDR.

15. The method of any of the preceding claims, wherein masking the convective turbulence forecast by the received lightning data comprises setting an associated EDR based on lightning data, and wherein determining non-convective turbulence and a convective turbulence forecast for at least a portion of the at least one initial route includes, for each parcel associated with the at least one portion of the at least one initial route: determining an indication of moist or not moist, wherein if the parcel not moist, setting EDR set to null, and if the parcel is moist and if the lifted condensation level pressure is not greater than the current layer pressure level, setting a vertical acceleration to zero, and if the parcel is moist and if the lifted condensation level pressure is greater than a current layer pressure level then determining a vertical acceleration based on parcel temperature and environmental temperature, wherein if the vertical acceleration is negative, setting the vertical velocity at the top to zero, while if the vertical acceleration is not negative, determining the vertical velocity at the top of the layer and the mean upward vertical velocity; and determining an updraft EDR based on the mean vertical velocity.

**Patentansprüche**

1. Dynamisches Prozessor-implementiertes Verfahren zum Vorhersagen von kurzzeitigen Flugturbulenzen in einer Sturmumgebung, das Folgendes beinhaltet:

   Empfangen eines Flugprofils für ein Flugzeug, wobei das Flugprofil wenigstens eine Anfangsroute beinhaltet;
   Bestimmen von nicht-konvektiver Turbulenz- und konvektiver Turbulenzvorhersage für wenigstens einen Teil der wenigstens einen Anfangsroute;
   Empfangen von Blitzdaten für wenigstens den Teil der wenigstens einen Anfangsroute;
   Maskieren der durch die empfangenen Blitzdaten vorhergesagten konvektiven Turbulenzen;
   Projizieren der maskierten konvektiven Turbulenzvorhersage für eine vorgegebene Nowcast-Periode;
   Integrieren der projizierten maskierten konvektiven Turbulenzvorhersage und der nicht-konvektiven Turbulenz zum Bestimmen einer vorläufigen Turbulenzschätzung;
   Bestimmen eines Turbulenz-Nowcast für die vorgegebene Nowcast-Periode über einen Prozessor anhand der vorläufigen Turbulenzschätzung und wenigstens einer mit dem wenigstens einen Teil der wenigstens einen Anfangsroute assoziierten Turbulenzbeobachtung;
   Bestimmen von Turbulenzschwellenkonformität auf der Basis des Turbulenz-Nowcast und des Flugprofils; und
   Erzeugen einer Turbulenzausnahme, wenn das Turbulenz-Nowcast Schwellenturbulenzparameter übersteigt.

2. Verfahren nach Anspruch 1, wobei die Turbulenzausnahme Folgendes umfasst: eine Warnung für das Flugzeug; und/oder Bestimmen wenigstens einer justierten Route.

3. Verfahren nach Anspruch 1, wobei die Turbulenzausnahme das Bestimmen von wenigstens einer justierten Route und optional einer Warnung für das Flugzeug beinhaltet, wobei das Bestimmen der wenigstens einen justierten Route auf Flugprofildaten basiert.

4. Verfahren nach Anspruch 3, wobei die Flugprofildaten wenigstens eines aus Flugdiensttyp, Flugzeugzelle, verfügbaren Kraftstoffreserven und Flugzielort beinhaltet.

5. Verfahren nach einem vorherigen Anspruch, wobei das Bestimmen von nicht-konvektiven Turbulenz- und konvektiven Turbulenzvorhersagen für wenigstens den Teil der wenigstens einen Anfangsroute Folgendes beinhaltet:

   Bestimmen mehrerer vierdimensionaler Gitterpunkte für ein mit dem Teil der wenigstens einen Anfangsroute assoziiertes vorgegebenes zeitliches geografisches Raum-Zeit-Gebiet;
   Einholen von atmosphärischen Daten auf der Basis des zeitlichen geografischen Raum-Zeit-Gebiets;
   Bestimmen, für jeden Punkt der mehreren vierdimensionalen Gitterpunkte, wenigstens eines der Folgenden: Gebiete mit atmosphärischer potentieller Instabilität; eine potentielle Turbulenzintensität an jedem Gitterpunkt; eine dimensionslose Schwerewellenamplitude der oberen Ebene; turbulente kinetische Auftriebsenergie; Grenzschicht-Eddy-Dissipationsrate; Sturmgeschwindigkeit und Eddy-Dissipationsrate von Aufwinden; maximale Aufwindgeschwindigkeit bei Gitterpunkt-Äquilibriumsniveau; Sturmdivergenz bei Aufwindgeschwindigkeit über Äquilibriumsniveau und Identifizieren der Sturmspitze; Sturm-Overshoot und Sturmwiderstand; Doppler-Geschwindigkeit; Eddy-Dissipationsrate über der Sturmspitze; Eddy-Dissipationsrate von Abwinden; und
   Bestimmen der turbulenten kinetischen Energie und/oder der Gesamt-Eddy-Dissipationsrate für jeden Gitterpunkt.

**6.** Verfahren nach Anspruch 5, wobei die atmosphärischen Daten wenigstens eines aus Temperaturdaten, Winddaten, Feuchtigkeitsdaten, numerischen Wettervorhersagemodelldaten und Flugzeugsensordaten umfassen.

**7.** Verfahren nach Anspruch 1, wobei das Bestimmen von nicht-konvektiven Turbulenz- und konvektiven Turbulenzvorhersagen für wenigstens den Teil der wenigstens einen Anfangsroute Folgendes beinhalten:

Bestimmen mehrerer vierdimensionaler Gitterpunkte für ein vorgegebenes zeitliches geografisches Raum-Zeit-Gebiet;
Einholen von atmosphärischen Daten;
für jeden Punkt der mehreren vierdimensionalen Gitterpunkte,

Bestimmen von Gebieten von atmosphärischer potentieller Instabilität, und
Bestimmen einer potentiellen Turbulenzintensität an jedem Gitterpunkt;

Maskieren von potentieller Turbulenzintensität an wenigstens einem Gitterpunkt; und
Bestimmen der turbulenten kinetischen Energie und/oder der Gesamt-Eddy-Dissipationsrate für jeden Gitterpunkt.

**8.** Verfahren nach Anspruch 7, wobei das Maskieren von potentieller Turbulenzintensität auf wenigstens einem aus konvektiven Beobachtungen, zukunftsorientierten Beobachtungen, Blitzdichte, Satellitendaten und Sturm-Overshoot-Daten basiert.

**9.** Verfahren nach einem der vorherigen Ansprüche, wobei das Projizieren der maskierten konvektiven Turbulenzvorhersage das Verlagern jedes von mehreren mit der maskierten konvektiven Turbulenzvorhersage assoziierten Eddy-Dissipationsraten-Gitterpunkte auf der Basis von Sturmadvektionswind und Sturmausbreitungsvektor für die vorgegebene Nowcast-Periode beinhaltet.

**10.** Verfahren nach einem der vorherigen Ansprüche, wobei die wenigstens eine Turbulenzbeobachtung von der Zeit vor der Nowcast-Periode kommt.

**11.** Verfahren nach einem der vorherigen Ansprüche, wobei die wenigstens eine Turbulenzbeobachtung eine Flugturbulenzbeobachtung und/oder eine oder mehrere Echtzeit-Turbulenzbeobachtungen beinhaltet.

**12.** Verfahren nach einem der vorherigen Ansprüche, wobei die wenigstens eine Turbulenzbeobachtung PIREP-Daten beinhaltet, wobei die PIREP-Daten durch einen Flugzeugreaktionsfaktor gewichtet werden.

**13.** Verfahren nach einem der vorherigen Ansprüche, wobei das Bestimmen des Turbulenz-Nowcast anhand der vorläufigen Turbulenzschätzung und der wenigstens einen Turubulenzbeobachtung für einen bestimmten Punkt auf der Basis der Differenz zwischen der vorläufigen Turbulenzschätzung für den Punkt und der wenigstens einen Turbulenzbeobachtung erfolgt, umgekehrt gewichtet durch einen Faktor der Distanz zwischen dem Punkt und der wenigstens einen Turbulenzbeobachtung.

**14.** Verfahren nach einem der vorherigen Ansprüche, wobei das Bestimmen von nicht-konvektiver Turbulenz- und konvektiver Turbulenzvorhersage für wenigstens einen Teil der wenigstens einen Anfangsroute Folgendes beinhaltet:
Bestimmen von dimensionsloser Bergwellenamplitude ($\hat{a}_{mv}$) und Berggipfel-Wellenwiderstand; Bestimmen von dimensionsloser Schwerewellenamplitude der oberen Ebene ($\hat{a}_{ul}$); Addieren von $\hat{a}_{mv}$ und $\hat{a}_{ul}$ zu ($\hat{a}$), um turbulente kinetische Auftriebsenergie ($TKE_{buoy}$) zu bestimmen; Setzen von $TKE_{buoy} = TKE_{mv} + TKE_{ul\text{-}buoy}$, wenn $\hat{a}$ größer ist als 1, und Setzen von $TKE_{buoy} = 0$, wenn $\hat{a}$ nicht größer ist als 1; Setzen von $TKE = TKE_{ul\text{-}wshr}$, wenn $\hat{a}$ größer ist als $\hat{a}_{min}$; Bestimmen eines Grenzschicht-EDR, wobei, wenn $EDR_{bl}$ größer als null und $\hat{a}_{mv}$ nicht erhöht ist, dann Setzen von $EDR = EDR_{bl}$, sonst Setzen von EDR als $TKE^{1/3}$; und wobei das Bestimmen von nicht-konvektiver Turbulenz- und konvektiver Turbulenzvorhersage für wenigstens einen Teil der wenigstens einen Anfangsroute Folgendes beinhaltet:

Feststellen, ob ein assoziiertes/r Paket oder Teil feucht ist, und wenn nicht, Setzen eines assoziierten EDR auf null, wobei, wenn das Paket oder der Teil feucht ist und wenn ein erhöhter Kondensationspegeldruck höher ist als ein aktueller Schichtdruckpegel, Bestimmen einer Differenz zwischen einer Paket- oder Teiltemperatur und Umgebungstemperatur und einer vertikalen Beschleunigung, und wobei, wenn das Paket oder der Teil feucht ist, und wenn der erhöhte Kondensationspegeldruck nicht größer ist als der aktuelle Schichtdruckpegel, Setzen der vertikalen Beschleunigung auf null;
Bestimmen eines Aufwind-EDR und eines Abwind-EDR, wobei der Abwind-EDR auf der tatsächlichen vertikalen Abwärtsgeschwindigkeit basiert; und
Setzen eines Gesamt-EDR für das/den assoziierte(n) Paket oder Teil auf der Basis des größeren aus Aufwind-EDR und Abwind-EDR.

**15.** Verfahren nach einem der vorherigen Ansprüche, wobei das Maskieren der konvektiven Turbulenzvorhersage durch die empfangenen Blitzdaten das Festlegen eines assoziierten EDR auf der Basis von Blitzdaten beinhaltet, und wobei das Bestimmen von nicht-konvektiver Turbulenz- und konvektiver Turbulenzvorhersage für wenigstens einen Teil der wenigstens einen Anfangsroute für jedes mit dem wenigstens einen Teil der wenigstens einen Anfangsroute assoziierte Paket Folgendes beinhaltet: Bestimmen einer Anzeige von feucht oder nicht feucht, dabei, wenn das Paket nicht feucht ist, Setzen von EDR auf null, und, wenn das Paket feucht ist und wenn der erhöhte Kondensationspegeldruck nicht größer ist als der aktuelle Schichtdruckpegel, Setzen einer vertikalen Beschleunigung auf null, und wenn das Paket feucht ist und wenn der erhöhte Kondensationspegeldruck größer ist als ein aktueller Schichtdruckpegel, dann Bestimmen einer vertikalen Beschleunigung auf der Basis von Pakettemperatur und Umgebungstemperatur, wobei, wenn die vertikale Beschleunigung negativ ist, Setzen der vertikalen Geschwindigkeit an der Spitze auf null beim Bestimmen, wenn die vertikale Beschleunigung nicht negativ ist, der vertikalen Geschwindigkeit am oberen Ende der Schicht und der mittleren vertikalen Aufwärtsgeschwindigkeit; und Bestimmen eines Aufwind-EDR auf der Basis der mittleren vertikalen Geschwindigkeit.

**Revendications**

**1.** Procédé de prévision de turbulence dans un environnement de tempête dynamique à court terme pendant le vol, mis en oeuvre sur un processeur, comprenant :

la réception d'un profil de vol pour un aéronef, le profil de vol comportant au moins un itinéraire initial ;
la détermination de turbulence non convective et d'une prévision de turbulence convective pour au moins une portion dudit au moins un itinéraire initial ;
la réception de données de foudre pour au moins la portion dudit au moins un itinéraire initial ;
le masquage de la prévision de turbulence convective par les données de foudre reçues ;
la projection de la prévision de turbulence convective masquée pendant une période de prévision immédiate spécifiée ;
l'intégration de la prévision de turbulence convective masquée projetée et de la turbulence non convective pour déterminer une estimation de turbulence préliminaire ;
la détermination d'une prévision de turbulence immédiate pour la période de prévision immédiate spécifiée, au moyen d'un processeur, en utilisant l'estimation de turbulence préliminaire et au moins une observation de turbulence associée à ladite au moins une portion dudit au moins un itinéraire initial ;
la détermination de la conformité à un seuil de turbulence basé sur la prévision de turbulence immédiate et le profil de vol ; et
la génération d'une exception de turbulence si la prévision de turbulence immédiate dépasse des paramètres de turbulence seuil.

**2.** Procédé selon la revendication 1, dans lequel l'exception de turbulence comprend : une alerte pour l'aéronef ; et/ou la détermination d'au moins un itinéraire ajusté.

**3.** Procédé selon la revendication 1, dans lequel l'exception de turbulence comprend la détermination d'au moins un itinéraire ajusté et facultativement une alerte pour l'aéronef, la détermination dudit au moins un itinéraire ajusté étant basée sur des données de profil de vol.

**4.** Procédé selon la revendication 3, dans lequel les données de profil de vol comprennent l'un au moins parmi un type de service aérien, la cellule de l'aéronef, les réserves de carburant disponibles et le lieu de destination du vol.

**5.** Procédé selon l'une quelconque des revendications précédentes, dans lequel la détermination de turbulence non convective et une prévision de turbulence convective pour au moins la portion dudit au moins un itinéraire initial comporte :

la détermination d'une pluralité de points de grille à quatre dimensions pour une zone espace-temps géographique temporelle spécifiée associée à la portion dudit au moins un itinéraire initial ;
l'obtention de données atmosphériques basées sur la zone espace-temps géographique temporelle ;
pour chaque point de la pluralité de points de grille à quatre dimensions, la détermination de l'un au moins parmi : des zones d'instabilité atmosphérique potentielle ; une intensité de turbulence potentielle à chaque point de grille ; une amplitude d'ondes de gravité non dimensionnelle de niveau supérieur ; une énergie cinétique flottante turbulente ; un taux de dissipation de tourbillon en couche limite ; une vitesse de tempête et un taux dissipation de tourbillon venant de courants ascendants ; une vitesse maximale de courant ascendant au niveau d'équilibre du point de grille ; une divergence de tempête tandis que la vitesse de courant ascendant est supérieure au niveau d'équilibre et identification du point culminant de la tempête ; un dépassement de tempête et une résistance de tempête ; une vitesse Doppler ; un taux de dissipation de tourbillon au-dessus du point culminant de la tempête ; un taux de dissipation de tourbillon venant de courants descendants ; et
la détermination de l'un au moins parmi l'énergie cinétique turbulente et/ou le taux total de dissipation de tourbillon pour chaque point de grille.

**6.** Procédé selon la revendication 5, dans lequel les données atmosphériques comprennent l'une au moins parmi des données de température, des données de vent, des données d'humidité, des données de modèle de prévision météorologique numérique et des données de capteurs de l'aéronef.

**7.** Procédé selon la revendication 1, dans lequel la détermination de turbulence non convective et une prévision de turbulence convective pour au moins la portion dudit au moins un itinéraire initial comporte :

la détermination d'une pluralité de points de grille à quatre dimensions pour une zone espace-temps géographique temporelle spécifiée ;
l'obtention de données atmosphériques ;
pour chaque point de la pluralité de points de grille à quatre dimensions,

la détermination de zones d'instabilité atmosphérique potentielle, et
la détermination d'une intensité de turbulence potentielle à chaque point de grille ;

le masquage de l'intensité de turbulence potentielle à au moins un point de grille ; et
la détermination de l'un au moins parmi l'énergie cinétique turbulente et du taux total de dissipation de tourbillon pour chaque point de grille.

**8.** Procédé selon la revendication 7, dans lequel le masquage de l'intensité de turbulence potentielle est basée sur l'une au moins parmi des observations convectives, des observations dérivées futures, une densité de foudre, des données par satellite et des données de dépassement de tempête.

**9.** Procédé selon l'une quelconque des revendications précédentes, dans lequel la projection de la prévision de turbulence convective masquée comporte le déplacement de chacun d'une pluralité de points de grille de taux de dissipation de tourbillon associée à la prévision de turbulence convective masquée, basé sur le vent de tempête advectif et le vecteur de propagation de la tempête pour la période de prévision immédiate spécifiée.

**10.** Procédé selon l'une quelconque des revendications précédentes, dans lequel ladite au moins une observation de turbulence est antérieure à la période de prévision immédiate.

**11.** Procédé selon l'une quelconque des revendications précédentes, dans lequel ladite au moins une observation de turbulence comporte l'une au moins parmi une observation de turbulence en vol et une ou plusieurs observations de turbulence en temps réel.

**12.** Procédé selon l'une quelconque des revendications précédentes, dans lequel ladite au moins une observation de turbulence comporte des données PIREP, dans lequel les données PIREP sont pondérées par un coefficient de réponse de l'aéronef.

**13.** Procédé selon l'une quelconque des revendications précédentes, dans lequel la détermination de la prévision de turbulence immédiate en utilisant l'estimation de turbulence préliminaire et ladite au moins une observation de turbulence est, pour un point particulier, basée sur la différence entre l'estimation de turbulence préliminaire pour le point et ladite au moins une observation de turbulence, inversement pondérée par un coefficient de la distance entre le point et ladite au moins une observation de turbulence.

**14.** Procédé selon l'une quelconque des revendications précédentes, dans lequel la détermination de turbulence non convective et une prévision de turbulence convective pour au moins une portion dudit au moins un itinéraire initial comporte : la détermination d'une amplitude d'onde orographique non dimensionnelle ($â_{mv}$) et la résistance de l'onde orographique au point culminant ; la détermination d'une amplitude d'onde de gravité non dimensionnelle de niveau supérieur ($â_{ul}$) ; la sommation d'$â_{mv}$ et $â_{ul}$ pour donner (â) afin de déterminer l'énergie cinétique flottante turbulente ($TKE_{buoy}$) ; la fixation de $TKE_{buoy} = TKE_{mv} + TKE_{ul\text{-}buoy}$ si â est supérieur à 1, et la fixation de $TKE_{buoy} = 0$ si â n'est pas supérieur à 1 ; la fixation de $TKE = TKE_{ul\text{-}wshr}$ si â est supérieur à $â_{min}$ ; la détermination d'une couche limite EDR où, si $EDR_{bl}$ est supérieur à zéro et $â_{mv}$ n'est pas renforcée, la fixation d'$EDR = EDR_{bl}$, sinon la fixation d'EDR égal à $TKE^{1/3}$ ; et dans lequel la détermination de turbulence non convective et une prévision de turbulence convective pour au moins une portion dudit au moins un itinéraire initial comporte :

la détermination si une parcelle ou portion associée est humide et, si ce n'est pas le cas, la fixation d'une EDR associée à zéro, dans lequel, si la parcelle ou portion est humide et si une pression de niveau de condensation élevée est supérieure à un niveau de pression de couche actuel, on détermine une différence entre une température de parcelle ou portion et la température environnementale et l'accélération verticale, et dans lequel, si la parcelle ou portion est humide et si la pression de niveau de condensation élevée n'est pas supérieure au niveau de pression de couche actuel, on fixe l'accélération verticale à zéro ;

la détermination d'une EDR de courant ascendant et d'une EDR de courant descendant, l'EDR de courant descendant étant basée sur la vitesse verticale vers le bas actuelle ; et

la fixation d'une EDR globale pour la parcelle ou portion associée, basée sur la plus grande de l'EDR de courant ascendant et l'EDR de courant descendant.

**15.** Procédé selon l'une quelconque des revendications précédentes, dans lequel le masquage de la prévision de turbulence convective par les données de foudre reçues comprend la fixation d'une EDR associée basée sur les données de foudre, et dans lequel la détermination de turbulence non convective et une prévision de turbulence convective pour au moins une portion dudit au moins un itinéraire initial comporte, pour chaque parcelle associée à ladite au moins une portion dudit au moins un itinéraire initial : la détermination d'une indication humide ou non humide, dans lequel, si la parcelle n'est pas humide, on fixe l'EDR à zéro, et si la parcelle est humide et si la pression de niveau de condensation élevée n'est pas supérieure au niveau de pression de couche actuel, on fixe une accélération verticale à zéro, et si la parcelle est humide et si la pression de niveau de condensation élevée est supérieure à un niveau de pression de couche actuel, on détermine une accélération verticale basée sur la température de parcelle et la température environnementale, dans lequel, si l'accélération verticale est négative, on fixe la vitesse verticale au point culminant à zéro, tandis que si l'accélération verticale n'est pas négative, on détermine la vitesse verticale au point culminant de la couche et la vitesse verticale moyenne vers le haut ; et la détermination d'une EDR de courant ascendant basée sur la vitesse verticale moyenne.

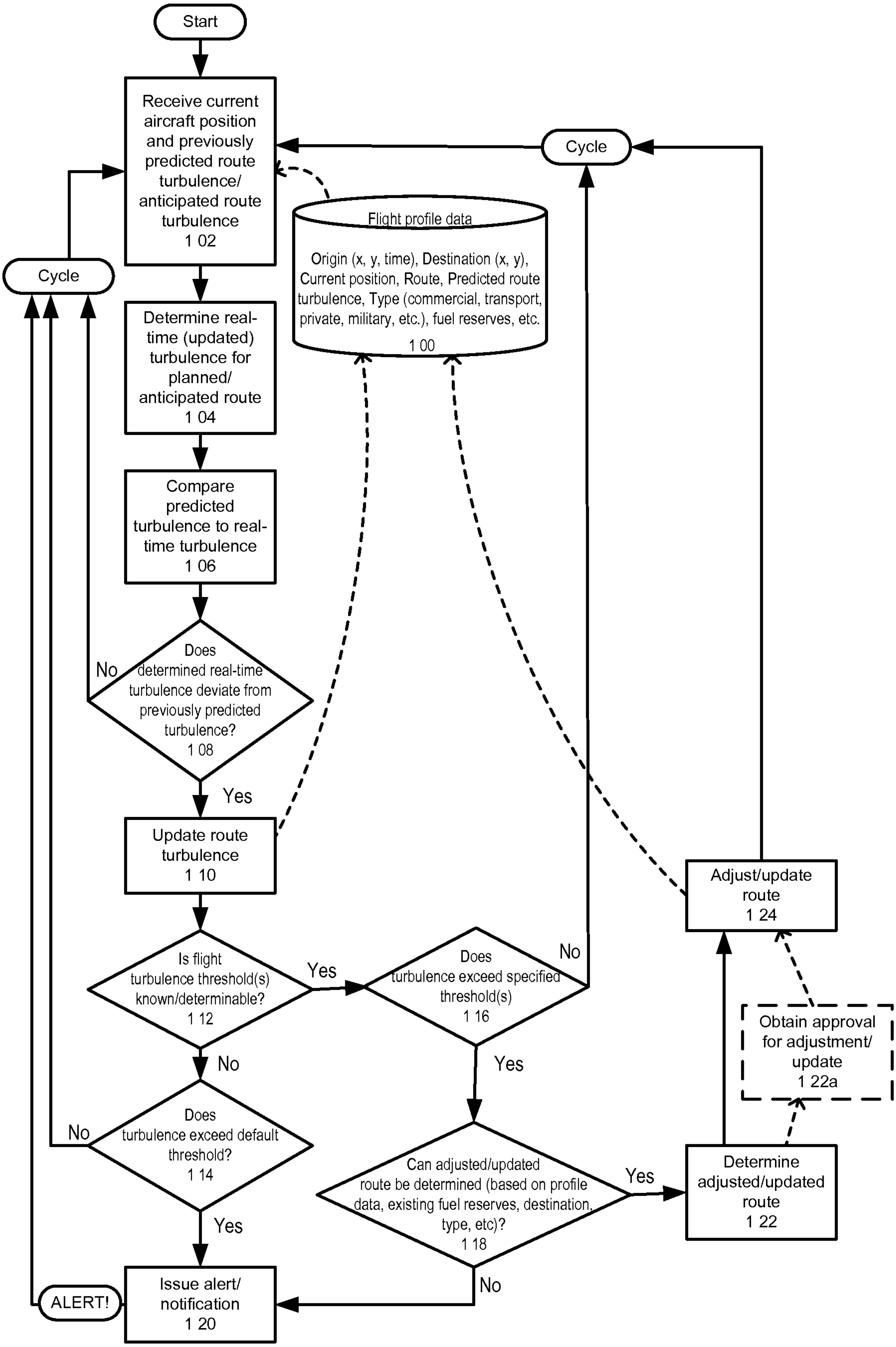
Start
Receive current aircraft position and previously predicted route turbulence/ anticipated route turbulence
1 02
Cycle
Flight profile data
Origin (x, y, time), Destination (x, y), Current position, Route, Predicted route turbulence, Type (commercial, transport, private, military, etc.), fuel reserves, etc.
1 00
Cycle
Determine real-time (updated) turbulence for planned/ anticipated route
1 04
Compare predicted turbulence to real-time turbulence
1 06
No
Does determined real-time turbulence deviate from previously predicted turbulence?
1 08
Yes
Update route turbulence
1 10
Is flight turbulence threshold(s) known/determinable?
1 12
Yes
Does turbulence exceed specified threshold(s)
1 16
No
Adjust/update route
1 24
Obtain approval for adjustment/ update
1 22a
No
Yes
No
Does turbulence exceed default threshold?
1 14
Yes
Can adjusted/updated route be determined (based on profile data, existing fuel reserves, destination, type, etc)?
1 18
Yes
Determine adjusted/updated route
1 22
No
ALERT!
Issue alert/ notification
1 20

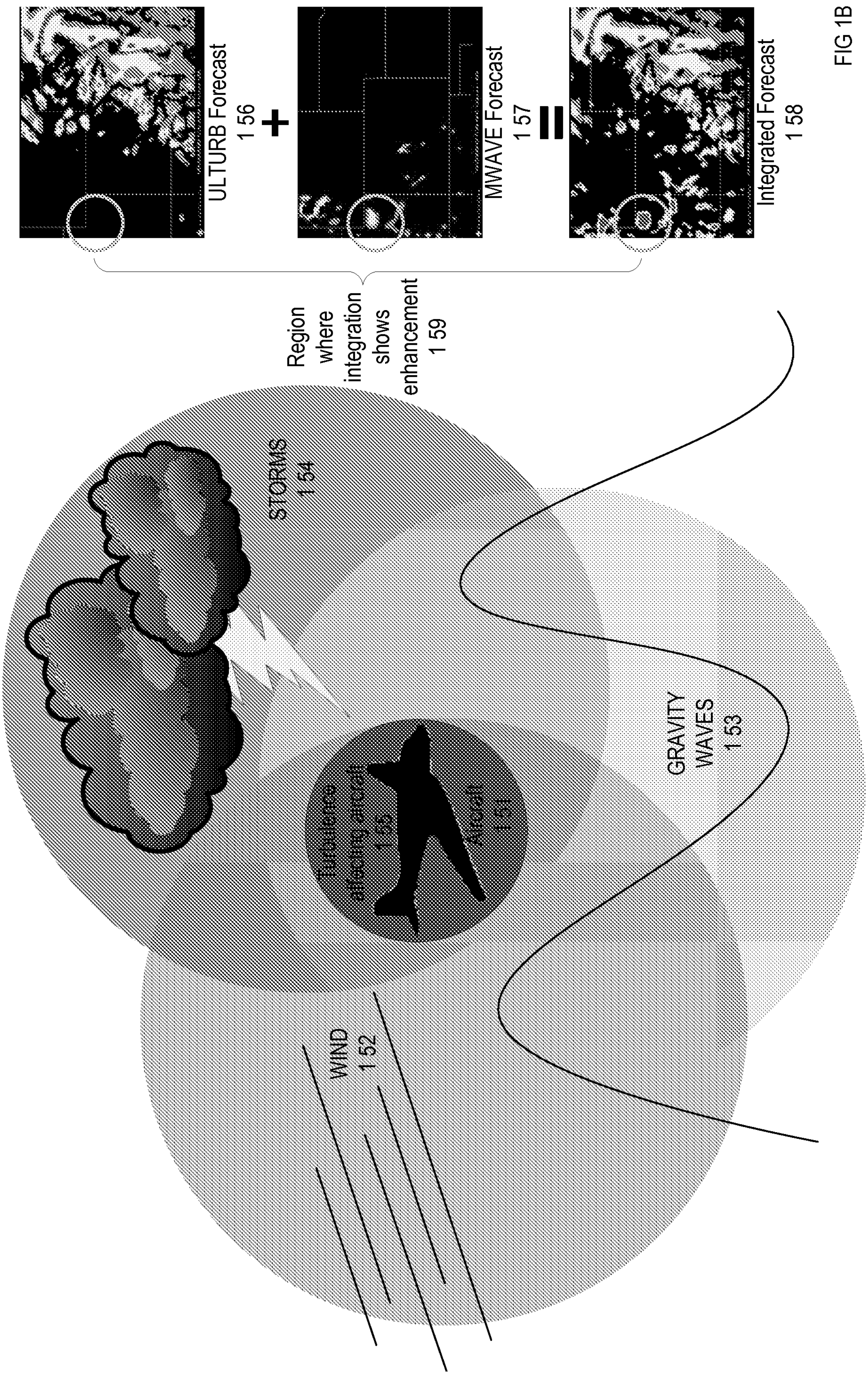
ULTURB Forecast
1 56
MWAVE Forecast
1 57
Integrated Forecast
1 58
Region where integration shows enhancement
1 59
STORMS
1 54
GRAVITY WAVES
1 53
Turbulence affecting aircraft
1 55
Aircraft
1 51
WIND
1 52

FIG 1B

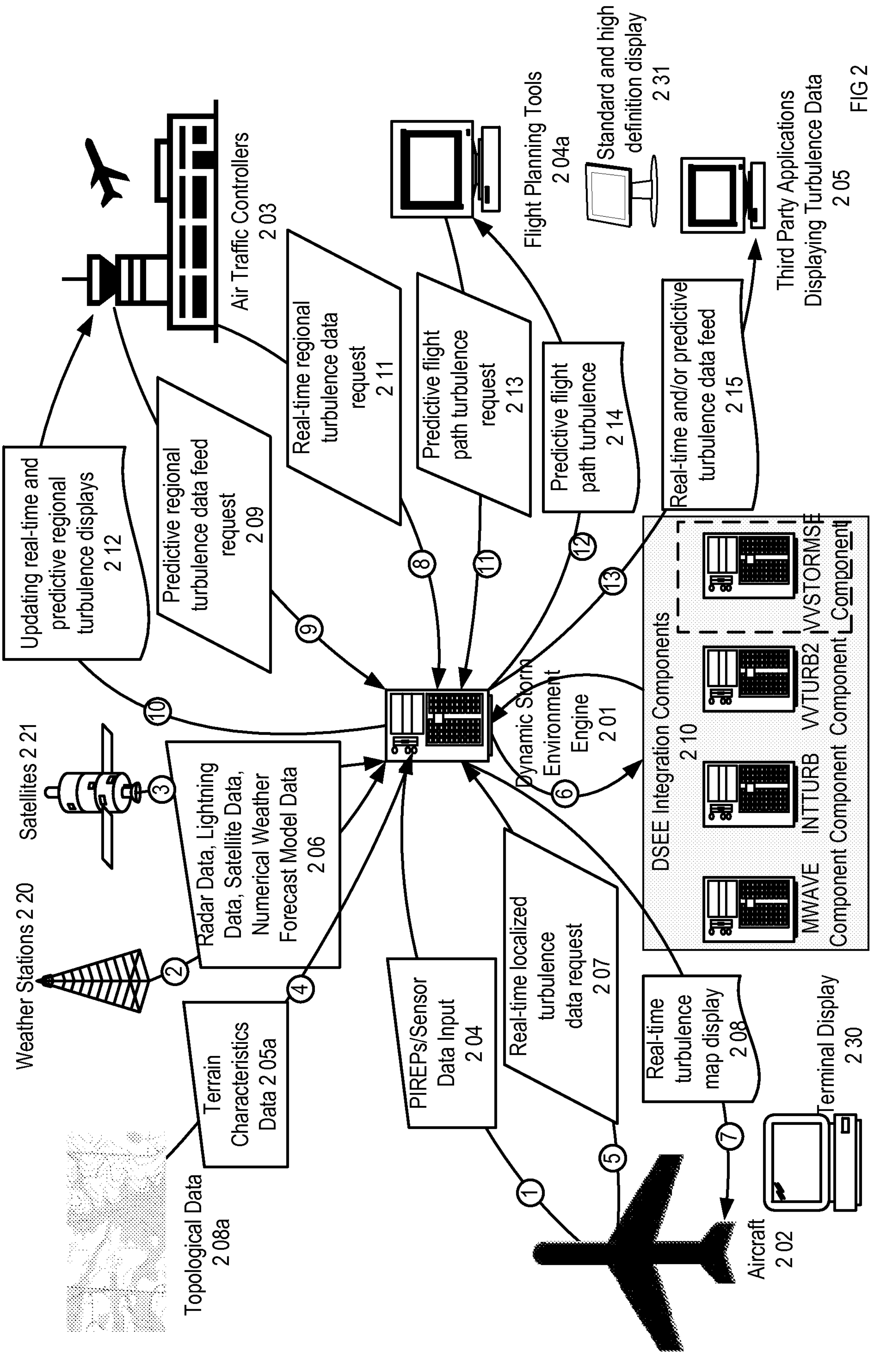
Weather Stations 2 20
Satellites 2 21
Topological Data 2 08a
Terrain Characteristics Data 2 05a
Radar Data, Lightning Data, Satellite Data, Numerical Weather Forecast Model Data 2 06
Updating real-time and predictive regional turbulence displays 2 12
Predictive regional turbulence data feed request 2 09
Air Traffic Controllers 2 03
Real-time regional turbulence data request 2 11
Predictive flight path turbulence request 2 13
Predictive flight path turbulence 2 14
Flight Planning Tools 2 04a
Standard and high definition display 2 31
Real-time and/or predictive turbulence data feed 2 15
Third Party Applications Displaying Turbulence Data 2 05
Dynamic Storm Environment Engine 2 01
DSEE Integration Components 2 10
MWAVE Component
INTTURB Component
VVTURB2 Component
VVSTORMSE Component
PIREPs/Sensor Data Input 2 04
Real-time localized turbulence data request 2 07
Real-time turbulence map display 2 08
Terminal Display 2 30
Aircraft 2 02
1
2
3
4
5
6
7
8
9
10
11
12
13

FIG 2

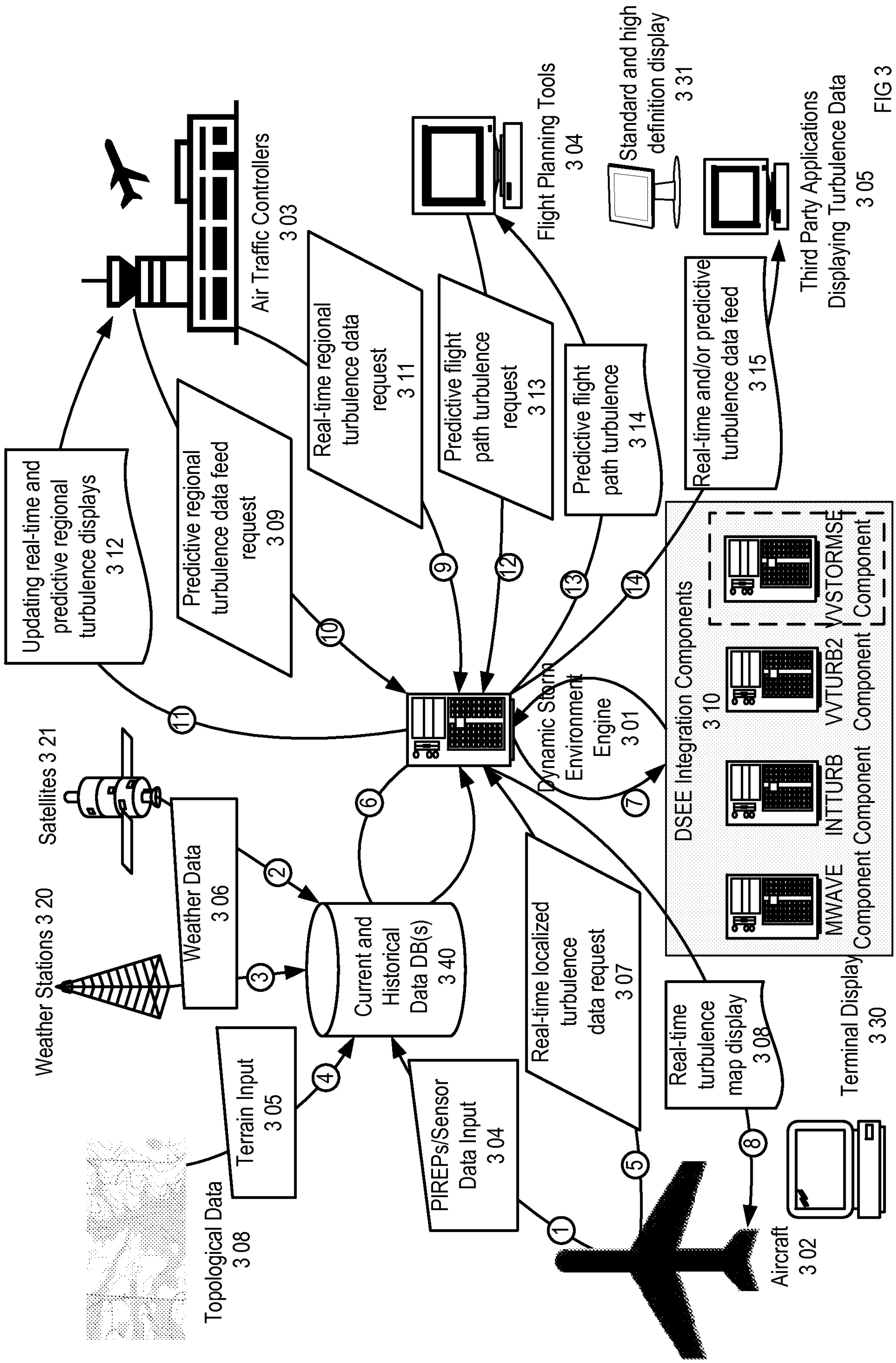
Weather Stations 3 20
Satellites 3 21
Weather Data
3 06
Topological Data
3 08
Terrain Input
3 05
PIREPs/Sensor
Data Input
3 04
Current and
Historical
Data DB(s)
3 40
Aircraft
3 02
Real-time localized
turbulence
data request
3 07
Real-time
turbulence
map display
3 08
Terminal Display
3 30
Dynamic Storm
Environment
Engine
3 01
DSEE Integration Components
3 10
MWAVE
Component
INTTURB
Component
VVTURB2
Component
VVSTORMSE
Component
Updating real-time and
predictive regional
turbulence displays
3 12
Predictive regional
turbulence data feed
request
3 09
Real-time regional
turbulence data
request
3 11
Air Traffic Controllers
3 03
Predictive flight
path turbulence
request
3 13
Predictive flight
path turbulence
3 14
Flight Planning Tools
3 04
Real-time and/or predictive
turbulence data feed
3 15
Standard and high
definition display
3 31
Third Party Applications
Displaying Turbulence Data
3 05
1
2
3
4
5
6
7
8
9
10
11
12
13
14
FIG 3

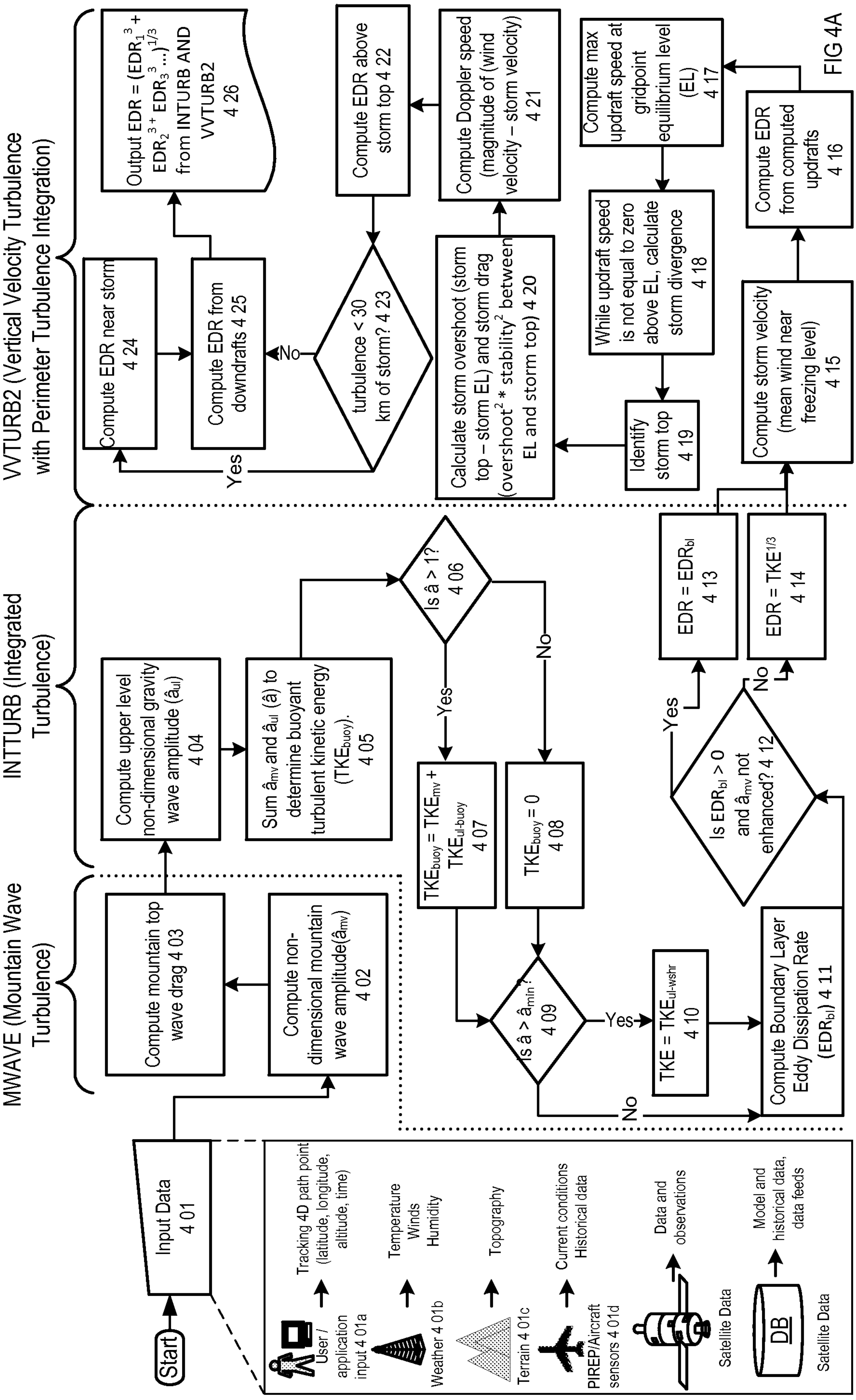
Start
Input Data 4 01
User / application input 4 01a
Tracking 4D path point (latitude, longitude, altitude, time)
Weather 4 01b
Temperature Winds Humidity
Terrain 4 01c
Topography
PIREP/Aircraft sensors 4 01d
Current conditions Historical data
Satellite Data
Data and observations
DB
Satellite Data
Model and historical data, data feeds
MWAVE (Mountain Wave Turbulence)
Compute non-dimensional mountain wave amplitude($\hat{a}_{mv}$) 4 02
Compute mountain top wave drag 4 03
INTTURB (Integrated Turbulence)
Compute upper level non-dimensional gravity wave amplitude ($\hat{a}_{ul}$) 4 04
Sum $\hat{a}_{mv}$ and $\hat{a}_{ul}$ ($\hat{a}$) to determine buoyant turbulent kinetic energy ($TKE_{buoy}$). 4 05
Is $\hat{a}$ > 1? 4 06
Yes
No
$TKE_{buoy} = TKE_{mv} + TKE_{ul-buoy}$ 4 07
$TKE_{buoy} = 0$ 4 08
Is $\hat{a} > \hat{a}_{min}$? 4 09
Yes
No
$TKE = TKE_{ul-wshr}$ 4 10
Compute Boundary Layer Eddy Dissipation Rate ($EDR_{bl}$) 4 11
Is $EDR_{bl} > 0$ and $\hat{a}_{mv}$ not enhanced? 4 12
Yes
No
$EDR = EDR_{bl}$ 4 13
$EDR = TKE^{1/3}$ 4 14
VVTURB2 (Vertical Velocity Turbulence with Perimeter Turbulence Integration)
Compute storm velocity (mean wind near freezing level) 4 15
Compute EDR from computed updrafts 4 16
Compute max updraft speed at gridpoint equilibrium level (EL) 4 17
While updraft speed is not equal to zero above EL, calculate storm divergence 4 18
Identify storm top 4 19
Calculate storm overshoot (storm top – storm EL) and storm drag (overshoot$^2$ * stability$^2$ between EL and storm top) 4 20
Compute Doppler speed (magnitude of (wind velocity – storm velocity) 4 21
Compute EDR above storm top 4 22
turbulence < 30 km of storm? 4 23
Yes
No
Compute EDR near storm 4 24
Compute EDR from downdrafts 4 25
Output EDR = $(EDR_1^3 + EDR_2^3 + EDR_3^3 \ldots)^{1/3}$ from INTURB AND VVTURB2 4 26

FIG 4A

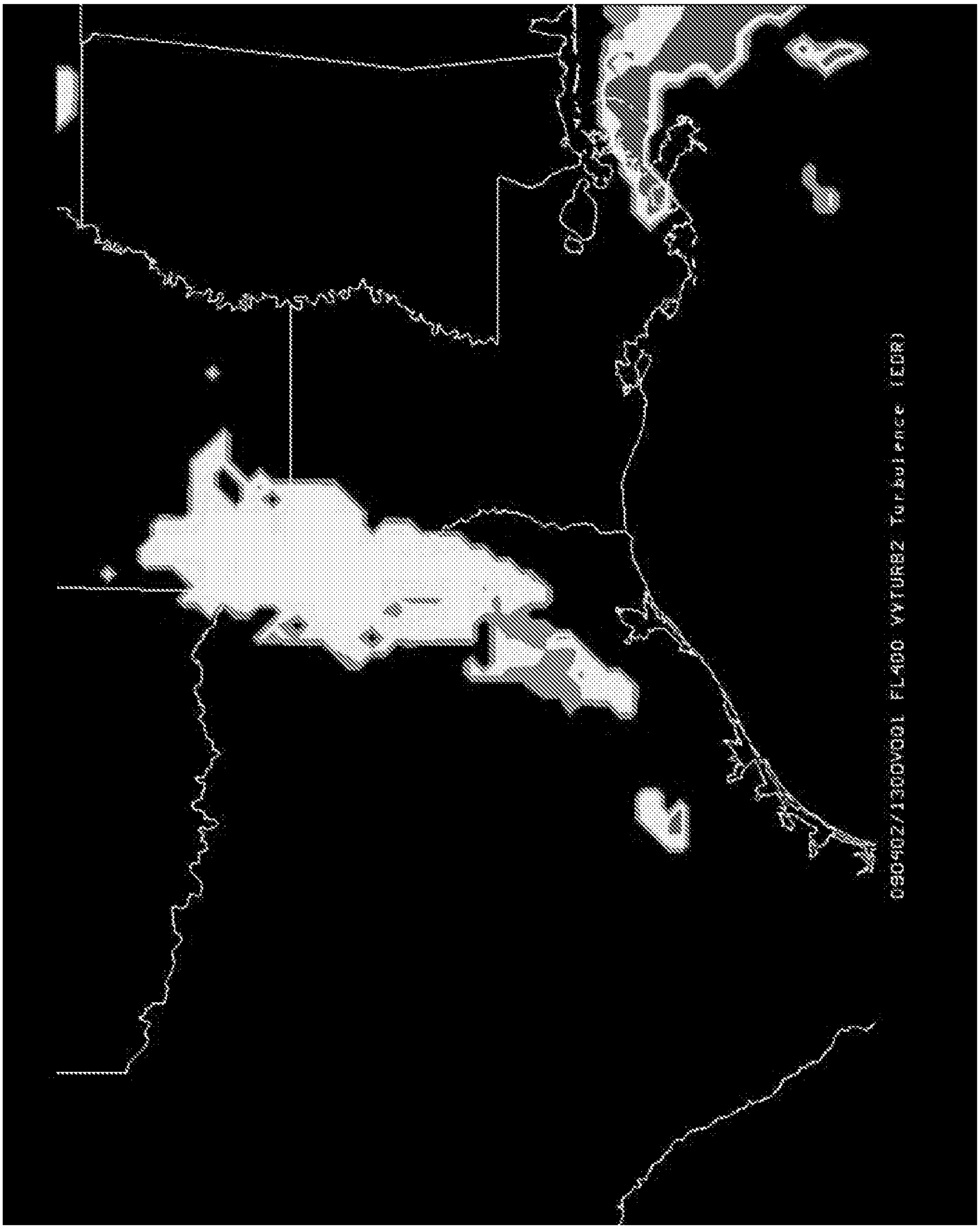


FIG. 4B

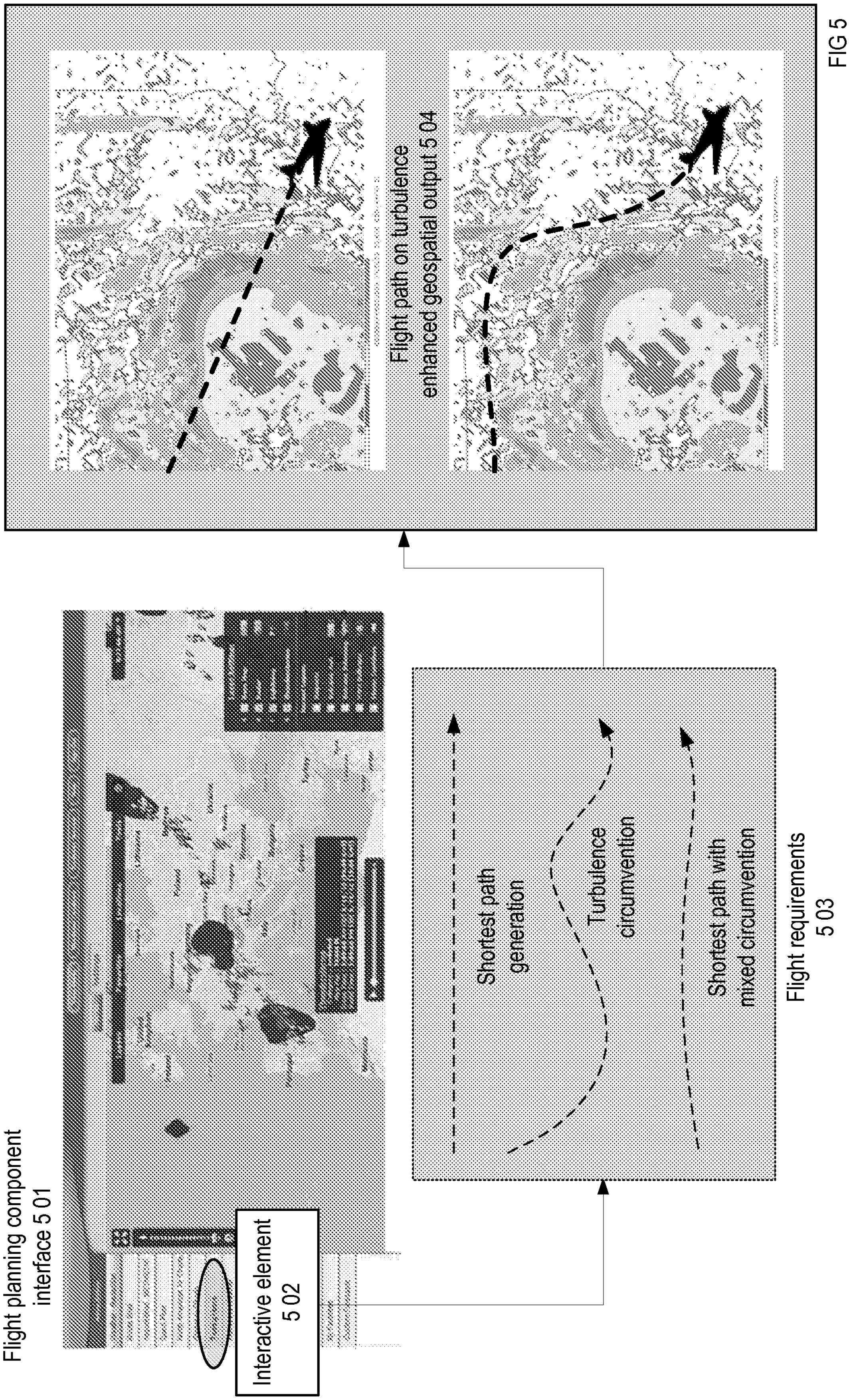
Flight planning component interface 5 01
Interactive element 5 02
Shortest path generation
Turbulence circumvention
Shortest path with mixed circumvention
Flight requirements 5 03
Flight path on turbulence enhanced geospatial output 5 04

FIG 5

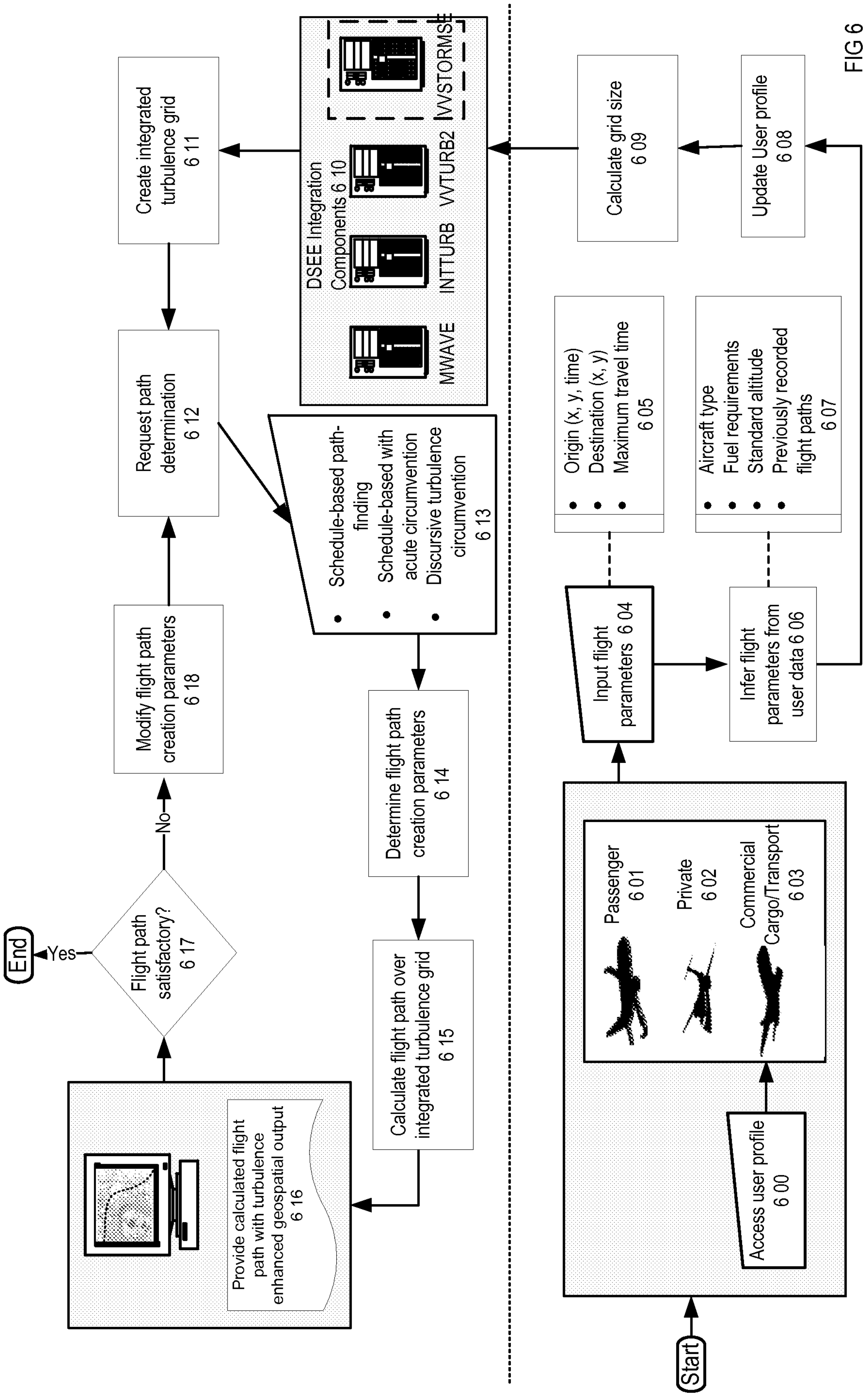
Start
Access user profile 6 00
Passenger 6 01
Private 6 02
Commercial Cargo/Transport 6 03
Input flight parameters 6 04
Origin (x, y, time)
Destination (x, y)
Maximum travel time
6 05
Infer flight parameters from user data 6 06
Aircraft type
Fuel requirements
Standard altitude
Previously recorded flight paths
6 07
Update User profile 6 08
Calculate grid size 6 09
DSEE Integration Components 6 10
MWAVE
INTTURB
VVTURB2
VVSTORMSE
Create integrated turbulence grid 6 11
Request path determination 6 12
Schedule-based path-finding
Schedule-based with acute circumvention
Discursive turbulence circumvention
6 13
Determine flight path creation parameters 6 14
Calculate flight path over integrated turbulence grid 6 15
Provide calculated flight path with turbulence enhanced geospatial output 6 16
Flight path satisfactory? 6 17
Yes
End
No
Modify flight path creation parameters 6 18

FIG 6

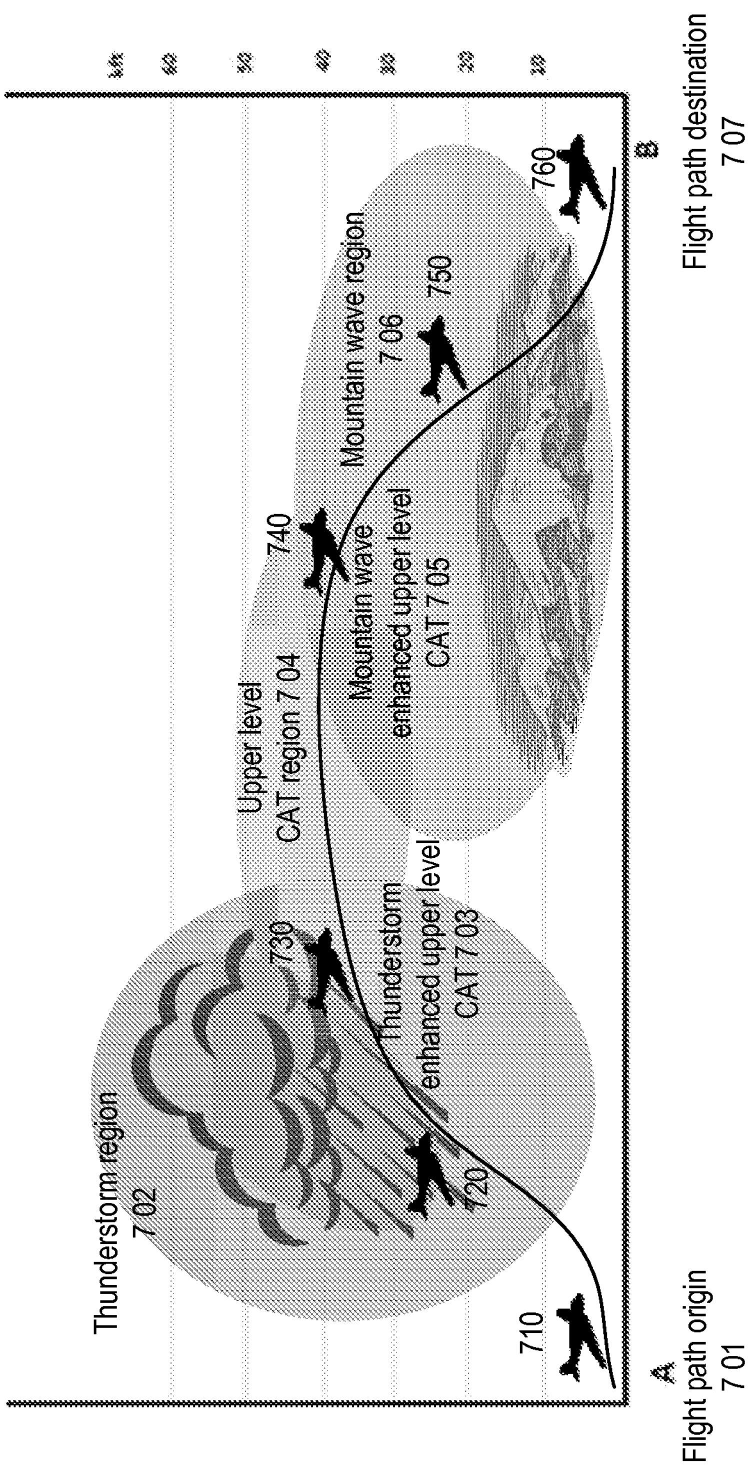
Thunderstorm region
7 02
Upper level
CAT region 7 04
Mountain wave region
7 06
Thunderstorm
enhanced upper level
CAT 7 03
Mountain wave
enhanced upper level
CAT 7 05
710
720
730
740
750
760
A
Flight path origin
7 01
B
Flight path destination
7 07

FIG 7

FIG 8

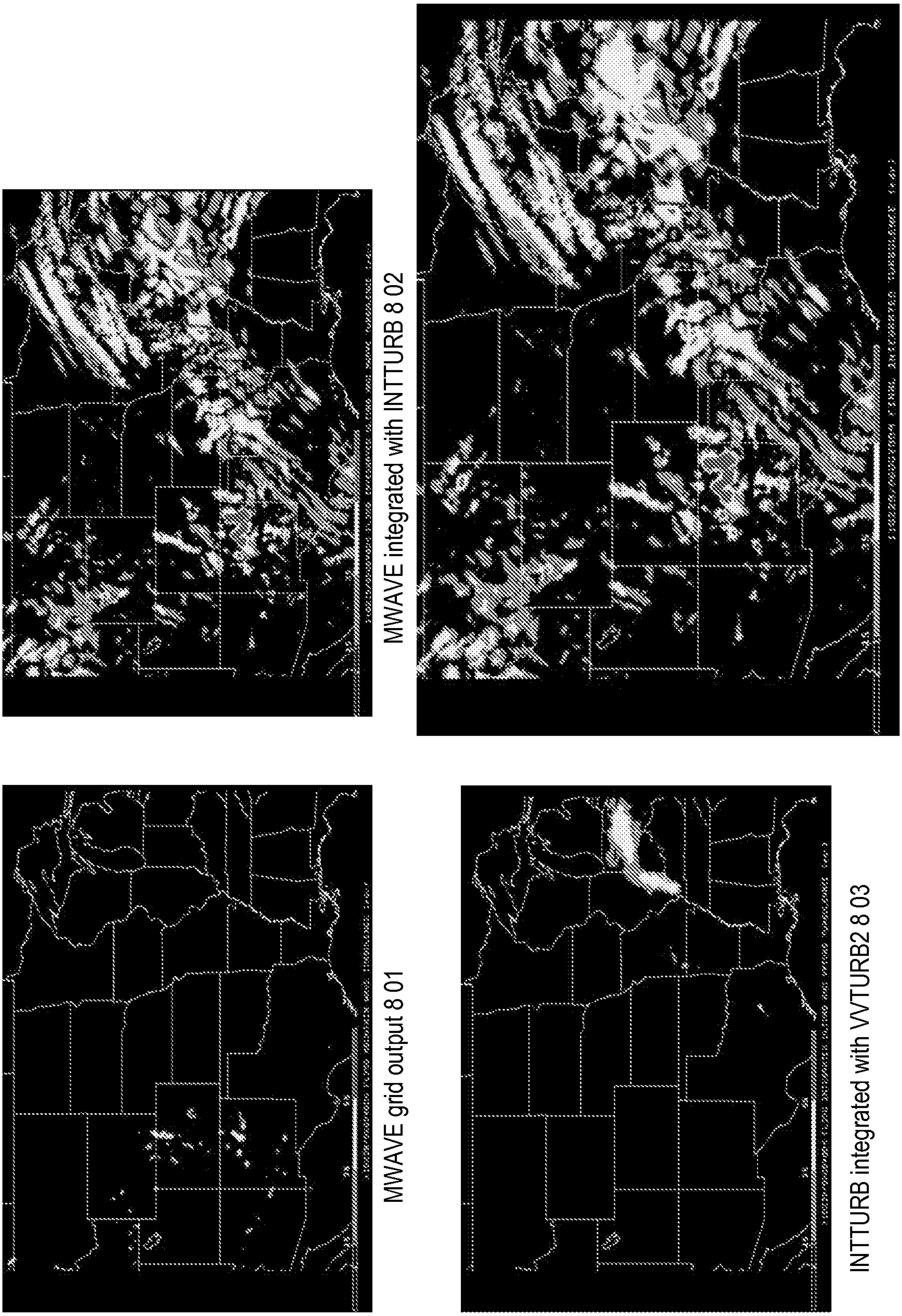

MWAVE grid output 8 01

MWAVE integrated with INTTURB 8 02

INTTURB integrated with VVTURB2 8 03

Finalized output of full turbulence integration 8 04

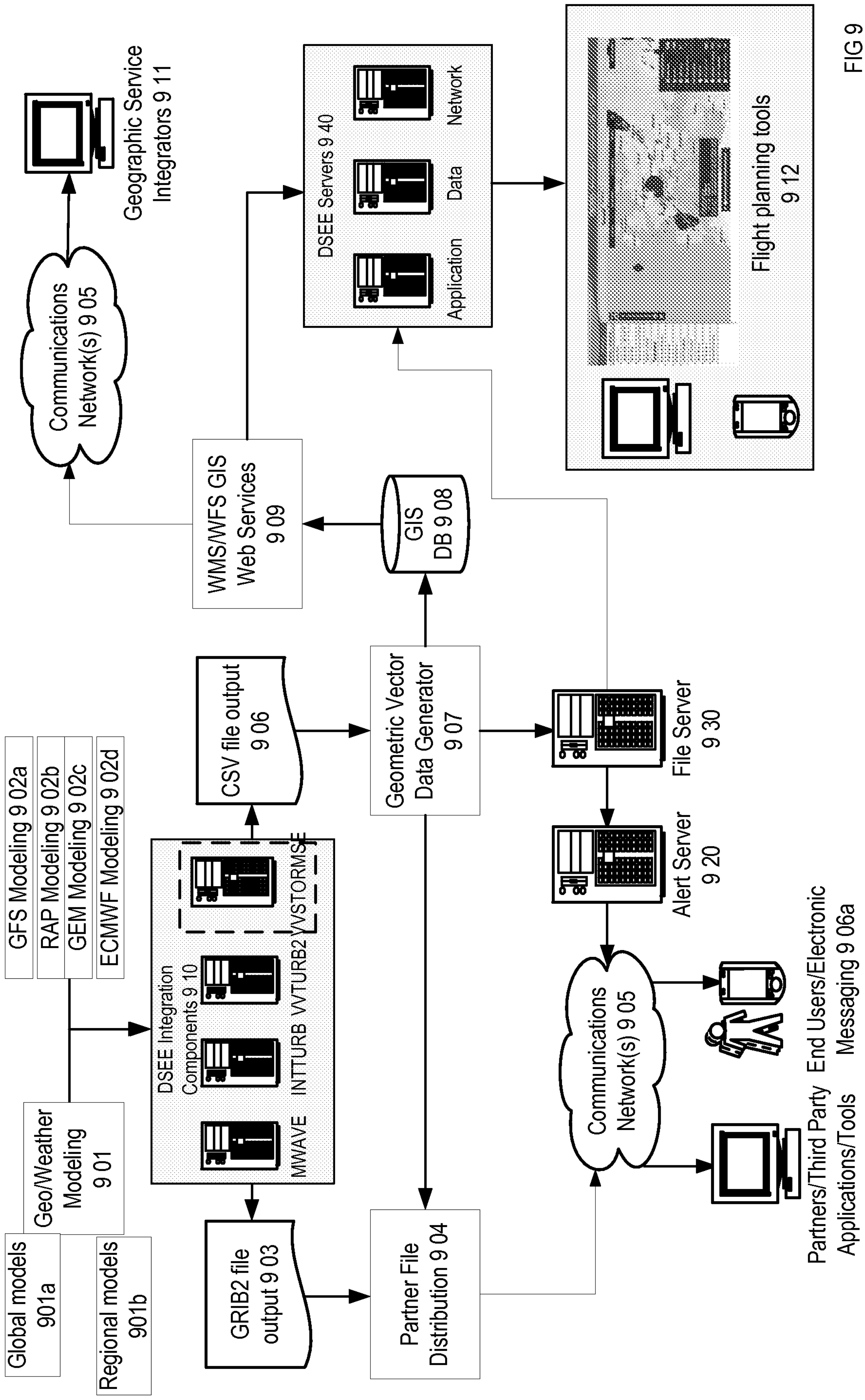
Global models 901a
Regional models 901b
Geo/Weather Modeling 9 01
GFS Modeling 9 02a
RAP Modeling 9 02b
GEM Modeling 9 02c
ECMWF Modeling 9 02d
DSEE Integration Components 9 10
MWAVE
INTTURB
VVTURB2
VVSTORMSE
GRIB2 file output 9 03
CSV file output 9 06
Partner File Distribution 9 04
Geometric Vector Data Generator 9 07
GIS DB 9 08
WMS/WFS GIS Web Services 9 09
Communications Network(s) 9 05
Geographic Service Integrators 9 11
DSEE Servers 9 40
Application
Data
Network
Flight planning tools 9 12
File Server 9 30
Alert Server 9 20
Communications Network(s) 9 05
Partners/Third Party Applications/Tools 9 06
End Users/Electronic Messaging 9 06a

FIG 9

FIG 10A

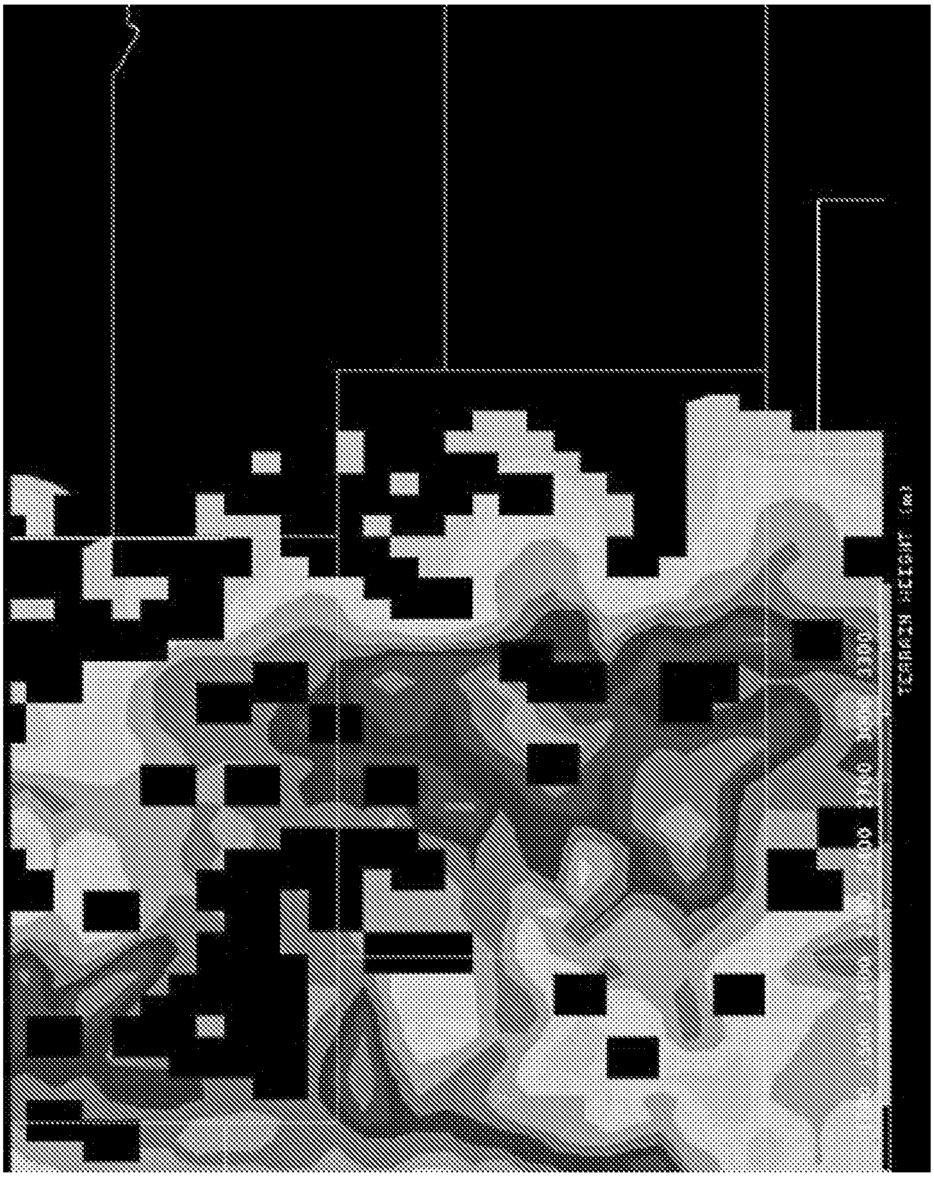

Terrain Height
10 01

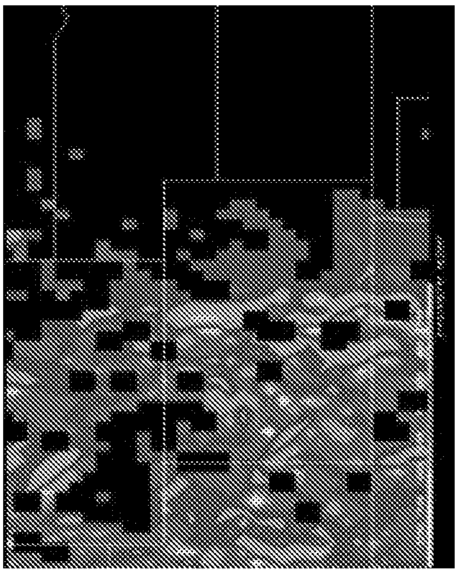

X Direction Asymmetry in Terrain Height
10 02

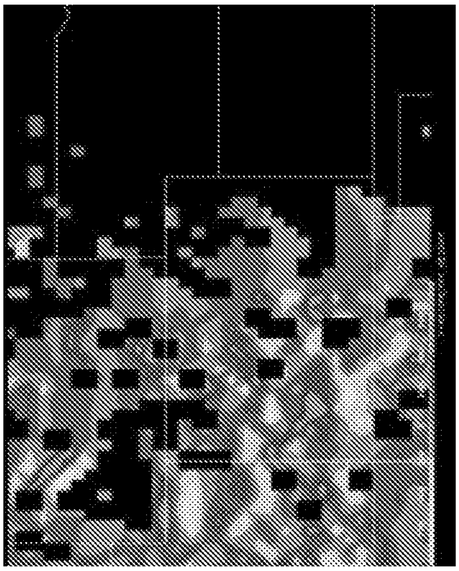

Y Direction Asymmetry in Terrain Height
10 03

FIG 10B

FIG 11A

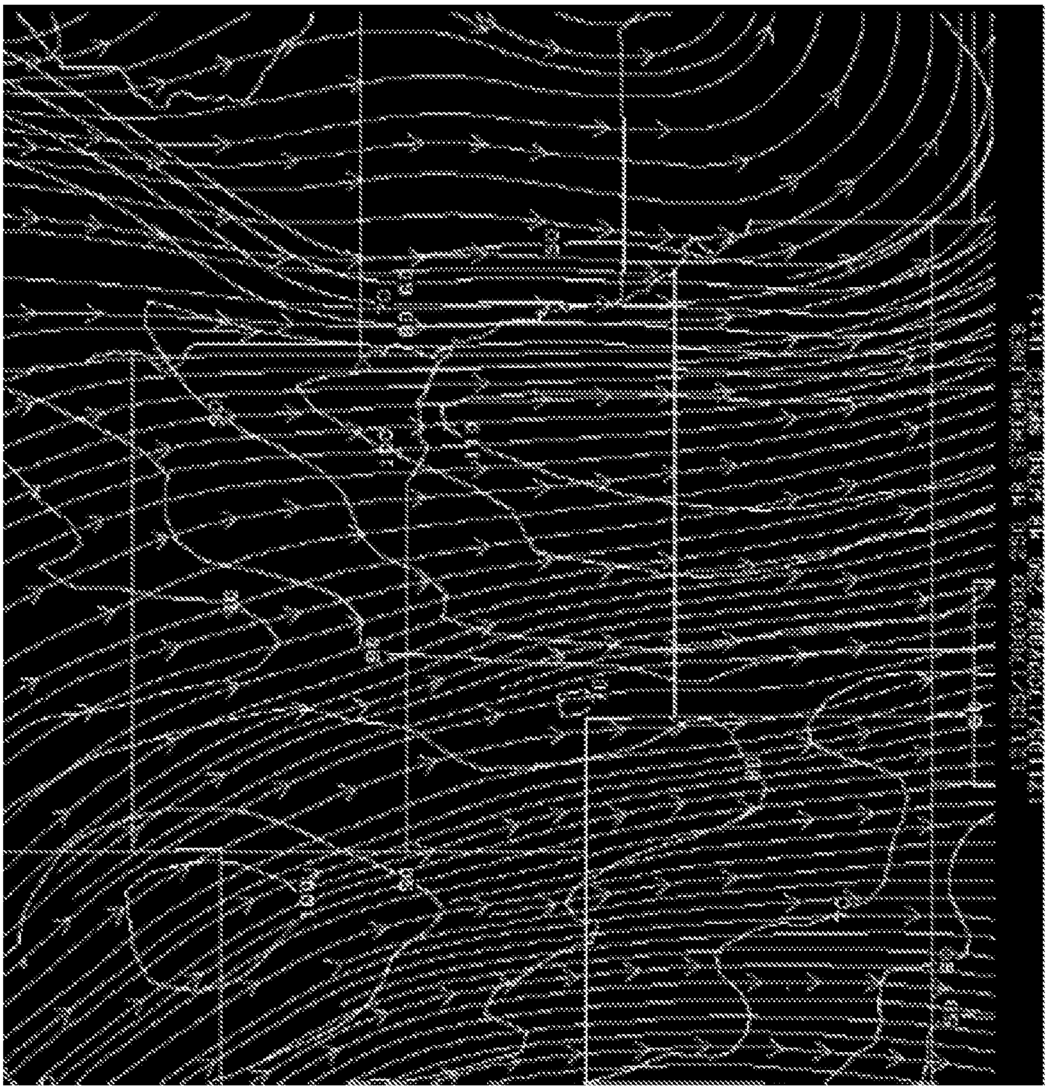

RAP Forecast Streamlines
over 3 hour period 11 01

FIG 11B

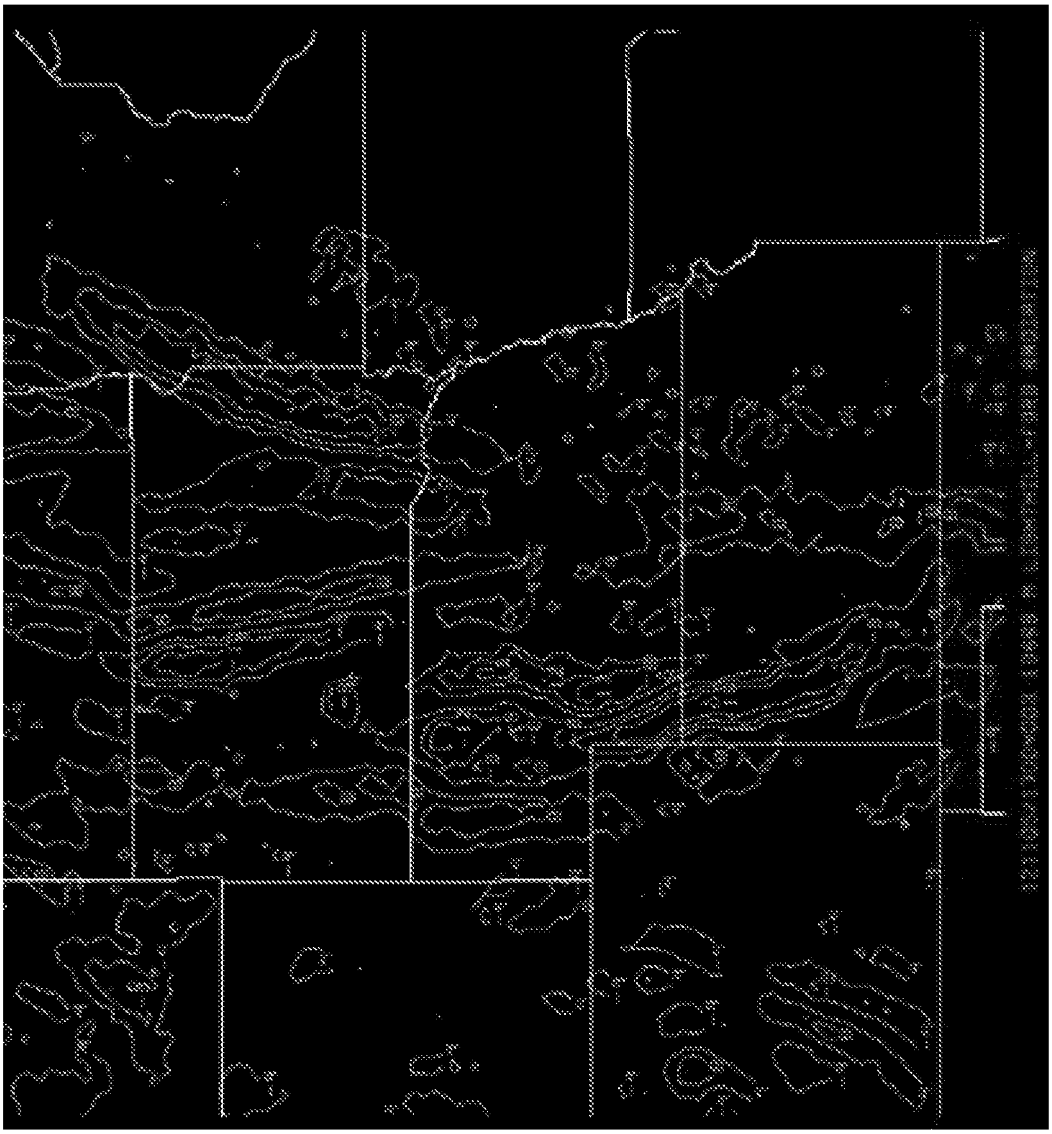

Lighthill-Ford Radiation computed
for RAP forecast flow 11 02

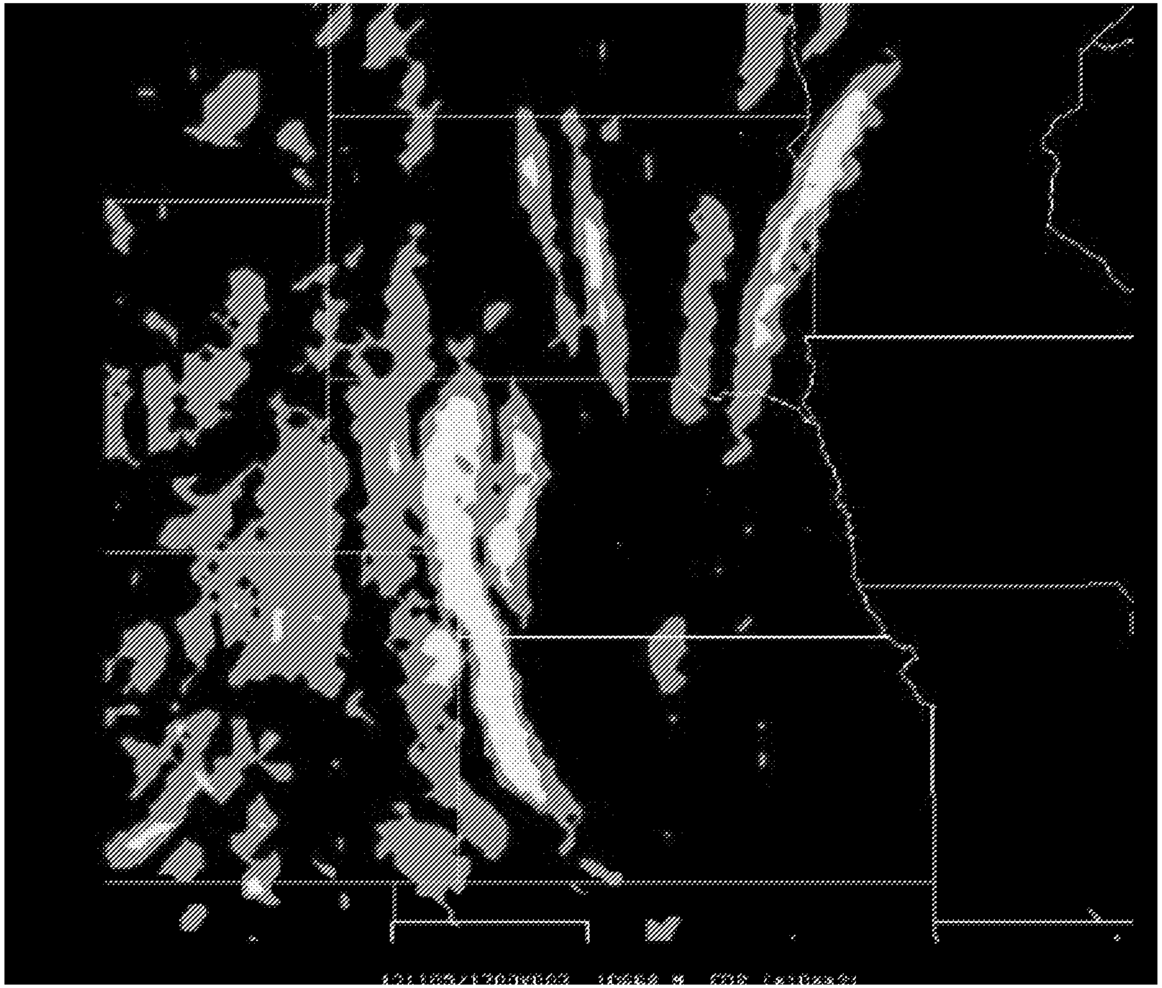

ULTURB Forecast in EDR for
RAP forecast flow 11 03

FIG 11C

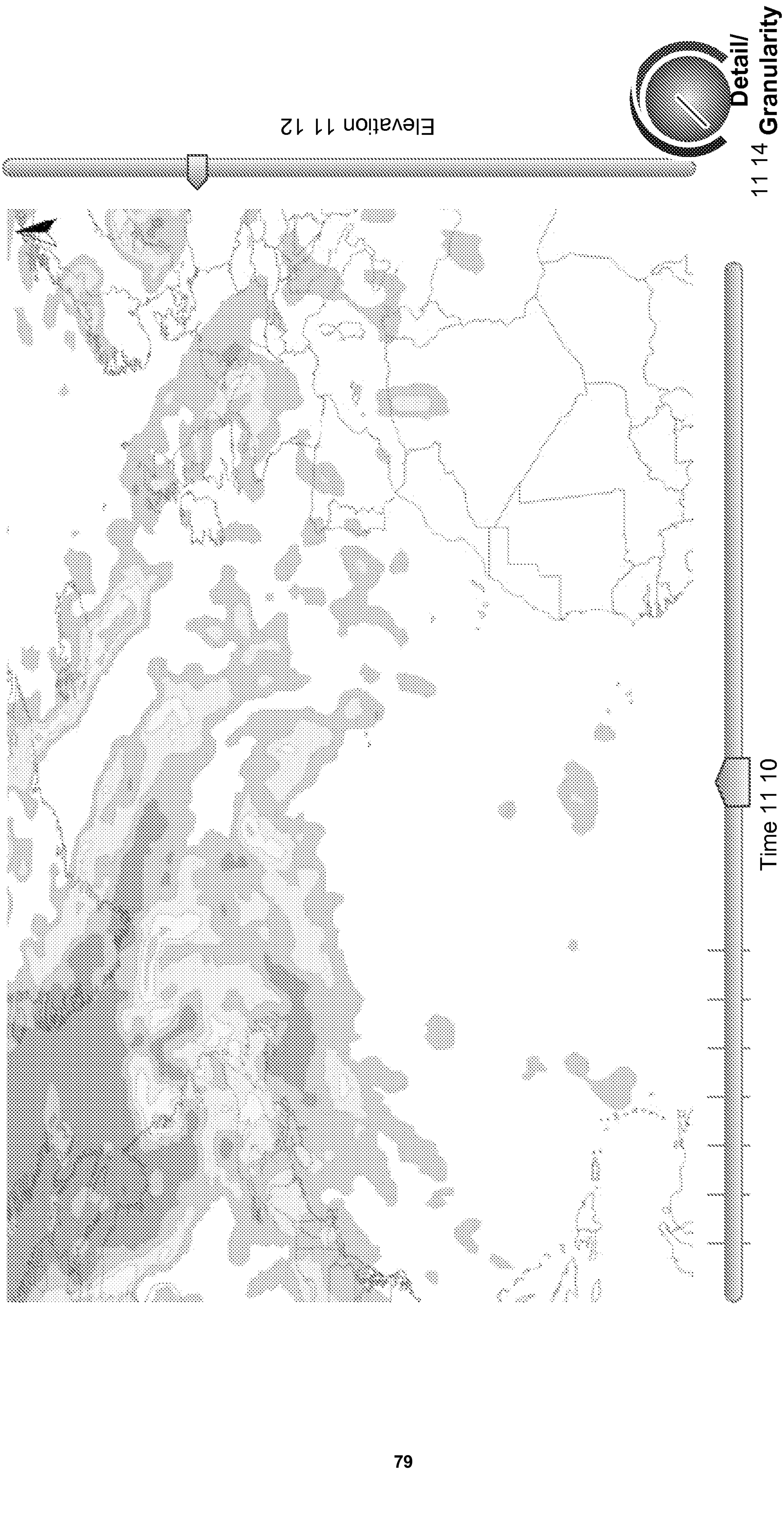


FIG 11D

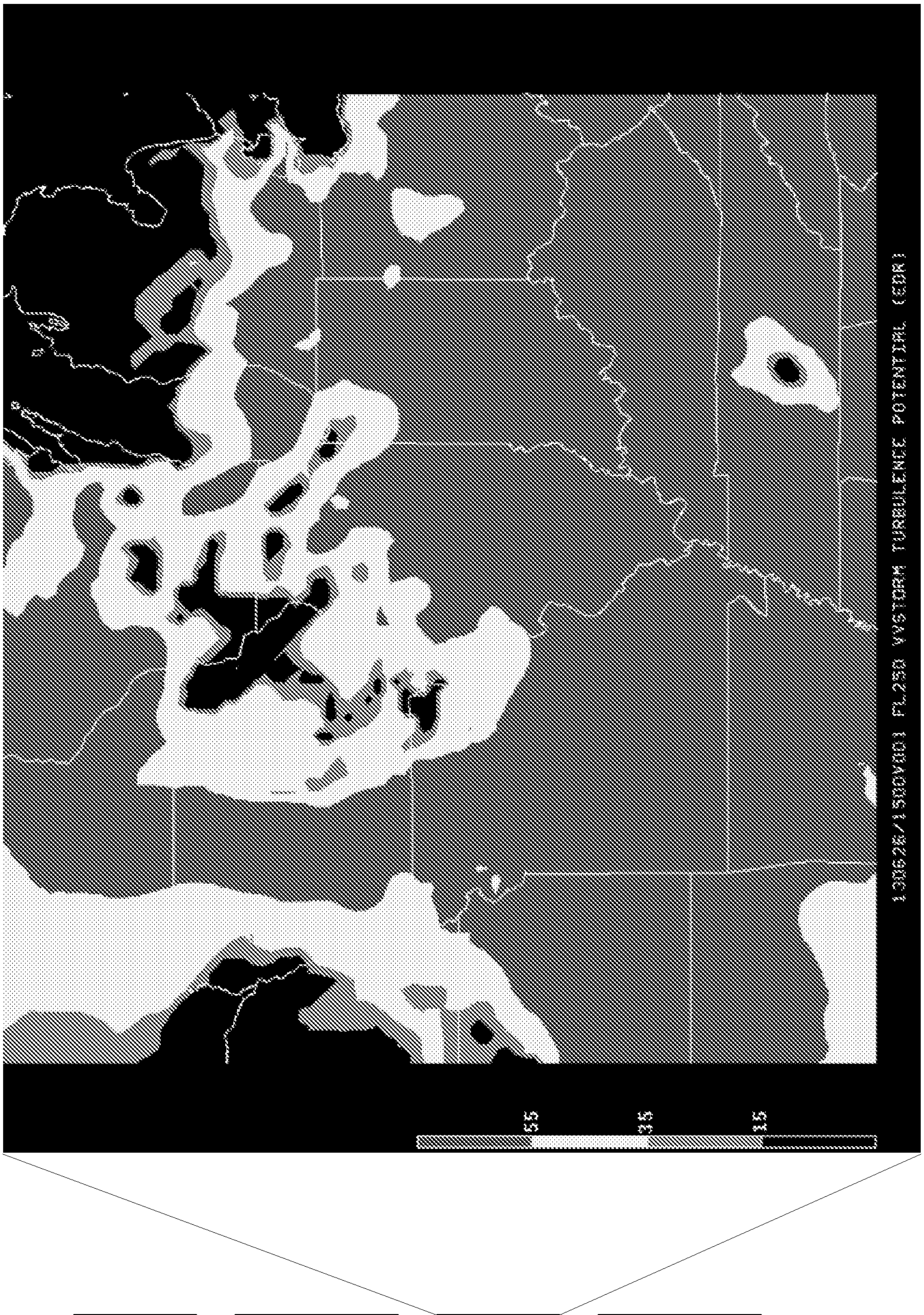


FIG. 12A

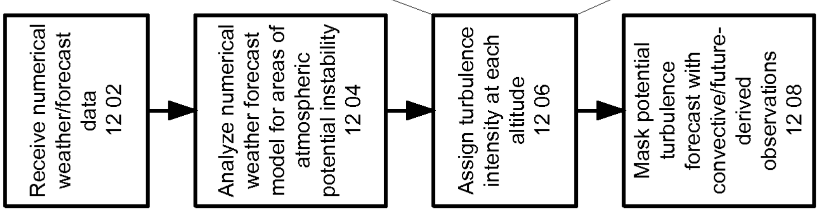


FIG. 12

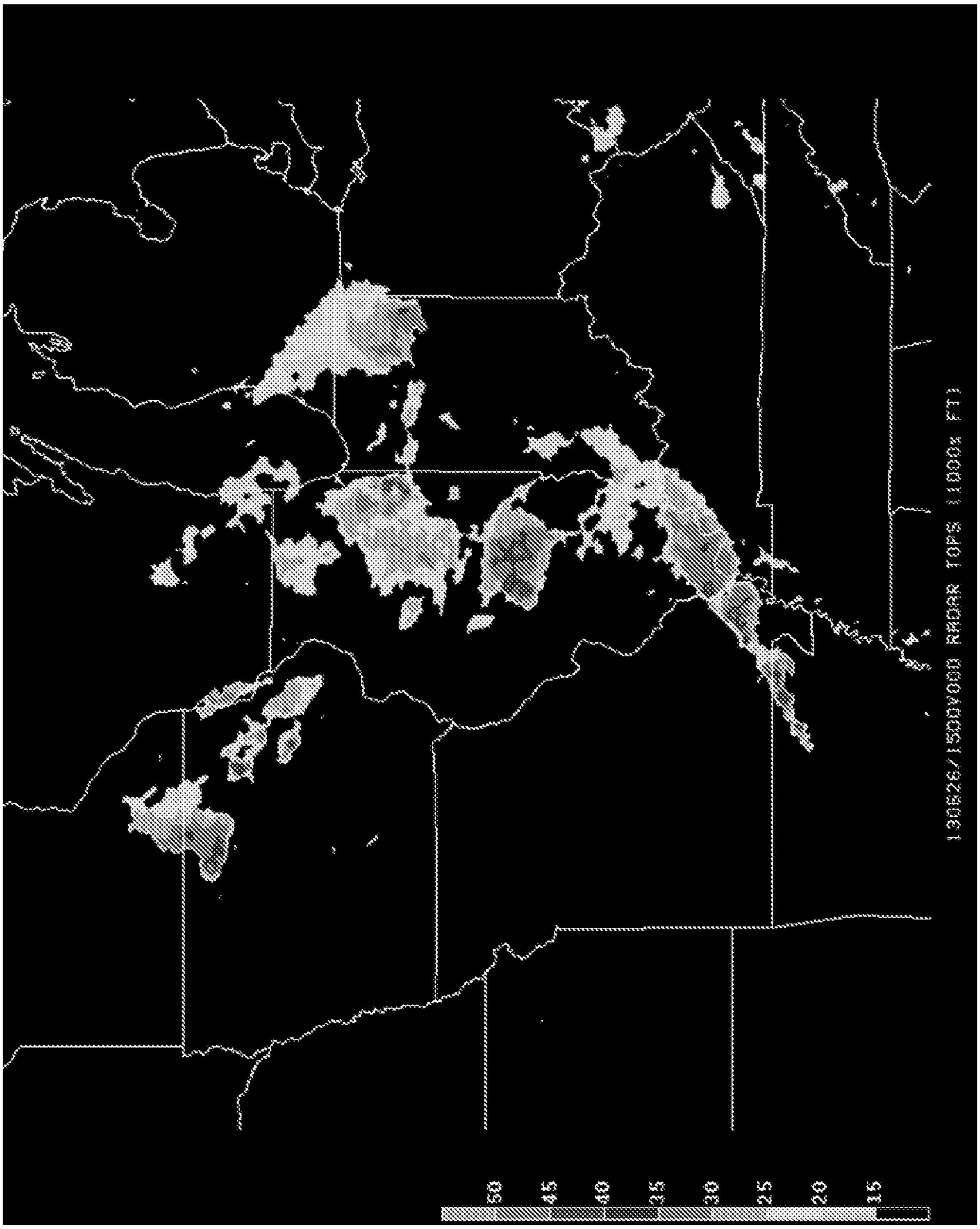


FIG. 12B

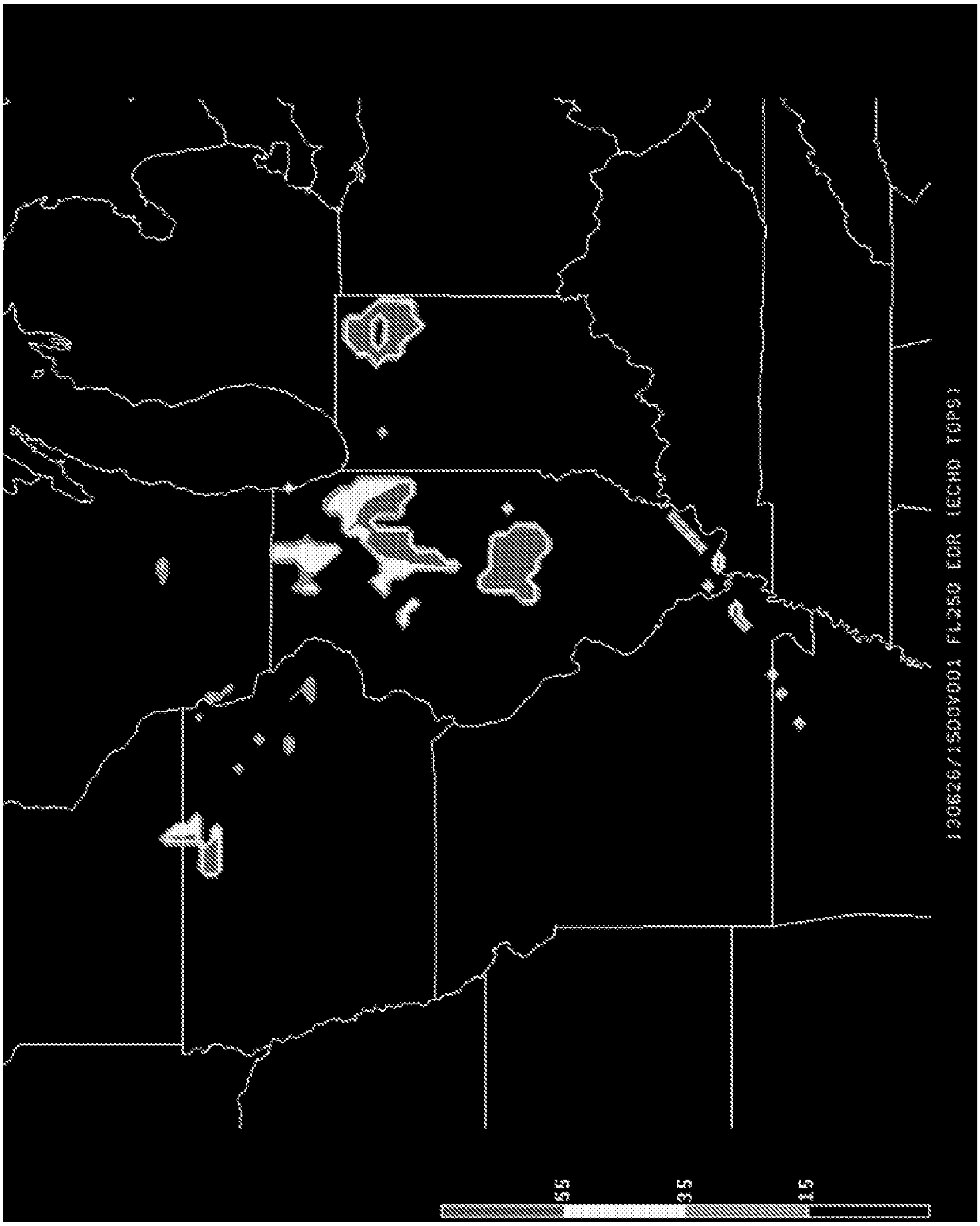


FIG. 12C

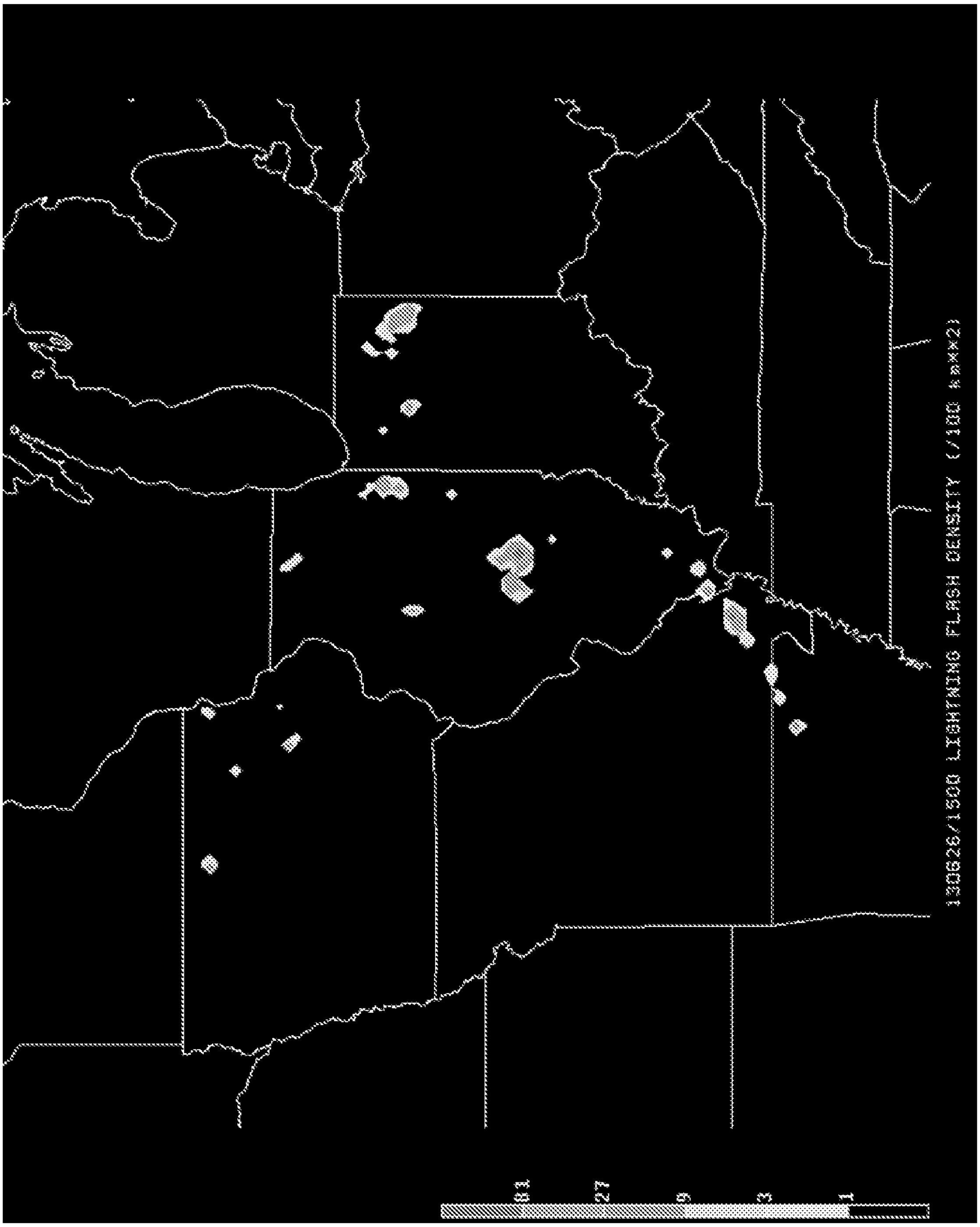


FIG. 12D

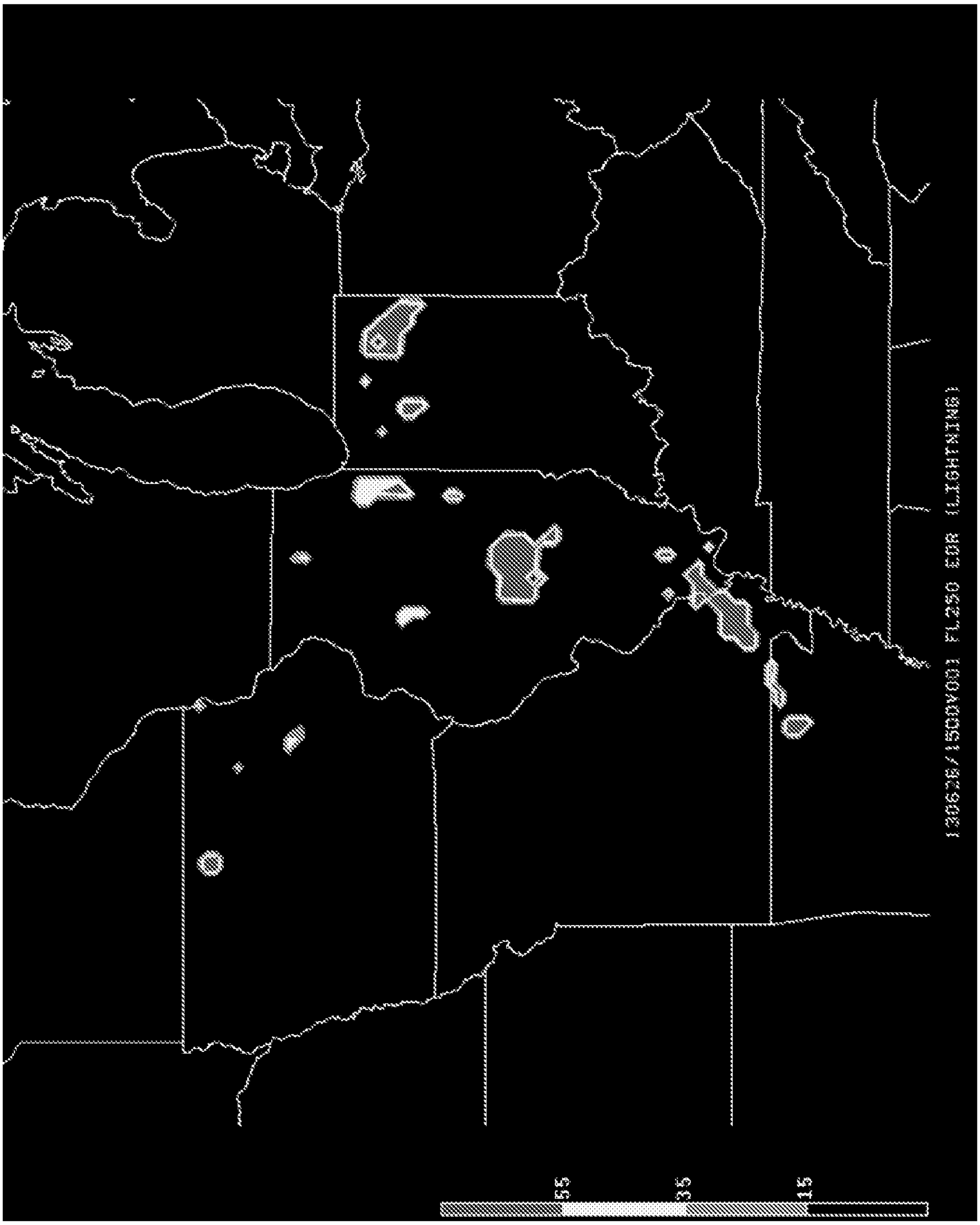


FIG. 12E

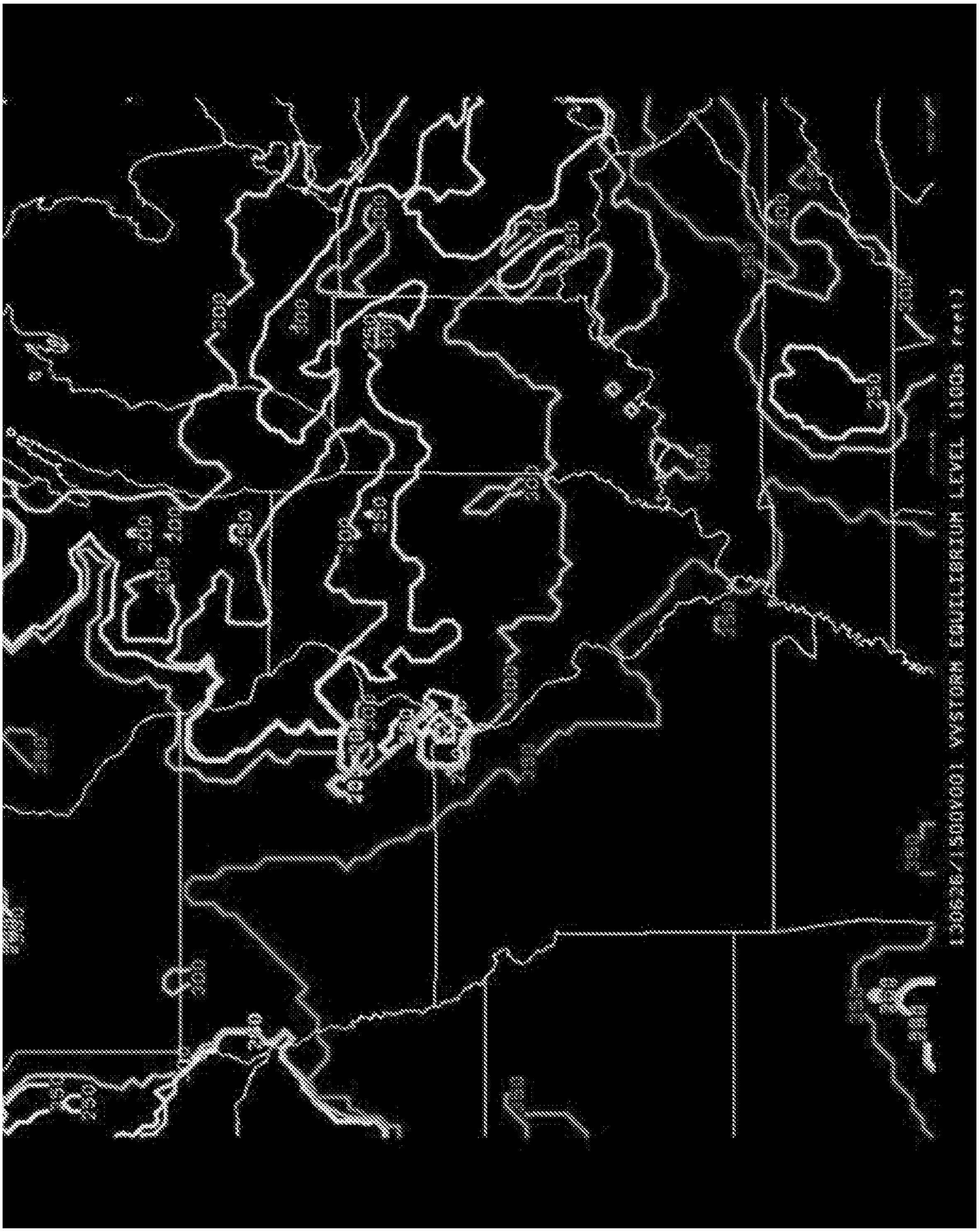

FIG. 12F

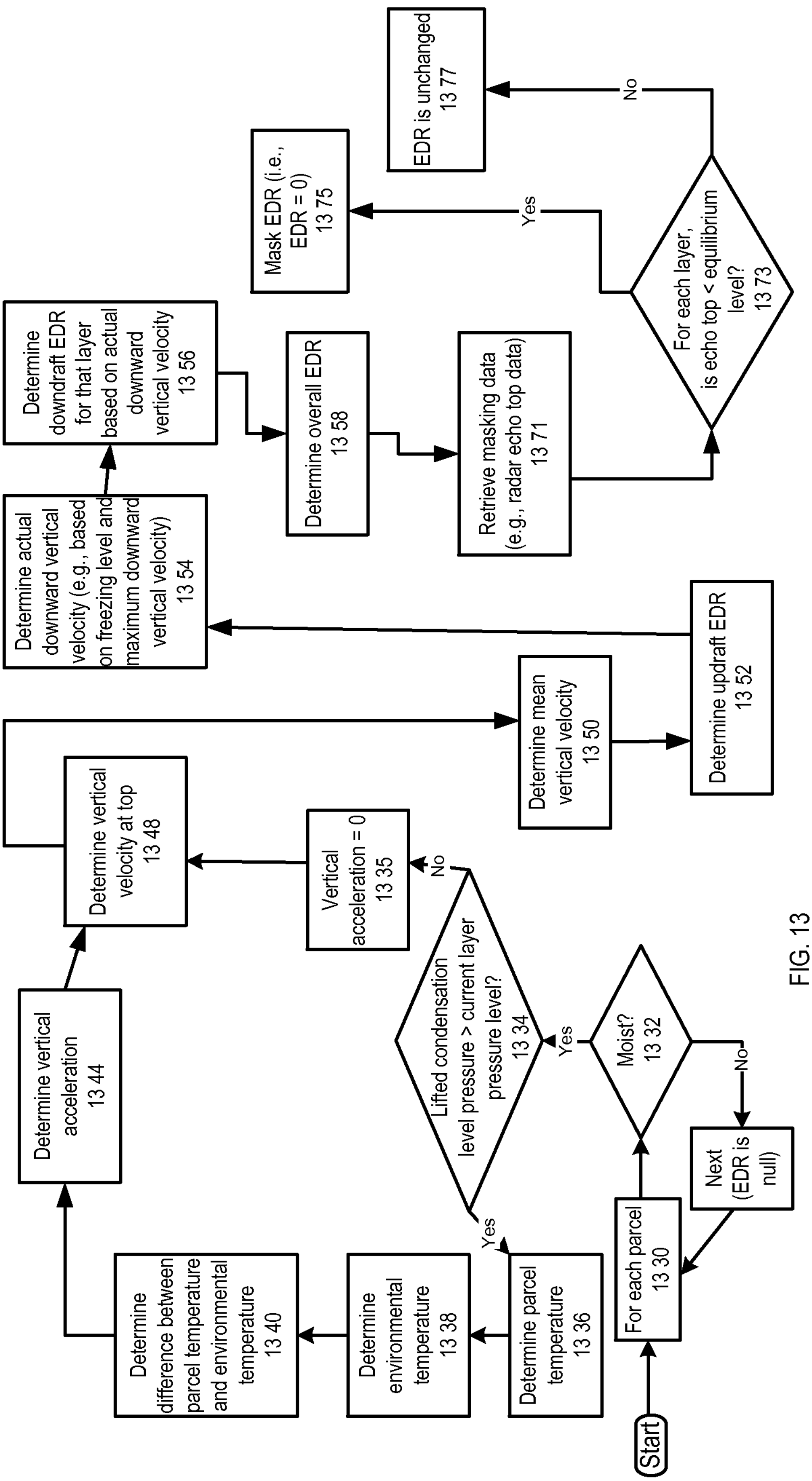
Start
For each parcel
13 30
Moist?
13 32
No
Next
(EDR is
null)
Yes
Lifted condensation
level pressure > current layer
pressure level?
13 34
Yes
No
Vertical
acceleration = 0
13 35
Determine parcel
temperature
13 36
Determine
environmental
temperature
13 38
Determine
difference between
parcel temperature
and environmental
temperature
13 40
Determine vertical
acceleration
13 44
Determine vertical
velocity at top
13 48
Determine mean
vertical velocity
13 50
Determine updraft EDR
13 52
Determine actual
downward vertical
velocity (e.g., based
on freezing level and
maximum downward
vertical velocity)
13 54
Determine
downdraft EDR
for that layer
based on actual
downward
vertical velocity
13 56
Determine overall EDR
13 58
Retrieve masking data
(e.g., radar echo top data)
13 71
For each layer,
is echo top < equilibrium
level?
13 73
Yes
Mask EDR (i.e.,
EDR = 0)
13 75
No
EDR is unchanged
13 77

FIG. 13

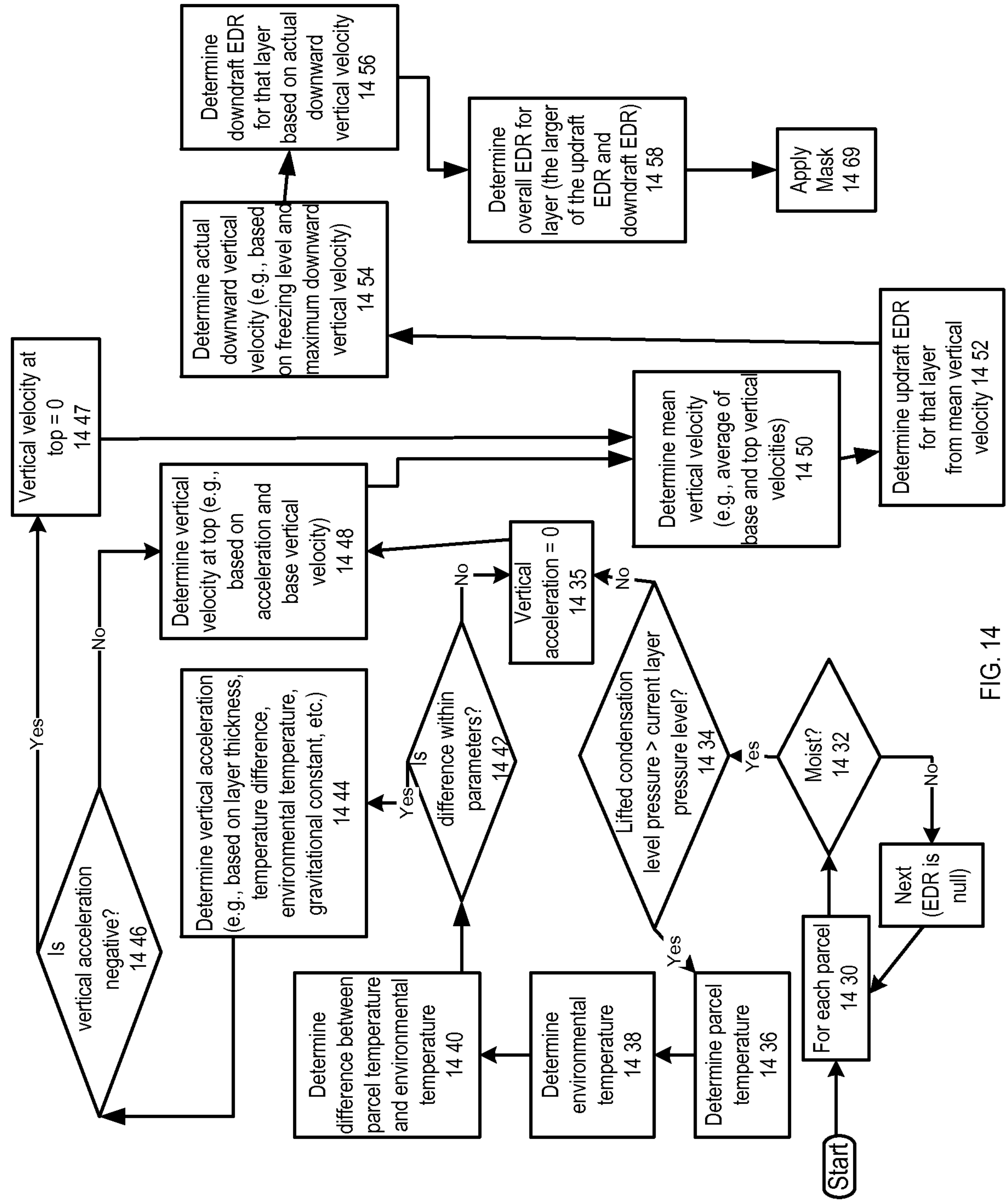
Start
For each parcel 14 30
Moist? 14 32
Yes
No
Next (EDR is null)
Lifted condensation level pressure > current layer pressure level? 14 34
Yes
No
Vertical acceleration = 0 14 35
Determine parcel temperature 14 36
Determine environmental temperature 14 38
Determine difference between parcel temperature and environmental temperature 14 40
Is difference within parameters? 14 42
Yes
No
Determine vertical acceleration (e.g., based on layer thickness, temperature difference, environmental temperature, gravitational constant, etc.) 14 44
Is vertical acceleration negative? 14 46
Yes
No
Vertical velocity at top = 0 14 47
Determine vertical velocity at top (e.g., based on acceleration and base vertical velocity) 14 48
Determine mean vertical velocity (e.g., average of base and top vertical velocities) 14 50
Determine updraft EDR for that layer from mean vertical velocity 14 52
Determine actual downward vertical velocity (e.g., based on freezing level and maximum downward vertical velocity) 14 54
Determine downdraft EDR for that layer based on actual downward vertical velocity 14 56
Determine overall EDR for layer (the larger of the updraft EDR and downdraft EDR) 14 58
Apply Mask 14 69

FIG. 14

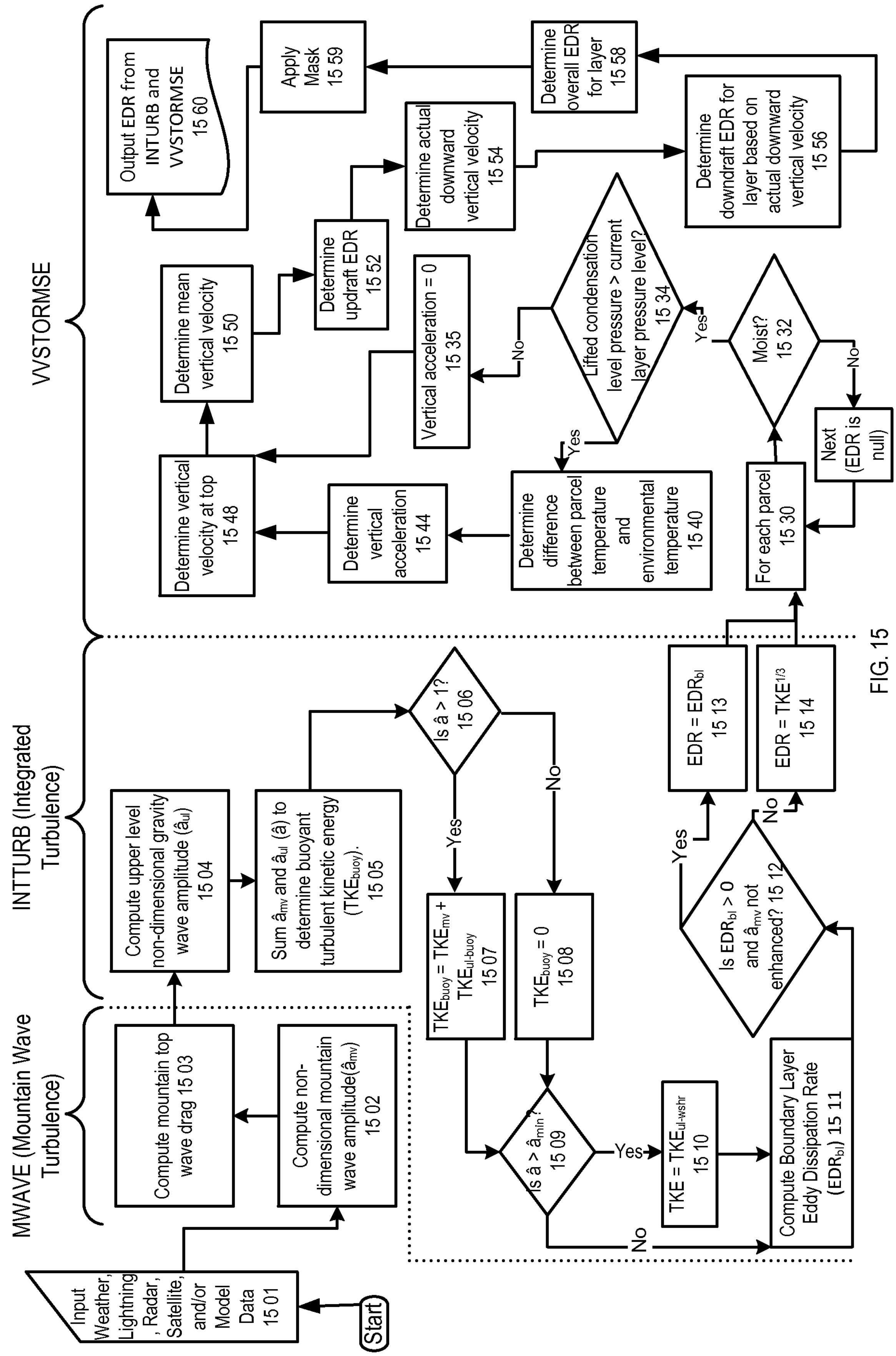
MWAVE (Mountain Wave Turbulence)
INTTURB (Integrated Turbulence)
VVSTORMSE
Start
Input Weather, Lightning, Radar, Satellite, and/or Model Data 15 01
Compute non-dimensional mountain wave amplitude($\hat{a}_{mv}$) 15 02
Compute mountain top wave drag 15 03
Compute upper level non-dimensional gravity wave amplitude ($\hat{a}_{ul}$) 15 04
Sum $\hat{a}_{mv}$ and $\hat{a}_{ul}$ ($\hat{a}$) to determine buoyant turbulent kinetic energy ($TKE_{buoy}$). 15 05
Is $\hat{a}$ > 1? 15 06
Yes
No
$TKE_{buoy} = TKE_{mv} + TKE_{ul\text{-}buoy}$ 15 07
$TKE_{buoy} = 0$ 15 08
Is $\hat{a} > \hat{a}_{min}$? 15 09
Yes
No
$TKE = TKE_{ul\text{-}wshr}$ 15 10
Compute Boundary Layer Eddy Dissipation Rate ($EDR_{bl}$) 15 11
Is $EDR_{bl} > 0$ and $\hat{a}_{mv}$ not enhanced? 15 12
Yes
No
$EDR = EDR_{bl}$ 15 13
$EDR = TKE^{1/3}$ 15 14
For each parcel 15 30
Moist? 15 32
Yes
No
Next (EDR is null)
Lifted condensation level pressure > current layer pressure level? 15 34
Yes
No
Vertical acceleration = 0 15 35
Determine difference between parcel temperature and environmental temperature 15 40
Determine vertical acceleration 15 44
Determine vertical velocity at top 15 48
Determine mean vertical velocity 15 50
Determine updraft EDR 15 52
Determine actual downward vertical velocity 15 54
Determine downdraft EDR for layer based on actual downward vertical velocity 15 56
Determine overall EDR for layer 15 58
Apply Mask 15 59
Output EDR from INTTURB and VVSTORMSE 15 60

FIG. 15

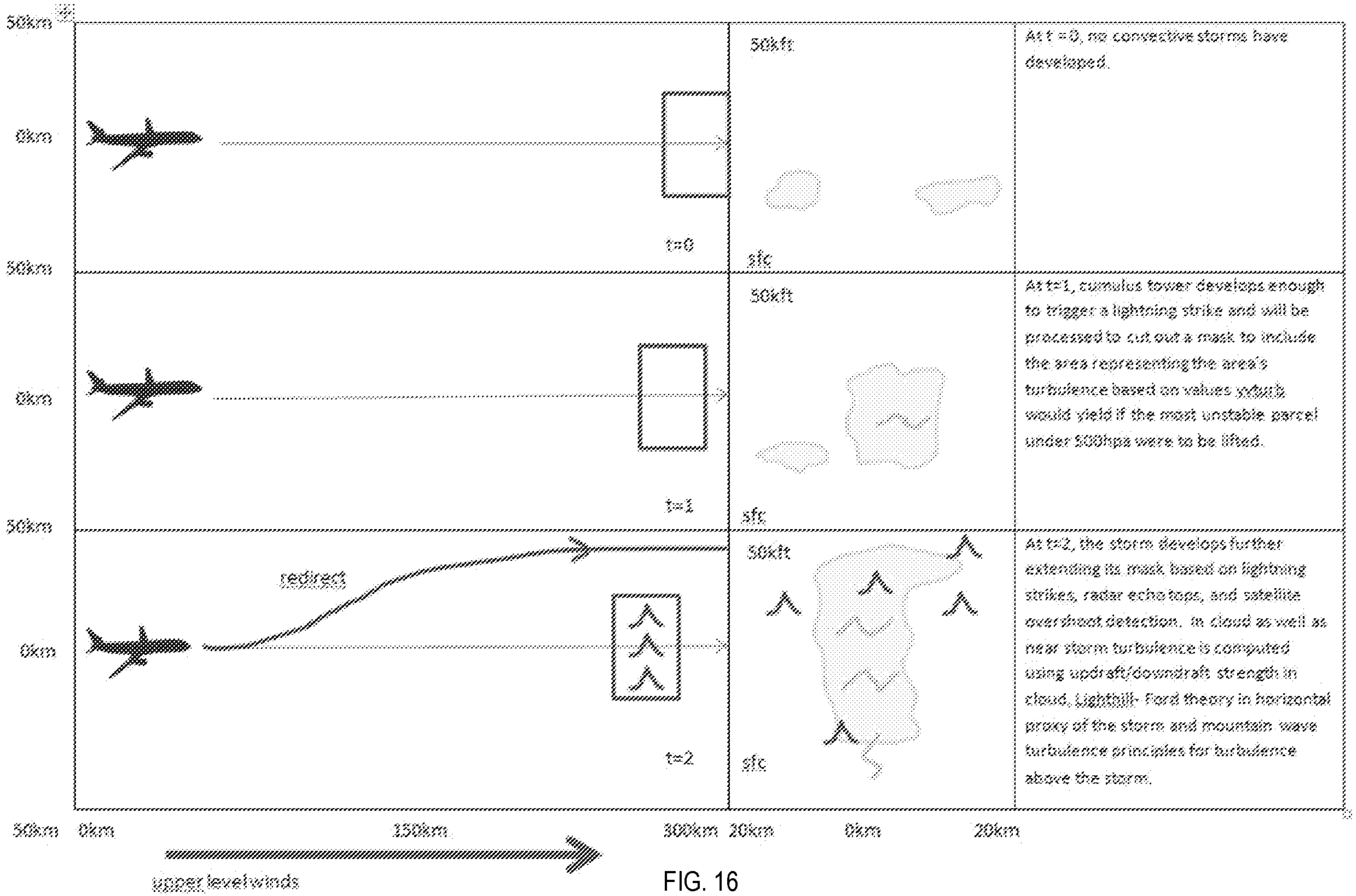
50km
0km
50km
0km
50km
0km
50km
0km
150km
300km
t=0
t=1
t=2
redirect
50kft
sfc
50kft
sfc
50kft
sfc
20km
0km
20km
At t =0, no convective storms have developed.
At t=1, cumulus tower develops enough to trigger a lightning strike and will be processed to cut out a mask to include the area representing the area's turbulence based on values which would yield if the most unstable parcel under 500hpa were to be lifted.
At t=2, the storm develops further extending its mask based on lightning strikes, radar echo tops, and satellite overshoot detection. In cloud as well as near storm turbulence is computed using updraft/downdraft strength in cloud, Lighthill- Ford theory in horizontal proxy of the storm and mountain wave turbulence principles for turbulence above the storm.
upper level winds

FIG. 16

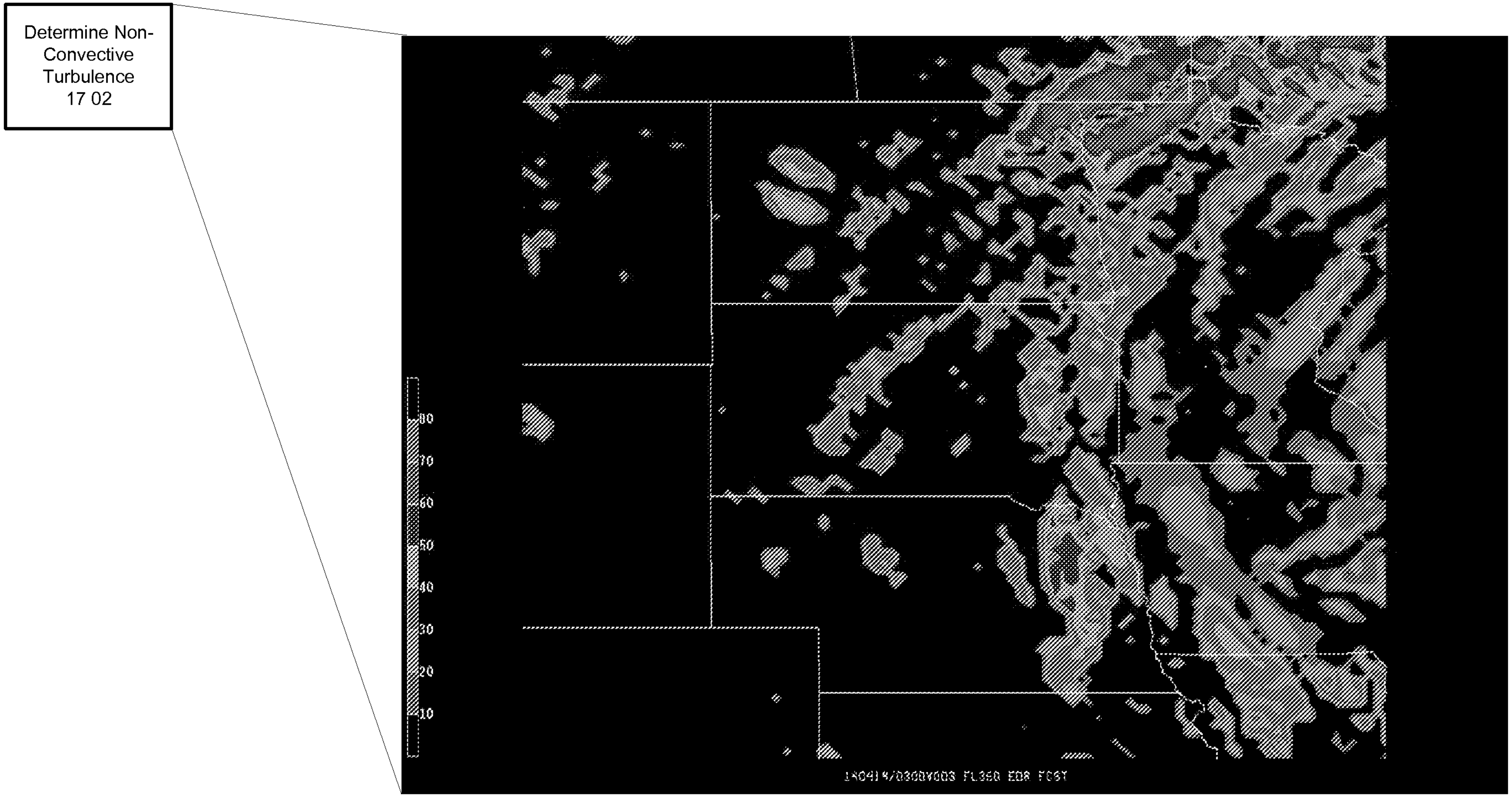


17 02A

Nowcast Overview – Non-Convective Turbulence
FIG. 17A

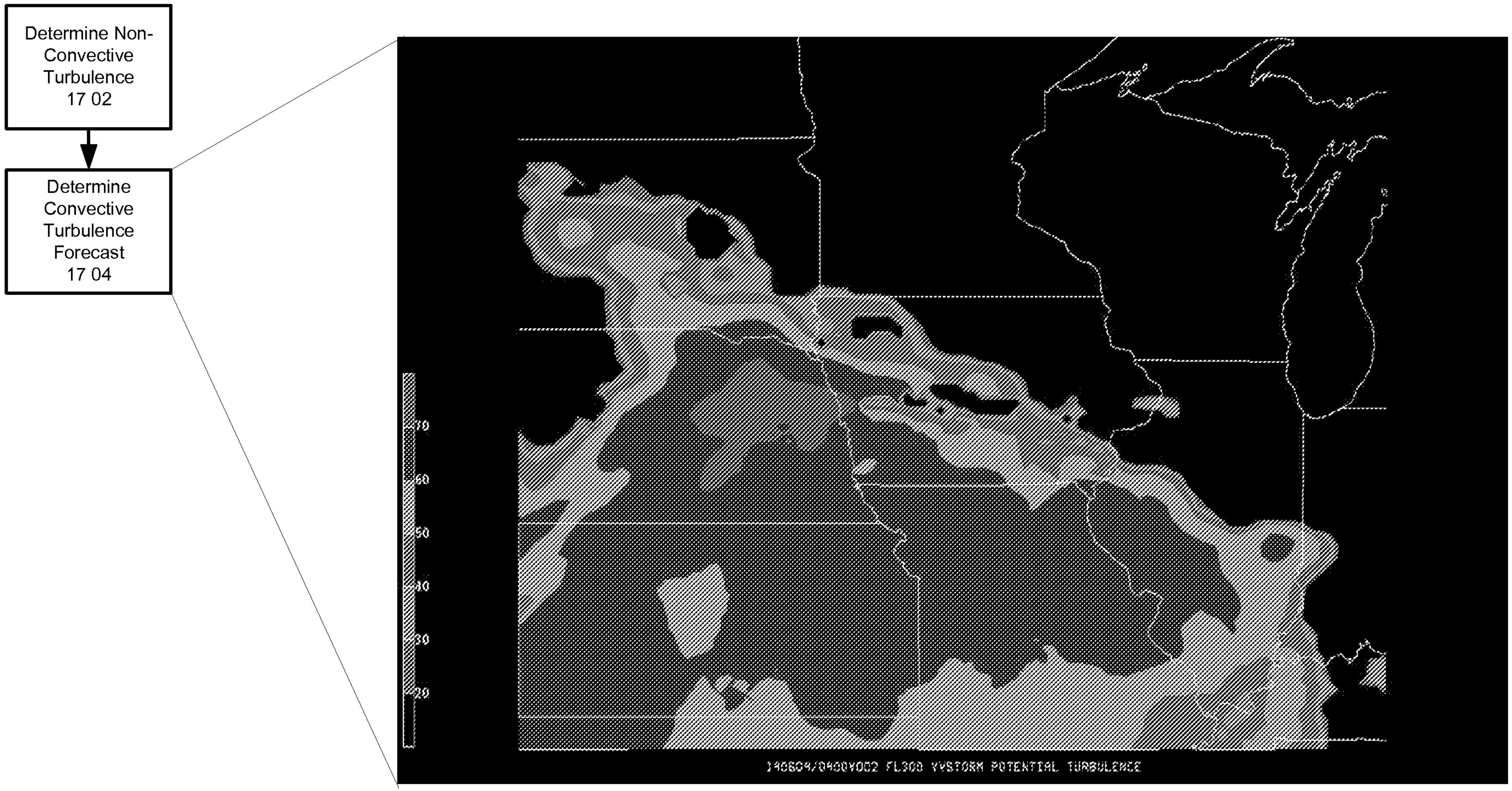


17 04A

Nowcast Overview – Convective Turbulence
FIG. 17B

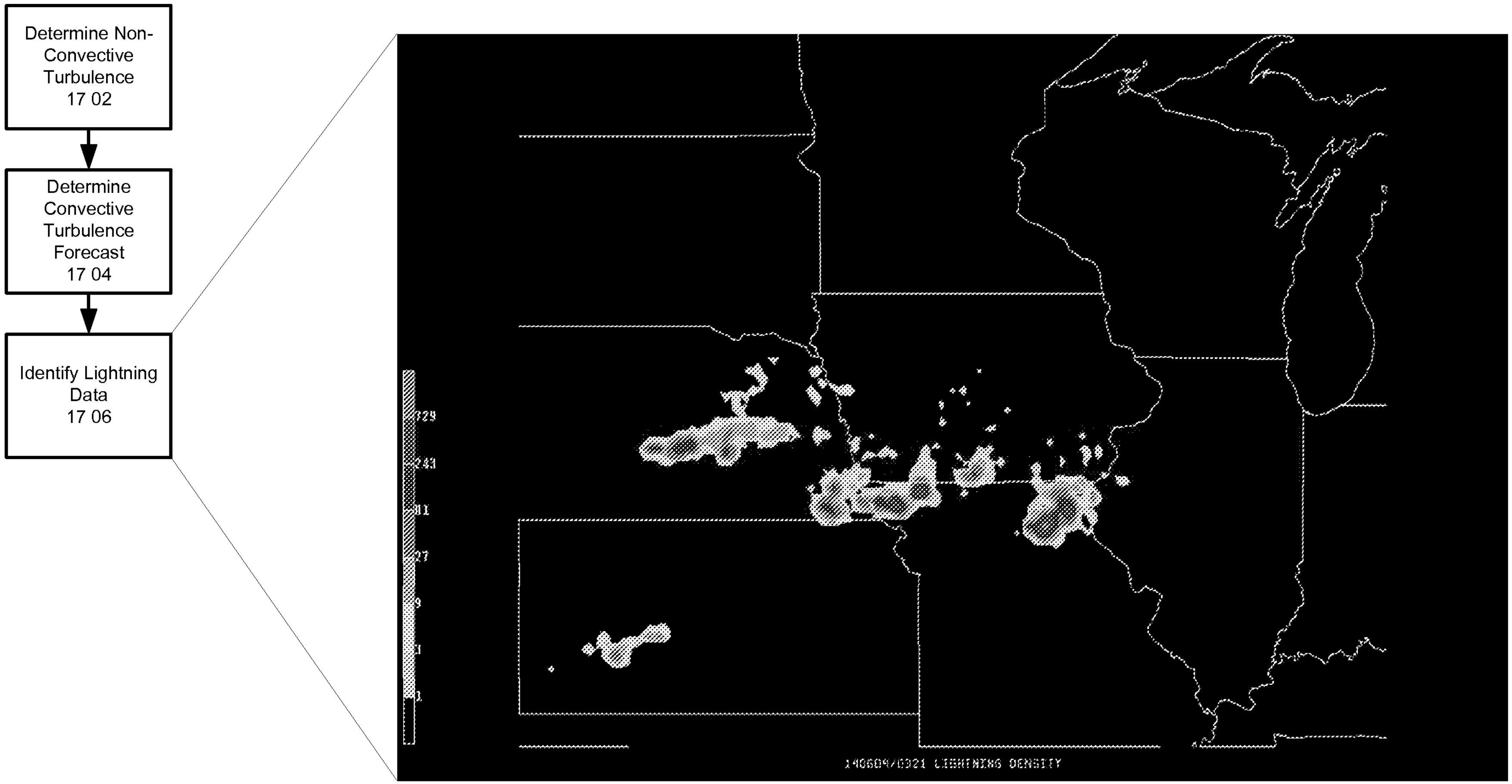


17 06A

Nowcast Overview – Lightning Data
FIG. 17C

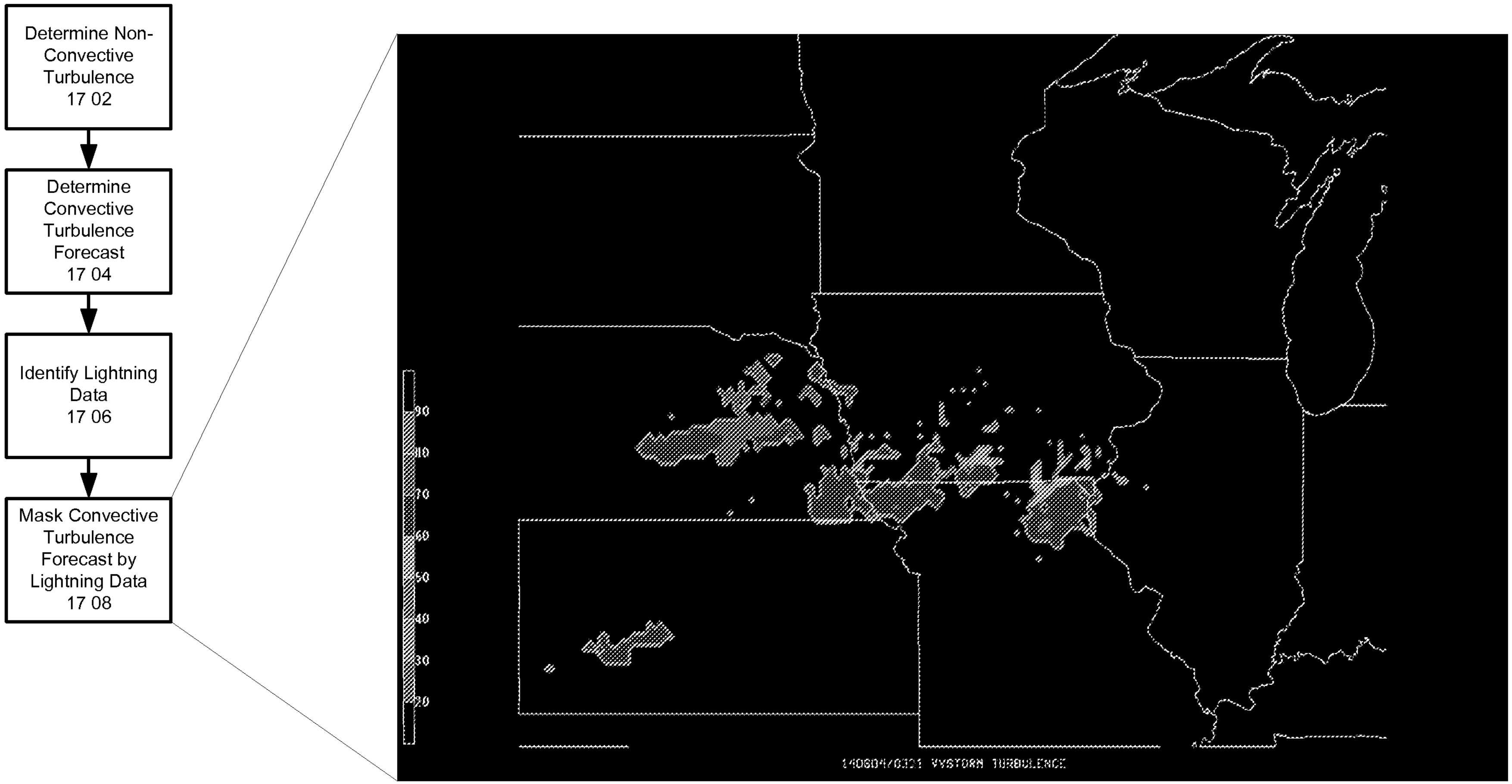


17 08A

Nowcast Overview - Masking

FIG. 17D

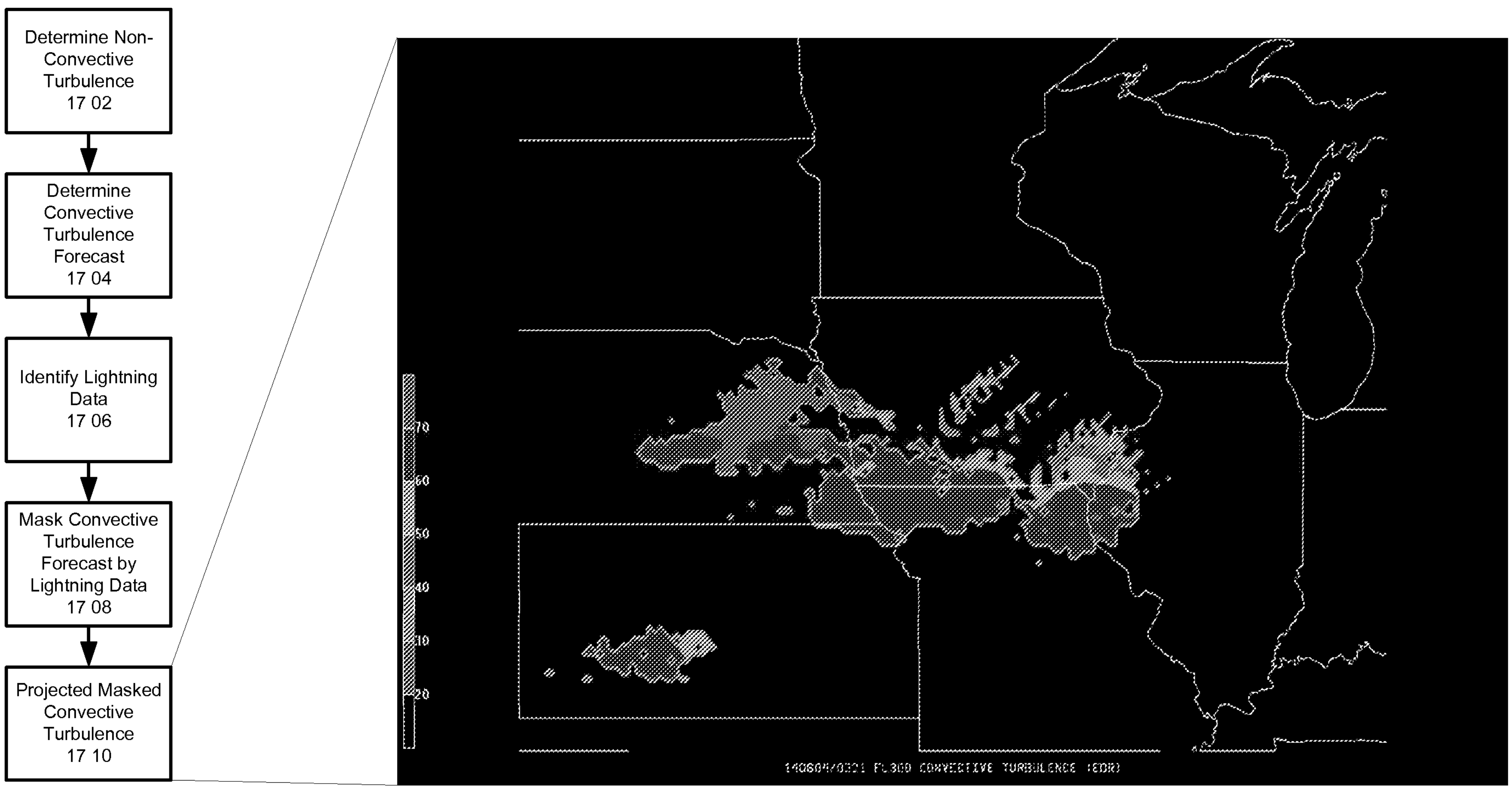


17 10A

Nowcast Overview - Projecting

FIG. 17E

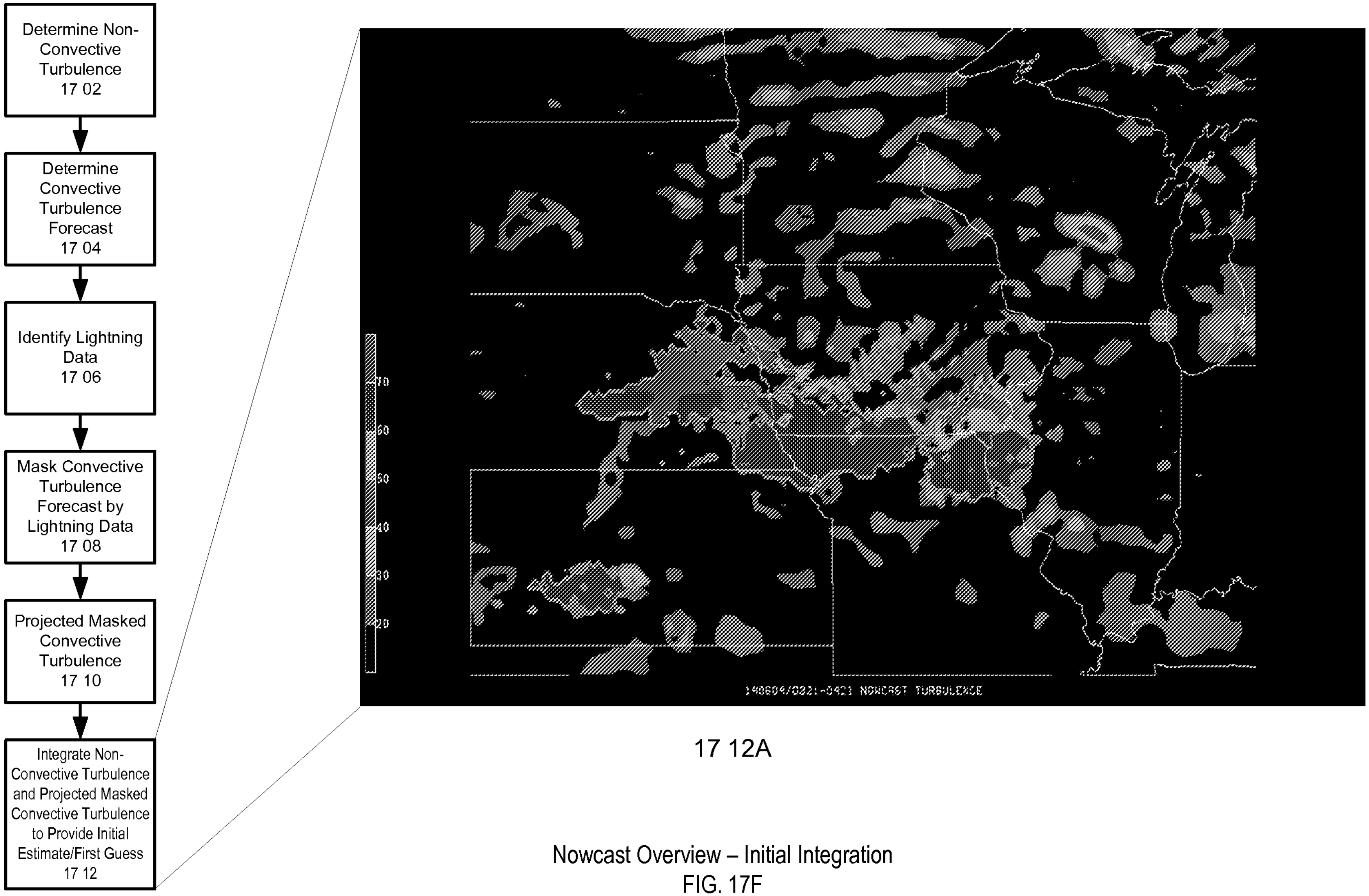


Nowcast Overview – Initial Integration
FIG. 17F

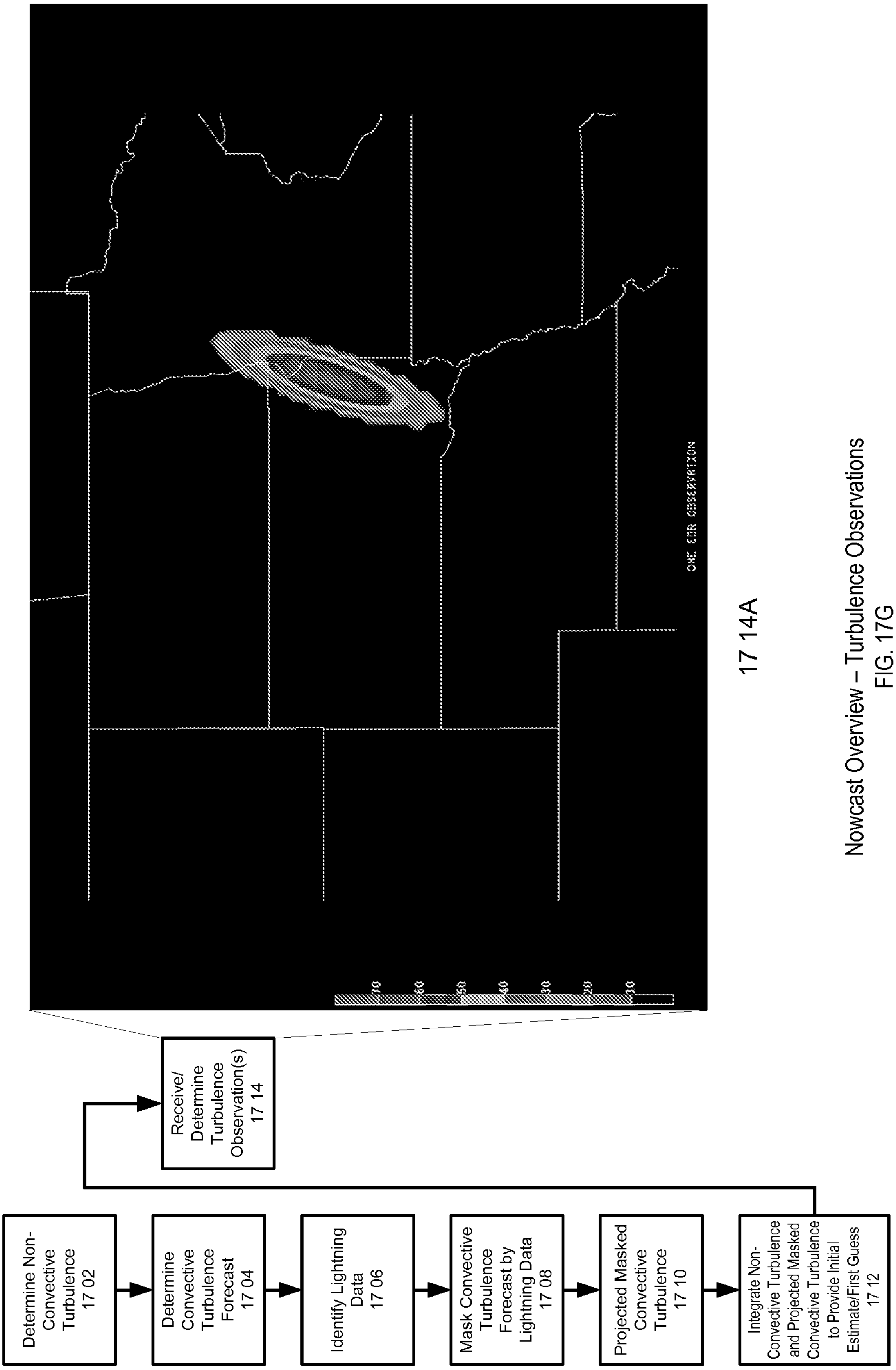


Nowcast Overview – Turbulence Observations

FIG. 17G

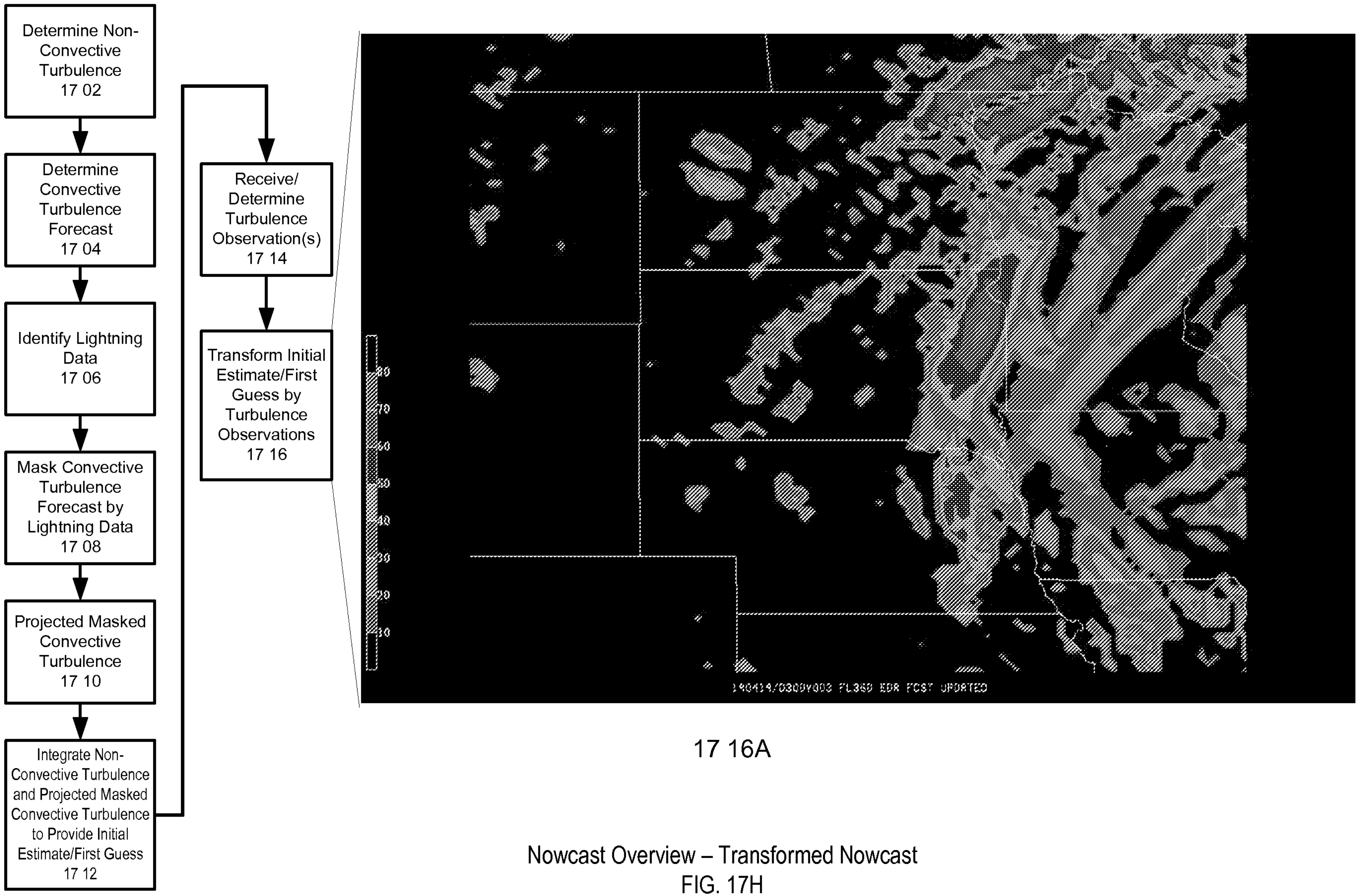


Nowcast Overview – Transformed Nowcast
FIG. 17H

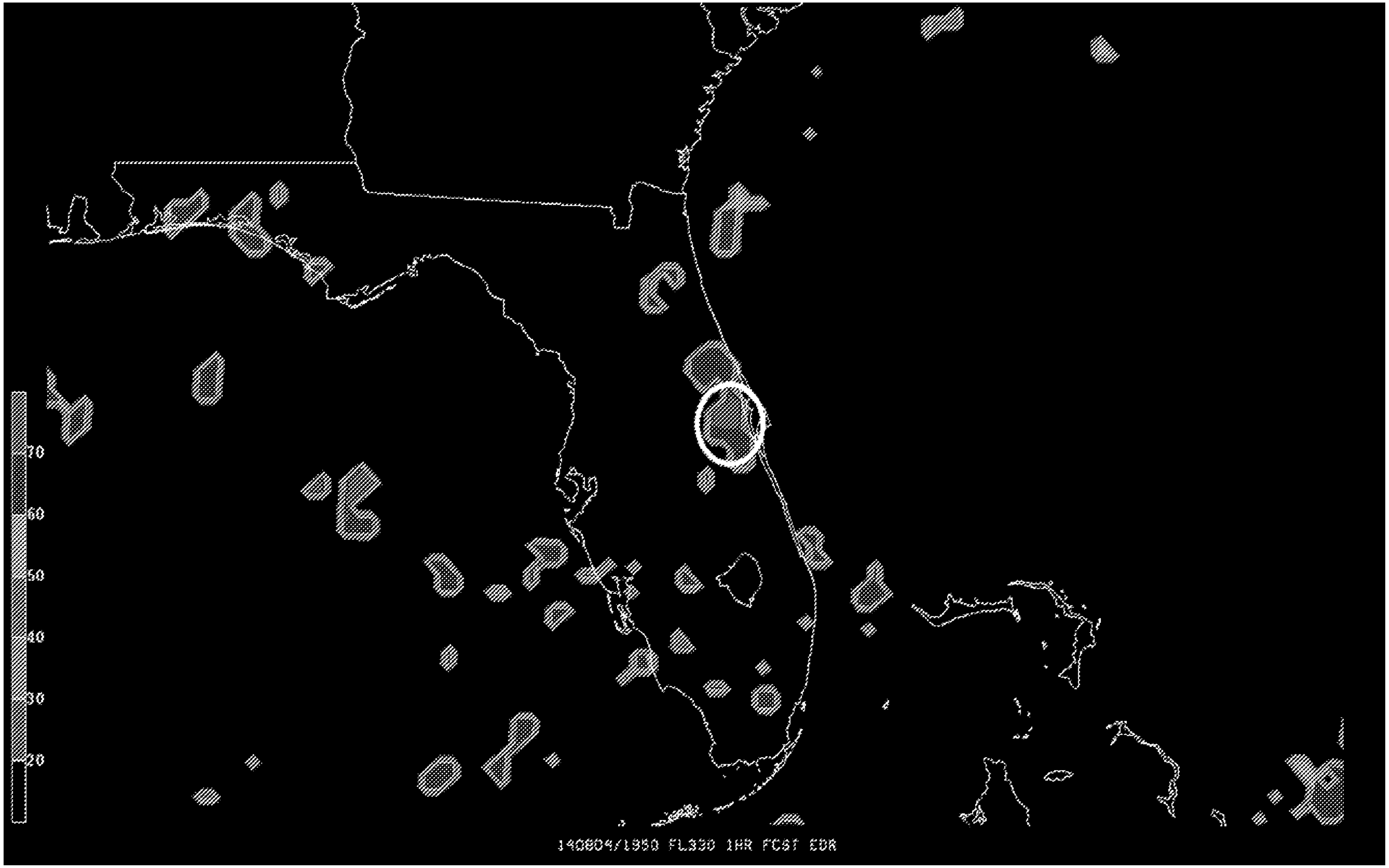


Example Severe Turbulence Encounter
FIG. 17I

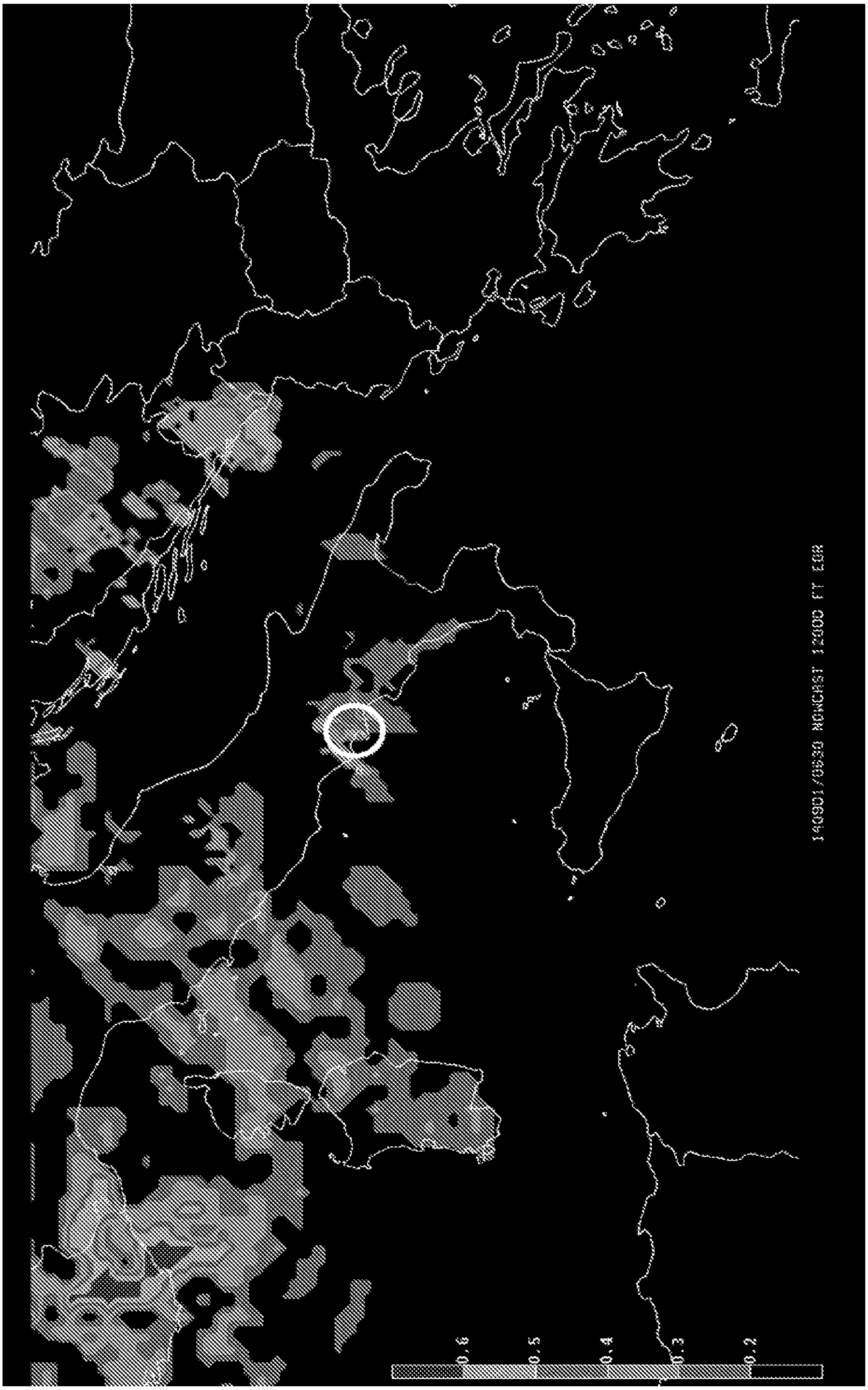


Example Severe Turbulence Encounter
FIG. 17J

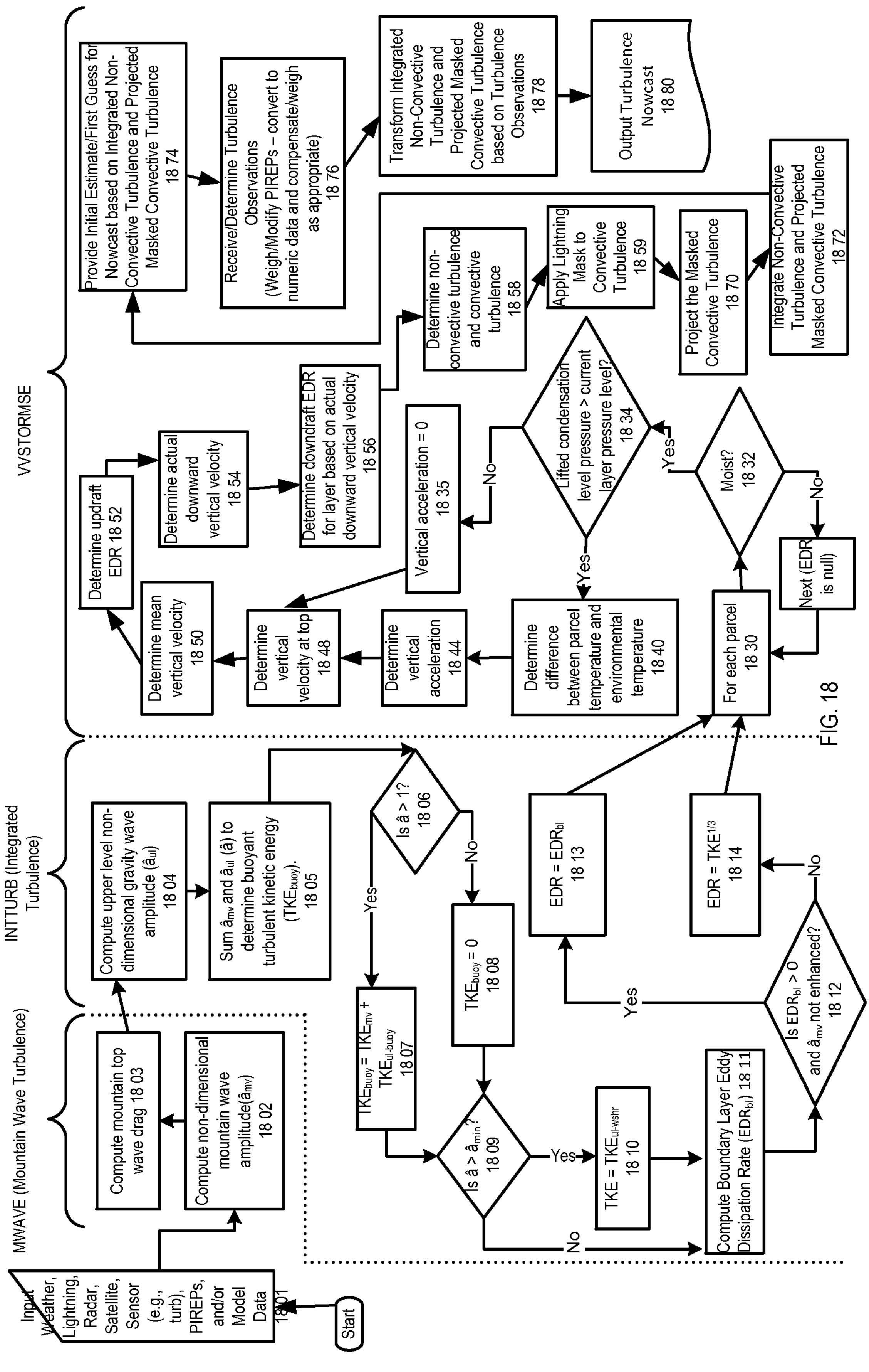

MWAVE (Mountain Wave Turbulence)
INTTURB (Integrated Turbulence)
VVSTORMSE
Start
Input Weather, Lightning, Radar, Satellite, Sensor (e.g., turb), PIREPs, and/or Model Data 18 01
Compute non-dimensional mountain wave amplitude($\hat{a}_{mv}$) 18 02
Compute mountain top wave drag 18 03
Compute upper level non-dimensional gravity wave amplitude ($\hat{a}_{ul}$) 18 04
Sum $\hat{a}_{mv}$ and $\hat{a}_{ul}$ ($\hat{a}$) to determine buoyant turbulent kinetic energy ($TKE_{buoy}$). 18 05
Is $\hat{a}$ > 1? 18 06
Yes
No
$TKE_{buoy}$ = $TKE_{mv}$ + $TKE_{ul\text{-}buoy}$ 18 07
$TKE_{buoy}$ = 0 18 08
Is $\hat{a}$ > $\hat{a}_{min}$? 18 09
Yes
No
TKE = $TKE_{ul\text{-}wshr}$ 18 10
Compute Boundary Layer Eddy Dissipation Rate ($EDR_{bl}$) 18 11
Is $EDR_{bl}$ > 0 and $\hat{a}_{mv}$ not enhanced? 18 12
Yes
No
EDR = $EDR_{bl}$ 18 13
EDR = $TKE^{1/3}$ 18 14
For each parcel 18 30
Moist? 18 32
Yes
No
Next (EDR is null)
Lifted condensation level pressure > current layer pressure level? 18 34
Yes
No
Vertical acceleration = 0 18 35
Determine difference between parcel temperature and environmental temperature 18 40
Determine vertical acceleration 18 44
Determine vertical velocity at top 18 48
Determine mean vertical velocity 18 50
Determine updraft EDR 18 52
Determine actual downward vertical velocity 18 54
Determine downdraft EDR for layer based on actual downward vertical velocity 18 56
Determine non-convective turbulence and convective turbulence 18 58
Apply Lightning Mask to Convective Turbulence 18 59
Project the Masked Convective Turbulence 18 70
Integrate Non-Convective Turbulence and Projected Masked Convective Turbulence 18 72
Provide Initial Estimate/First Guess for Nowcast based on Integrated Non-Convective Turbulence and Projected Masked Convective Turbulence 18 74
Receive/Determine Turbulence Observations (Weigh/Modify PIREPs – convert to numeric data and compensate/weigh as appropriate) 18 76
Transform Integrated Non-Convective Turbulence and Projected Masked Convective Turbulence based on Turbulence Observations 18 78
Output Turbulence Nowcast 18 80


FIG. 18

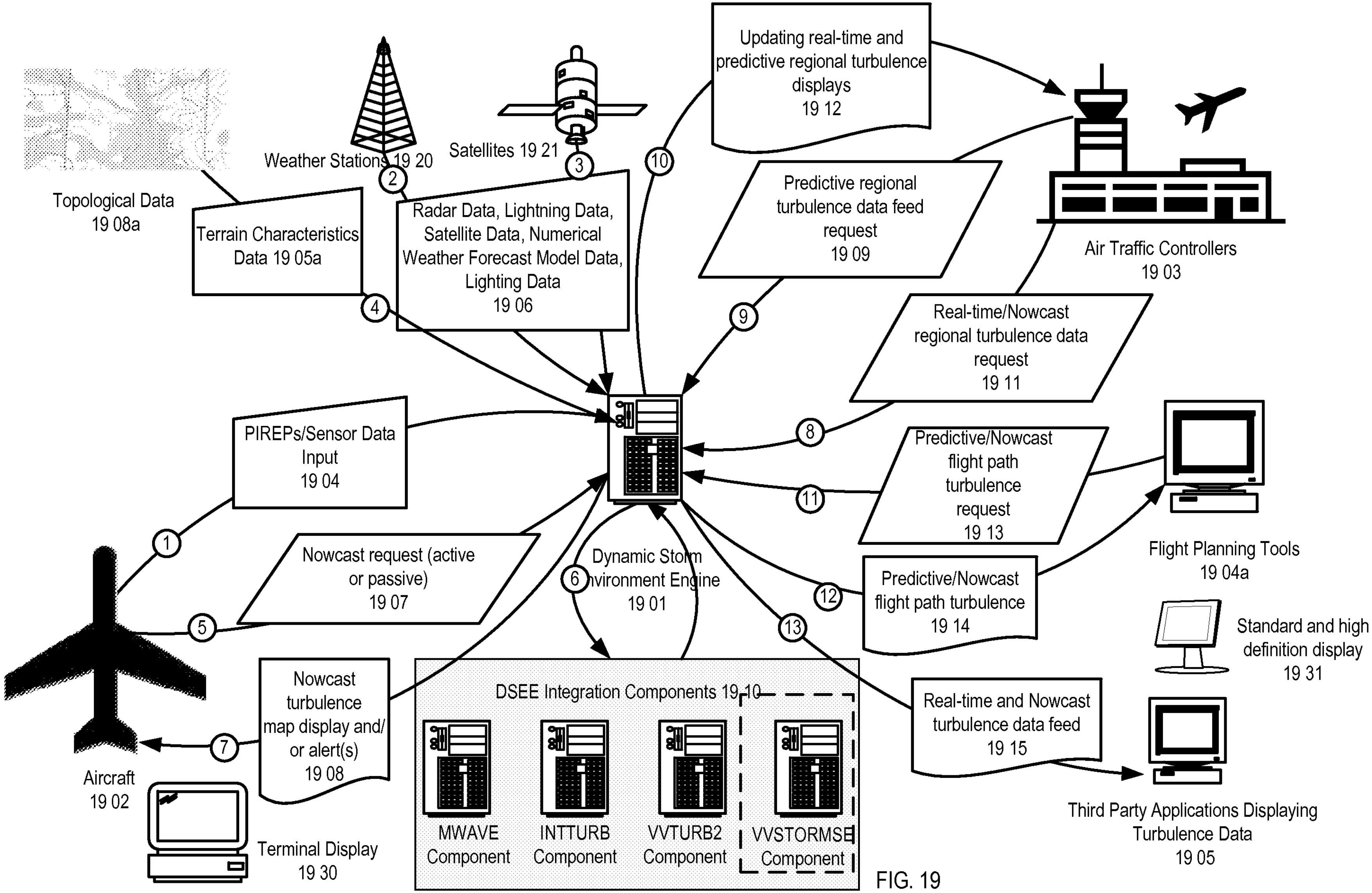
Topological Data
19 08a
Weather Stations 19 20
Satellites 19 21
Terrain Characteristics
Data 19 05a
Radar Data, Lightning Data,
Satellite Data, Numerical
Weather Forecast Model Data,
Lighting Data
19 06
Updating real-time and
predictive regional turbulence
displays
19 12
Predictive regional
turbulence data feed
request
19 09
Air Traffic Controllers
19 03
Real-time/Nowcast
regional turbulence data
request
19 11
PIREPs/Sensor Data
Input
19 04
Predictive/Nowcast
flight path
turbulence
request
19 13
Flight Planning Tools
19 04a
Nowcast request (active
or passive)
19 07
Dynamic Storm
Environment Engine
19 01
Predictive/Nowcast
flight path turbulence
19 14
Standard and high
definition display
19 31
Nowcast
turbulence
map display and/
or alert(s)
19 08
Aircraft
19 02
DSEE Integration Components 19 10
Real-time and Nowcast
turbulence data feed
19 15
MWAVE
Component
INTTURB
Component
VVTURB2
Component
VVSTORMSE
Component
Terminal Display
19 30
Third Party Applications Displaying
Turbulence Data
19 05
1
2
3
4
5
6
7
8
9
10
11
12
13
FIG. 19

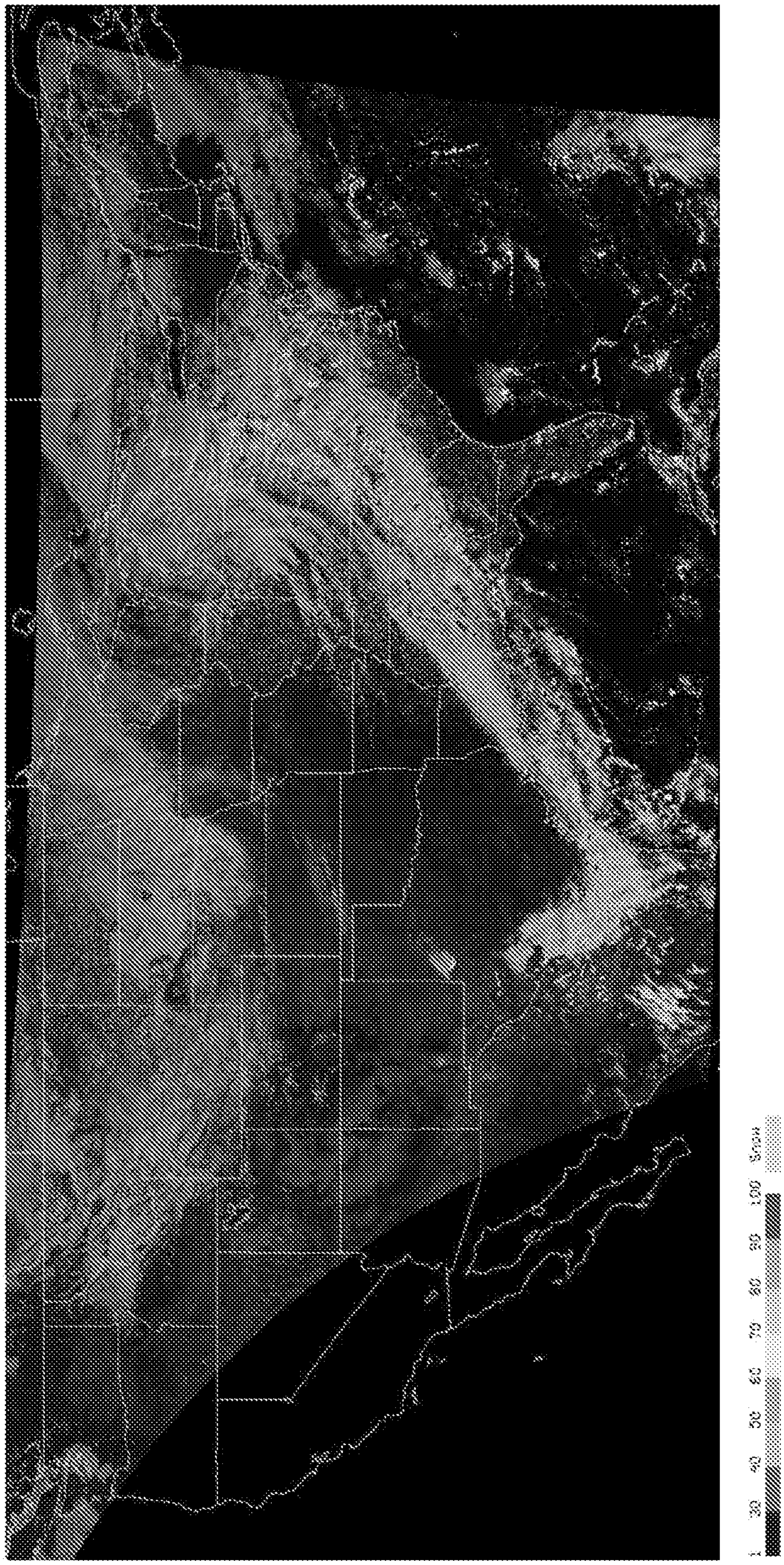


FIG. 19A

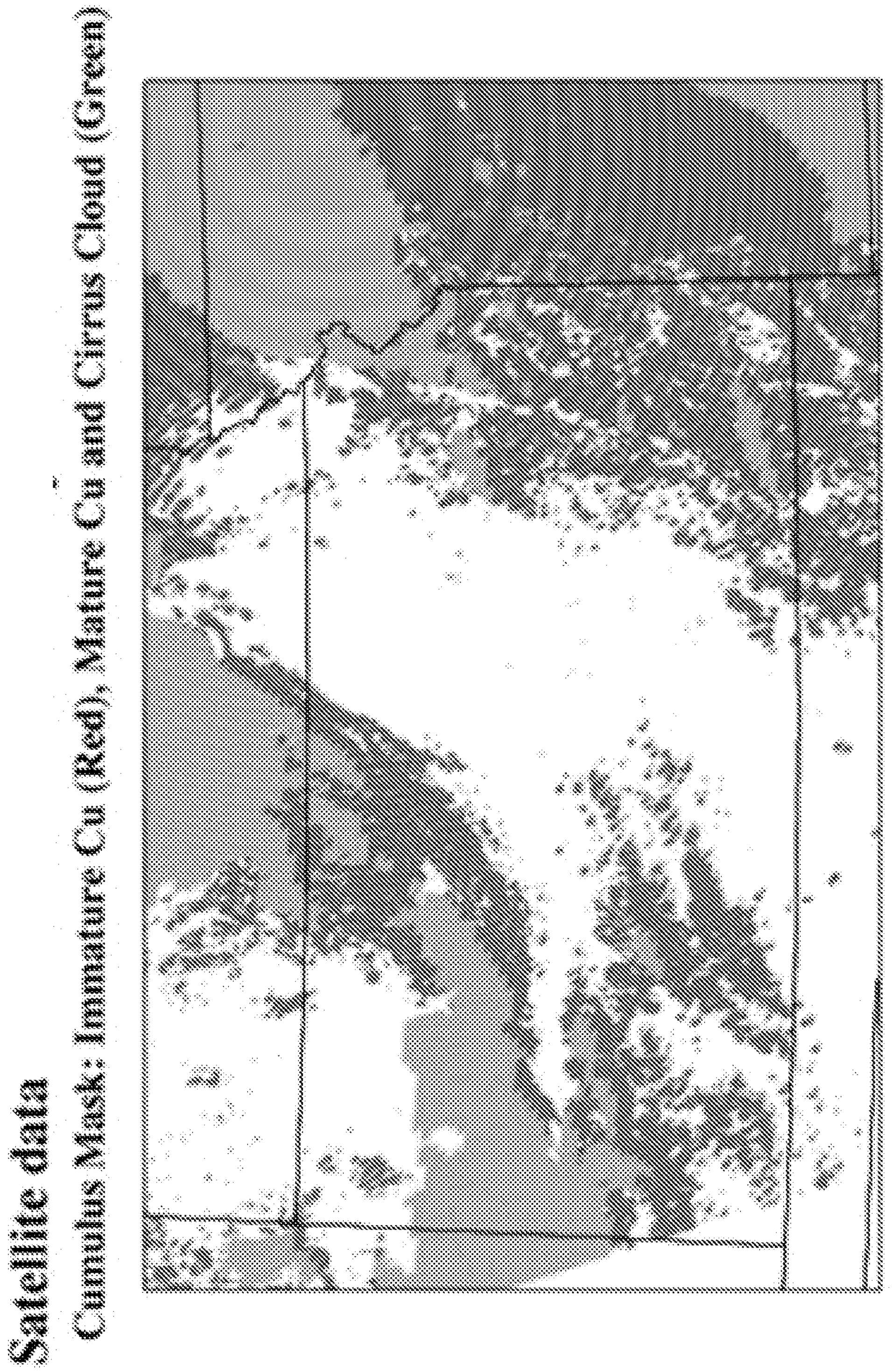
Satellite data
Cumulus Mask: Immature Cu (Red), Mature Cu and Cirrus Cloud (Green)

FIG. 19B

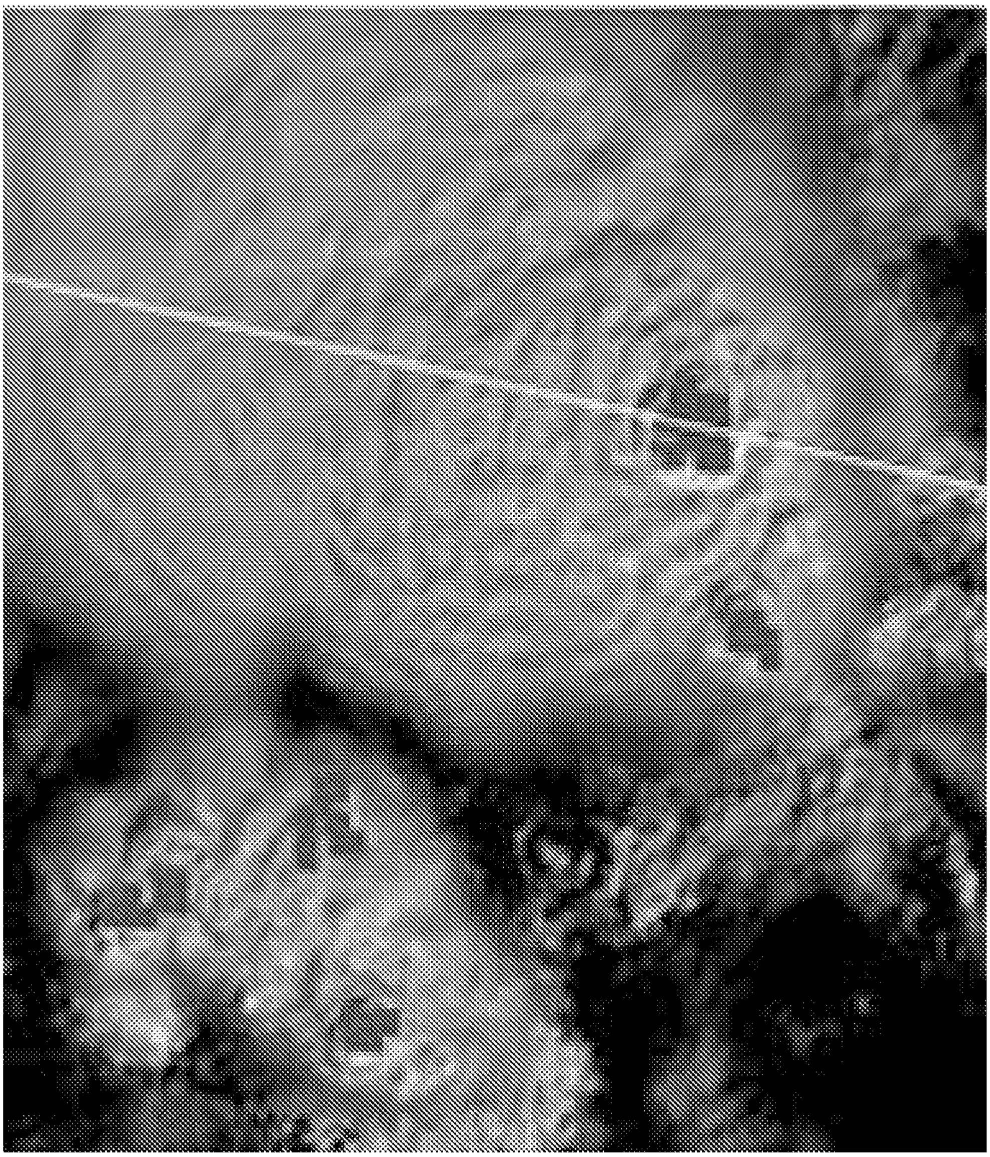

FIG. 19C

FIG. 20

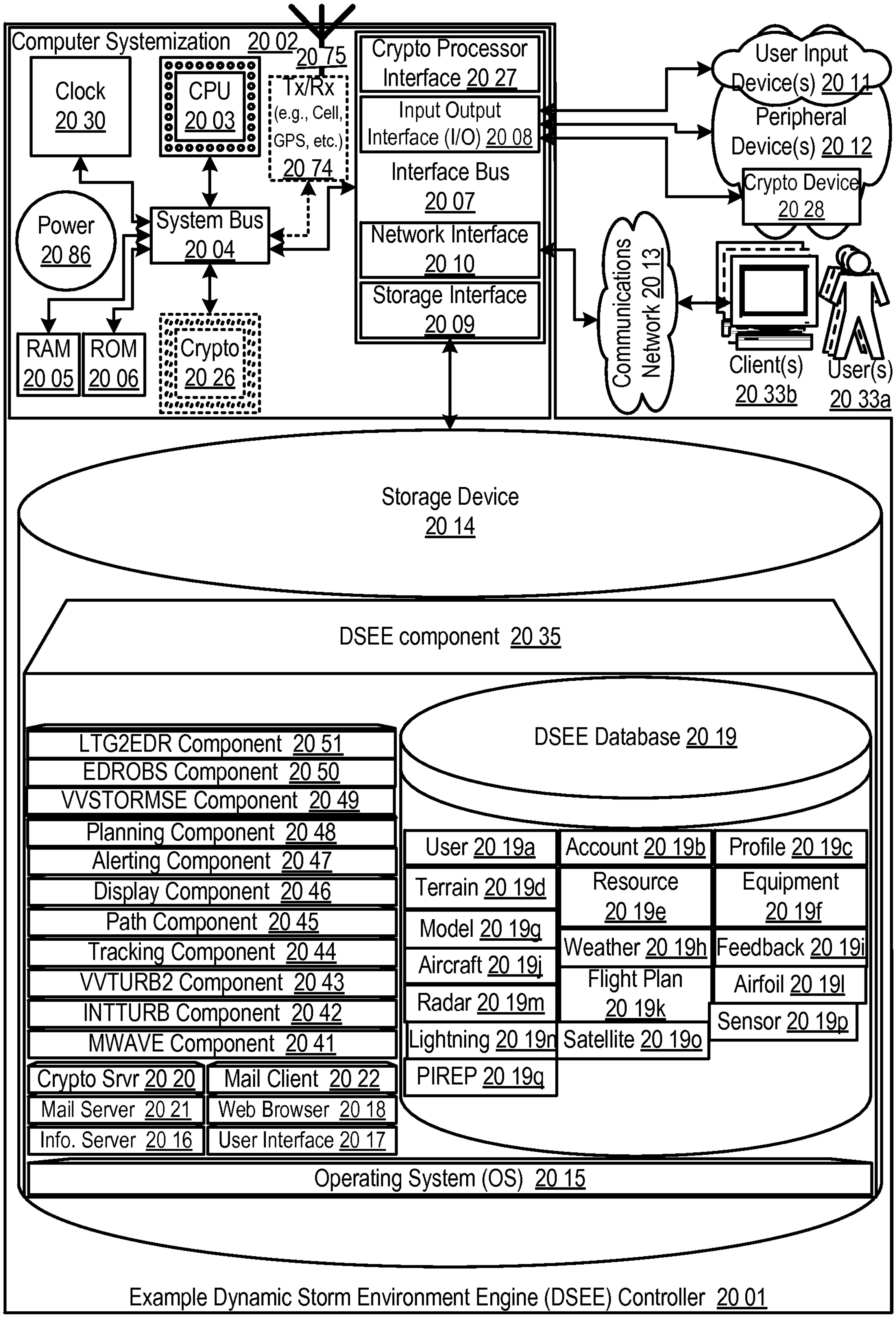
Computer Systemization 20 02
20 75
Clock 20 30
CPU 20 03
Tx/Rx (e.g., Cell, GPS, etc.) 20 74
Crypto Processor Interface 20 27
Input Output Interface (I/O) 20 08
Interface Bus 20 07
Network Interface 20 10
Storage Interface 20 09
Power 20 86
System Bus 20 04
RAM 20 05
ROM 20 06
Crypto 20 26
User Input Device(s) 20 11
Peripheral Device(s) 20 12
Crypto Device 20 28
Communications Network 20 13
Client(s) 20 33b
User(s) 20 33a
Storage Device 20 14
DSEE component 20 35
LTG2EDR Component 20 51
EDROBS Component 20 50
VVSTORMSE Component 20 49
Planning Component 20 48
Alerting Component 20 47
Display Component 20 46
Path Component 20 45
Tracking Component 20 44
VVTURB2 Component 20 43
INTTURB Component 20 42
MWAVE Component 20 41
Crypto Srvr 20 20
Mail Client 20 22
Mail Server 20 21
Web Browser 20 18
Info. Server 20 16
User Interface 20 17
DSEE Database 20 19
User 20 19a
Account 20 19b
Profile 20 19c
Terrain 20 19d
Resource 20 19e
Equipment 20 19f
Model 20 19g
Weather 20 19h
Feedback 20 19i
Aircraft 20 19j
Flight Plan 20 19k
Airfoil 20 19l
Radar 20 19m
Sensor 20 19p
Lightning 20 19n
Satellite 20 19o
PIREP 20 19q
Operating System (OS) 20 15
Example Dynamic Storm Environment Engine (DSEE) Controller 20 01

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61919796 B
- US 2013226452 A
- US 2013078540 W
- US 2013078546 W
- US 2013078541 W